Europäisches Patentamt

European Patent Office

Office européen des brevets

(19)

(11)  EP 0 449 407 B1

(12)  **EUROPEAN PATENT SPECIFICATION**

(45) Date of publication and mention
of the grant of the patent:
**09.04.1997  Bulletin 1997/15**

(51) Int Cl.6: **H04N 1/46**

(21) Application number: **91300905.6**

(22) Date of filing: **04.02.1991**

(54) **Apparatuses and methods for processing of data such as colour images**

Geräte und Verfahren zur Verarbeitung von Daten, wie zum Beispiel Farbbildern

Appareils et méthodes pour le traitement de données, telles que les images en couleurs

(84) Designated Contracting States:
**AT BE CH DE DK ES FR GB GR IT LI LU NL SE**

(30) Priority: **05.02.1990 IL 93274**
**22.02.1990 IL 93493**
**27.12.1990 IL 96816**
**30.12.1990 IL 96829**
**15.01.1991 IL 96957**
**15.01.1991 IL 96955**

(43) Date of publication of application:
**02.10.1991  Bulletin 1991/40**

(73) Proprietor: **SCITEX CORPORATION LTD.**
**Herzliya 46103 (IL)**

(72) Inventors:
• **Spiegel, Ehud**
**Rehovot (IL)**

• **Broudo, Moshe**
**Holon (IL)**
• **Lavie, Reuven**
**Herzlia (IL)**
• **Bresler, Yoav**
**Tel Aviv (IL)**
• **Pluda, Yavoc**
**Alfei-Menashe (IL)**

(74) Representative: **Hillier, Peter**
**Reginald W. Barker & Co.,**
**Chancery House,**
**53-64, Chancery Lane**
**London, WC2A 1QU (GB)**

(56) References cited:
**EP-A- 0 070 677          WO-A-88/04503**
**US-A- 4 819 193**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to apparatus and techniques for data processing generally and more particularly to apparatus and techniques for color image processing.

Tone and color reproduction control in high quality graphic arts reproduction is still far from a science. This is particularly evident when a given acceptable result, already realized using given reproduction apparatus, is sought to be realized using other apparatus or using the same apparatus but with a different type of setting, such as a GCR setting relative to a normal "key black" setting. In such cases, a high degree of expertise, combined with time, effort, expense and patience is required to calibrate the additional apparatus. The results are not always satisfactory.

Tone and color reproduction control is particularly difficult when various portions of the color image to be reproduced are stored in different formats. For example, the color image to be reproduced may comprise first types of regions in which the color and tone vary from pixel to pixel, second types of regions in which the color and tone generally vary only between subregions and not between individual pixels, and third types of regions in which text is to be represented. The text regions may or may not overlap regions of the first and second types. The preferred format for each type of region varies.

A preferred format for regions of the first type in which the color and tone vary continuously is pixel by pixel representation, such as "CT" (continuous tone) format, in which the color and tone parameters of each individual pixel are stored, in a predetermined order. The color and tone parameters are generally represented by a vector such as a three or four component vector defined in a color coordinate system such as the CMYK, RGB and XYZ coordinate systems. It is appreciated that the vector need not have three or four components but rather may have any other suitable number of components. At least three orderings of the color and tone parameters are used:

a. "Pixel interleaves": All of the components of the first pixel of the color image are stored, followed by all of the components of the second pixel, and so on;

b. "Line interleaves": The first components of each of the pixels along the first row of the color image are stored sequentially, followed by the second components of each of the pixels in the first row, followed similarly by the third and then, for a four dimensional pixel, the fourth components of each pixel in the first row. This sequence of values is followed by the corresponding sequence of values representing the four components of each pixel in the second row, and so on; and

c. "Separation interleaves": The first components of each of the pixels making up the entire color image, rather than single rows thereof, are stored sequentially, followed by the second components of each of the pixels making up the entire color image, followed similarly by the remaining components.

One preferred format for regions of the second type in which the color and tone vary only between subregions is "LW" (line work) format, also known as "run length encoding" or "line art". In this format, sequences of identical pixels along a particular row of the color image are not stored one by one but rather as a single data element, the data element comprising a first field ("color index") indicating the tone and color characteristics of each of the identical pixels and a second field ("run length") indicating the number of identical pixels in the sequence. It is appreciated that if a row of p pixels comprises s sequences of identical pixels, the sum of the values of the s second fields is p.

Preferably, one field of each data element stores a code indication of the tone and color characteristics of the corresponding sequence of identical pixels, and the key to the code is stored separately, e.g. in a LUT. This allows compactness of storage, assuming that many of the sequences are identically colored.

LW storage format of an image may also comprise a "transparency field" for each data element which stores delineations of regions of the image which are intended to bear sub-images stored in non-LW (e.g. CT or text) formats, the representations of which are to be "read into" the delineated regions. These delineated regions are designated as "transparent", i.e., may be defined only by the "read-in" sub-image, or may alternatively be non-transparent, in which case, in the final color image, the "read-in" sub-image will appear superimposed upon the pixels of the region as defined by the LW representation. The percentage of transparency may, therefore be 0%, corresponding to absolute opaqueness of the run length encoded representation, in which case any pixel-by-pixel representation of the corresponding area is meaningless "garbage", or may be 100%. More generally, the transparency percentage may also assume any intermediate value between 0% and 100%.

Alternatively, the transparency field may not be provided and instead, the color index or first field provides an indication of transparency. In other words, the color index may indicate either a particular color of the LW pixel or the transparency of the LW pixel.

It is appreciated that, if the LW storage format does comprise delineations of regions of the image which are intended to bear non-LW sub-images, such as CT sub-images, then it is not necessary to provide a CT representation of the entirety of the image. The areas of the image for which no CT representation is defined are referred to as having "undefined" CT values. Typically, a CT representation is defined for an area which circumscribes the plurality of areas which are at least partially transparent. Therefore, the area for which a CT representation is defined may be partitioned into the plurality of at least partially transparent areas, which areas comprise valid CT pixels, and into the remaining areas, which are defined in the LW file to be non-transparent and therefore comprise "garbage" CT pixels.

Text may be stored in "character graphics" type format, in which each letter, number etc. is assigned a code, or alternatively may be stored in pixel by pixel or run length encoded form. Other storage formats for color images include Postscript and vector formats.

The difficulty in achieving adequate tone and color reproduction control when various portions of the color image to be reproduced are stored in different formats has at least the following components:

a. The need to define a single storage format and to convert all portions of the stored color image to that format efficiently and with minimum distortion of the image. Typically, the single storage format is a pixel by pixel format;

b. The issue of how to optimally define tone and color parameters for the boundary regions between adjacent portions of the color image originally stored in different formats, and for the regions at the edges of the color image. Specifically, even a single pixel at the output resolution may represent a portion of the color image which was previously represented by a plurality of pixels in LW format and a plurality of pixels in CT format.

c. The problem of how to deal with the uneven speed at which a stream of run length encoded data typically arrives, due to the fact that the run lengths of sequential runs often vary considerably.

d. The question of how to integrate different portions of the color image with different resolutions. The different resolutions are not always an integer multiple of one another.

Other problems which arise in relation to color image processing in general and reproduction in particular are:

e. Most color printing devices cannot "wait" for input but rather must be continuously fed with input. State of the art technology generally requires a large buffer to store a large reserve of input for the color printing device, but this solution is relatively inefficient.

f. Representations of a color image tend to differ as a function of the color printing device employed, including the inks or colorants employed thereby, the color reading device employed and the substrate employed to bear the color image (paper, CRT, etc.)

g. A number of color coordinate systems are in standard use for representing color values (RGB, CMYK, XYZ, etc.)

State of the art color image processing apparatus and techniques are described in the following documents,

"Digital Image Processing" by R.C. Gonzalez & P. Wintz, Addison-Wesley, 1987.

"The Reproduction of Color in Photography, Printing and Television" by R.W.G. Hunt, Fountain Press, England, 1987

"The Automated Reproduction of Pictures with Non-reproducible Colors" by Jason J. Sara, PhD. thesis at Massachusetts Institute of Technology, MA, USA, August 1984, describes uses of multidimensional LUTs for color conversion and discusses interpolation methods.

"Image Reconstruction by Parametric Cubic Conversion" by Stephen K. Part and Robert A. Schowendert, Computer Vision, Graphics & Image Processing 23, 1983 pgs. 258 - 272 describes one dimensional convolution and its uses for image reconstruction.

"Algorithms for Fast Color Correction" by Alan W. Paeth, Proceedings of the SID, Vol. 30/3, 1989, describes the use of multidimensional LUTs for color manipulation (RGB to CMY only) and tri-linear interpolation.

"Video to Print - an Empirical Approach" by Michael G. Lamming & Warren Rhodes, Proceedings of the SID, Vol. 30/3, 1989, describes the use of 1D-LUTs and matrixes for color correction for RGB to CMY only.

"Color Gamut & the Printing of Digital Images" by Maureen C. Stone et al, ACM Transactions of Graphics, Vol. 7 No. 34, October 1988, pg. 249-292, describes an attempt to reproduce digital images designed on a variety of different color monitors in a journal, using digital offset printing. The reproduction system described is calibrated using CIE tristimulus values. An image is represented as a set of three-dimensional points and a color output device is represented as a three-dimensional solid surrounding the set of all reproducible colors for that device. Since the sets of reproducible colors for monitors and printers are very different, a method for transforming image points to fit into the set of reproducible colors of the destination output device is described.

U.S. Patent US-A-4,282,510 to Southgate describes apparatus for discerning the noticeable presence of spatial fluctuations of intensity within a 2D visual field, comprising spatial convolvers and shift registers.

U.S. Patent US-A-4,334,240 to Franklin et al describes a primary color pyramid print interpolator which includes correction circuitry for the 3 primary colors and for black, for feeding into a computer and a memory.

US-A-4,347,580 to Bond describes a spatial to array convolver or correlator.

US-A-4,472,786 to Larson describes a spatial analog Gaussian convolver.

US-A-4,477,833 to Clark et al describes a color conversion method including an interpolation step and interpolation and 3D-4D simplex color linear interpolation.

US-A-4,481,5312 to Clark et al describes a method for determining and storing color printing information, and for generating 3 gray mapper curves using correction percentages for six colors including black.

US-A-4,500,919 to Schreiber describes a color reproduction system which passes RGB values through a multidimensional LUT and interpolates to obtain a CMYK value.

US-A-4,511,989 to Sakamoto describes 4D simplex color linear interpolation using a 16 bit addressed LUT.

US-A-4,639,770 to Jung et al describes a method and apparatus for simulating a multi-colored reproduction on an color monitor.

US-A-4,712,141 to Tomohisa et al describes a method and apparatus for interpolating image signals.

US-A-4,717,954 to Fujita et al describes a method which uses a conversion table based on pre-printed color charts for to determine half-tone dot percentages required to reproduce the color of a color specimen.

US-A-4,752,822 to Kawamura describes color half-tone image processing apparatus for providing screen angles and having an adaptive color image data conversion LUT and a small capacity masking memory. The system processes both color and 'screen' using a 3D-LUT which is constructed in conjunction with a scanner.

US-A-4,819,193 to Imao describes a gradation processing method for color images.

US-A- 4,825,386 to Bogacki describes a horizontal line processor of data which is processed sequentially.

US-A-4,833,531 to Abe et al describes a technique for interpolating a color image for color image enlargement or reduction based on LUTs stored in memory.

US-A-4,837,722 to Sara describes a digital, high speed 3D interpolation method, and hardware for tri-linear interpolation.

In a first aspect the invention provides apparatus for processing an image characterized by first and second pluralities of colour characteristics comprising a format processing unit for receiving said first and second pluralities of colour characteristics expressed in corresponding first and second formats and producing therefrom a third plurality of colour characteristics expressed in a third format, said format processing unit comprising means for converting the format of said first plurality of colour characteristics expressed in said first format into said third format by performing a resolution conversion; means for converting the format of said first pluralities of colour characteristics to produce first and second pluralities in formats having identical resolution; means for merging said first and second pluralities of colour characteristics having said identical resolution thereby producing a fourth plurality of colour characteristics; means for converting the formats of said fourth plurality of colour characteristics into said third format; and means for merging said first and fourth pluralities of colour characteristics in said third format, thereby providing said third plurality of colour characteristics in said third format.

The invention also provides a method for processing an image characterized by first and second pluralities of colour characteristics, the method comprising the steps of receiving said first and second pluralities of colour characteristics expressed in corresponding first and second formats; and producing therefrom a third plurality of colour characteristics expressed in a third format, said step of producing comprising the steps of: converting the format of said first plurality of colour characteristics expressed in sand first format into said third format by performing a resolution conversion; converting the format of said first plurality of colour characteristics to produce first and second pluralities in formats having identical resolution; merging said first and second pluralities of colour characteristics having identical resolution, thereby producing a fourth plurality of colour characteristics; converting the formats of said fourth plurality of colour characteristics into said third format including at least a resolution conversion: and merging said first and fourth pluralities of colour characteristics in said third format, thereby providing said third plurality of colour characteristics in said third format.

In a second aspect the invention provides apparatus for processing an image characterized by first and second pluralities of colour characteristics comprising a format processing unit for receiving said first and second pluralities of colour characteristics expressed in corresponding first and second formats and producing therefrom a third plurality of colour characteristics expressed in a third format, said format processing unit comprising means for converting the format of said first plurality of colour characteristics expressed in said first format into said third format employing a first resolution conversion, thereby obtaining a fourth plurality of colour characteristics in said third format; means for converting the format of said first plurality of colour characteristics expressed in said first format into said third format employing a second resolution conversion, thereby obtaining a fifth plurality of colour characteristics in said third format; means for converting the format of said second plurality of colour characteristics expressed in said second format into said third format, thereby obtaining a sixth plurality of colour characteristics in said third format; means for selecting one from said fourth plurality of colour characteristics and said fifth plurality of colour characteristics, thereby obtaining a seventh plurality of colour characteristics; means for merging said sixth and seventh pluralities of colour characteristics in said third format, thereby producing said third plurality of colour characteristics in said third format.

The invention also provides a method for processing an image characterized by first and second pluralities of

EP 0 449 407 B1

colour characteristics, the method comprising the steps of receiving said first and second pluralities of colour characteristics expressed in at least corresponding first and second formats; and producing therefrom a third plurality of colour characteristics expressed in a third format, said step of producing comprising the steps of converting the format of said first plurality of colour characteristics expressed in said first format into said third format employing a first resolution conversion, thereby obtaining a fourth plurality of colour characteristics in said third format; converting the format of said first plurality of colour characteristics expressed in said first format into said third format employing a second resolution conversion, thereby obtaining a fifth plurality of colour characteristics in said third format; converting the format of said second plurality of colour characteristics expressed in said second format into said third format, thereby obtaining a sixth plurality of colour characteristics in said third format; selecting one from said fourth plurality of colour characteristics and said fifth plurality of colour characteristics, thereby obtaining a seventh plurality of colour characteristics; and merging said sixth and seventh pluralities of colour characteristics in said third format, thereby producing said third plurality of colour characteristics in said third format.

The present invention will be understood and appreciated from the following detailed description, taken in conjunction with the drawings in which:

Fig. 1 is a generalized block diagram of image processing apparatus constructed and operative in accordance with a first embodiment of the present invention;

Fig. 2 is a generalized block diagram of a preferred hardware implementation of image processing apparatus constructed and operative in accordance with a second embodiment of the present invention;

Fig. 3 is a generalized block diagram of a preferred hardware implementation of image processing apparatus constructed and operative in accordance with a third embodiment of the present invention and including a screen processor;

Fig. 4 is a generalized block diagram of a preferred hardware implementation of image processing apparatus constructed and operative in accordance with a fourth embodiment of the present invention and including an I/O workstation comprising a screen processor;

Fig. 5 is a block diagram of spatial processing unit 14 of Fig. 1 constructed and operative in accordance with a first embodiment of the present invention;

Fig. 6 is a block diagram of merger 36 of Fig. 5;

Fig. 7 is a block diagram of spatial processing unit 14 of Fig. 1 constructed and operative in accordance with a second embodiment of the present invention;

Fig. 8 is a block diagram of spatial processing unit 14 of Fig. 1 constructed and operative in accordance with a third embodiment of the present invention and being particularly suited to hardware implementation;

Fig. 9 is a block diagram of spatial processing unit 14 of Fig. 1 constructed and operative in accordance with a fourth embodiment of the present invention;

Fig. 10 is a block diagram of convolution scaler 96 of Fig. 8 ;

Fig. 11 is a block diagram of three dimensional convolution apparatus and illustrates how the structure of Fig. 10 may be extended analogously to process a color image of n-dimensions;

Fig. 12 is a block diagram of a second preferred hardware implementation of convolution scaler 96 of Fig. 8;

Fig. 13 illustrates in table form a sample flow of data through the components of convolution scaler 96 of Fig. 12;

Fig. 14 illustrates adder tree 220 of Fig. 12 ;

Fig. 15 is a block diagram of selector 202 of Fig. 12 ;

Fig. 16 is a block diagram of SIPO 190 of Fig. 12 ;

Fig. 17 is a block diagram of an individual one of SIPO unit 240 of Fig. 16 ;

Fig. 18 is a block diagram of an averaging apparatus which is a preferred hardware implementatlon of validity decoder 88 and the averaging scaler 98 of Fig. 8;

Fig. 19 conceptually illustrates aspects of operation of multiplexer 194 of Figs. 12 and 18 in conjunction with the VRAMS rows buffer 86 of Fig. 8;

Fig. 20 is a block diagram of multiplexer array 194 of Fig. 12 ;

Fig. 21 is a block diagram of a pipeline cascaded embodiment of scaler 96 of Fig. 8;

Fig. 22 is a block diagram of row buffer 86 of Fig. 8 constructed and operative in accordance with a first embodiment of the present invention;

Fig. 23 is a block diagram of row buffer 86 of Fig. 8 constructed and operative in accordance with a second embodiment of the present invention;

Fig. 24 is a block diagram of row buffer 86 of Fig. 8 constructed and operative in accordance with a third embodiment of the present invention;

Fig. 25 is a generalized block diagram of selector 90 of Fig. 8;

Fig. 26 is a flow chart describing a preferred method for control of column convolution useful in implementing ALU 195 of Fig. 12;

5

**EP 0 449 407 B1**

Fig. 27 is a block diagram of a three dimensional convolution scaler which is an extension of the two dimensional convolution scaler of Fig. 12;

Fig. 28 is a flow chart illustrating a preferred algorithm useful in implementing central ALU 195 for the embodiment of Fig. 27;

Fig. 29 illustrates in conceptual form color image processing apparatus of color unit 12 of Fig. 1;

Figs. 30 - 32 illustrate a first method for constructing a 1 dimensional LUT useful for calibration of an output device relative to a reference device;

Figs. 33 - 34 illustrate a second method for constructing a 1 dimensional LUT useful for linearization of an output device;

Fig. 35 is a block diagram of color image processing apparatus for color processing of a digital representation of an image;

Fig. 36 is a block diagram illustrating a hardware implementation of apparatus of Fig. 35;

Fig. 37 is a block diagram of address switch 504 of Fig. 36;

Fig. 38 is a block diagram of address ALU 506 of Fig. 36 ;

Fig. 39 is a block diagram of coefficient generator 524 of Fig. 36;

Fig. 40 is a block diagram of the multiplier array 528 of Fig. 36;

Fig. 41 is a generalized block diagram of a hardware implementation of image processing apparatus constructed and operative in accordance with a fifth embodiment of the present invention;

Fig. 42 is an intermediate detail block diagram of the embodiment of Fig. 41;

Fig. 43 is a detailed block diagram of a preferred implementation of merge unit 1030 of Fig. 42;

Fig. 44 is a generalized block diagram of a preferred hardware implementation of color module 1014 of Fig. 41;

Figs. 45 - 52 are conceptual illustrations of examples in which LW pixels, CT pixels and output pixels are shown superimposed onto one another.

Fig. 53 is a conceptual illustration of a two dimensional input data image and a convolution window operating thereupon and traveling along the X axis;

Fig. 54 is a conceptual illustration of a two dimensional input data image and a convolution window operating thereupon and traveling along the Y axis;

Fig. 55 is a block diagram of apparatus useful in implementing the method of Fig. 54;

Fig. 56 is an algorithm useful in implementing the method of Fig. 54;

Fig. 57 is a conceptual illustration of a convolution window or cube and the three possible directions of advancement therefore;

Fig. 58 is a flowchart suitable for implementing an XYZ travel pattern and for reusing 2 dimensional partial results;

Fig. 59 is a flowchart suitable for implementing a ZXY travel pattern and for reusing 2 dimensional partial results as well as 1 dimensional partial results; and

Fig. 60 is a block diagram of apparatus for operating a separable and symmetric function on a body of data.

## DETAILED DESCRIPTION OF PREFERRED EMBODIMENTS

The following terms, employed herein, are intended to have the meanings specified hereinbelow:

Color image: This term is intended to include images comprising gradations of a single color such as black and white images and gray images.

Color characteristics: The characteristics of the color image defined by individual elements of a representation of a color image which directly represent a color or a component of a color.

Spatial characteristics: Characteristics defining the arrangement of and the relationship between elements of a representation of a color image which do not directly represent a color or a component of a color, including but not limited to resolution and format characteristics such as pixel by pixel vs. region by region encoding, transparency characteristics, and the presence of additional bits of information such as the validity bit as described herein.

Resolution: The number of pixel lengths used to represent a unit of length of a color image. The resolution may or may not be the same along the X and Y axes of the color image.

Depth of color: The number of distinct values which each component of the vector representing the color of a pixel can assume. Typically, it is desired to ensure that each component can assume any of 256 distinct values, in which case each vector component is represented by 8 bits.

Screen processor: Apparatus which converts a substantially continuously defined pixel value, e.g. of 8 bit per separation depth, to a binary representation thereof. The binary representation typically comprises a single tone image, at least one of the characteristics of the image (size, shape, location on background, etc.) representing the continuous value.

Analog representation of a color image: A representation of a color image which is analogous or similar to the color image. An analog representation may appear upon a transparency, a photograph, a CRT display, a printed page, or any other suitable substrate.

Digital representation of a color image: Any representation of a color image which is expressed in discrete symbols, such as numerical symbols. A common digital representation of a color image is a digital file comprising a plurality of numerical values corresponding to a plurality of pixels into which the color image has been divided, each such numerical value representing some aspect pertaining to the color appearance of the corresponding pixel.

Color reading apparatus/device: Apparatus which inputs an analog representation of a color image and converts it to a digital representation thereof. e.g. scanners, colorimeters, spectrum analyzers, densitometers. Typically, the digital representation is expressed in a coordinate system such as CMYK, CMY, RGB, XYZ, etc.

Color printing/output apparatus/device: Apparatus which inputs a digital representation of a color image and converts it into an analog representation thereof. For example: offset, gravure, or other printing apparatus employing inks, conventional or direct digital proofing machines, plotters or color recorders which expose photographic materials, electrostatic printing systems employing powder colorants, color monitors, and color CRT displays.

Subsampling: A method of assigning a pixel value to a portion of a color image previously represented by a plurality of pixel values, by selecting a location within the portion of the color image and assigning the pixel value of that particular location to the entire portion. It is also known in the art to select a plurality of locations, which must be stored in identical format, and assign the mean pixel value of these locations to the entire portion.

Averaging: A procedure for changing the resolution of an input representation of a color image. If the resolution is to be decreased, each relatively large output pixel is assigned a value computed by averaging the pixel values of at least some and preferably all of the relatively small input pixels representing the portion of the image corresponding to the output pixel. If the resolution is to be increased, each relatively small output pixel is assigned the value of the relatively large input pixel within which it falls. If the output pixel falls on the boundary between adjacent input pixels, it is assigned the mean pixel value of the adjacent input pixels.

Spatial Processing: Detecting and/or transforming the spatial characteristics of a representation of a color image which may pertain to at least the characteristics of the representation of the color image and/or to the mutual relationship between adjacent portions of the color image. For example: change of format (e.g. LW to CT), change of resolution, filtering including edge detection and processing, blur/sharp functions, etc., and combinations of these operations.

Substrate: Physical apparatus bearing or displaying an analog representation of an image, e.g. transparency, Cromalin (registered trademark), CRT display, photograph, paper product, surfaces suitable for painting on, etc.

Range or output gamut of color processing apparatus: The totality of color values which can be output by the color processing apparatus.

Domain or input gamut of color processing apparatus: The totality of color values which can be input by the color processing apparatus.

Color processing apparatus: Apparatus which inputs a first representation of a color image (digital or analog) and converts it into a second representation thereof (analog or digital), thereby to define a transformation from at least a portion of the domain into the range.

Calibration: Adjusting color processing apparatus in order to obtain representations, having predetermined substantially objective color characteristics, of color images sought to be processed.

Color value: A representation of a color, typically in a color coordinate system such as but not limited to RGB, L*a*b*, XYZ coordinate systems and device dependent coordinate systems such as color head signals e.g. RGB, ink percentages e.g. CMYK, etc.

Colorant, ink, etc.: Any material which causes the human eye's light energy receptors to be stimulated including liquid colorants, powder colorants, photographic colorants, phosphors, etc.

Colorant values: A digital representation of the amount of a colorant which it is sought to use.

It is appreciated that any references to color, color images, color values, colorant values, etc. in the present specification are intended to include the instances of black and white as colors or color values, black and white images, black colorant and ink, etc.

The following abbreviations are used:

TCR: tone and color reproduction
GCR: gray component replacement
UCR: Undercolor removal
UCA: Undercolor addition
RGB: red, green, blue. More generally, the term as used herein may refer to any color signals produced by a color reading device. In a color separation scanner, the term normally refers to the color separation signals of the scanner prior to processing thereof.
CMYK: cyan, magenta, yellow, black (colorants such as inks). More generally, the term as used herein refers to any signals which may serve as input for a color printing device.
ECSS: electronic color separation scanner
DECSS: digital electronic color separation scanner

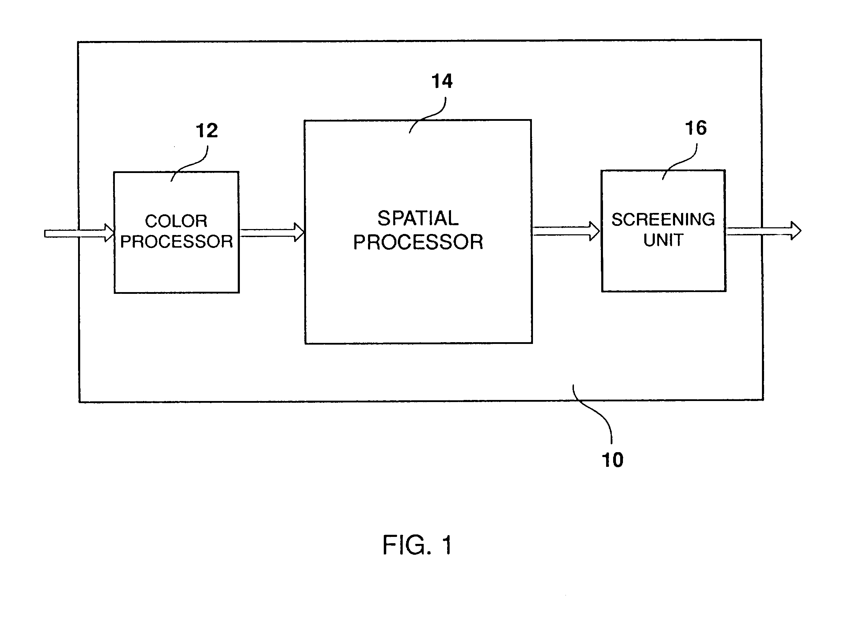

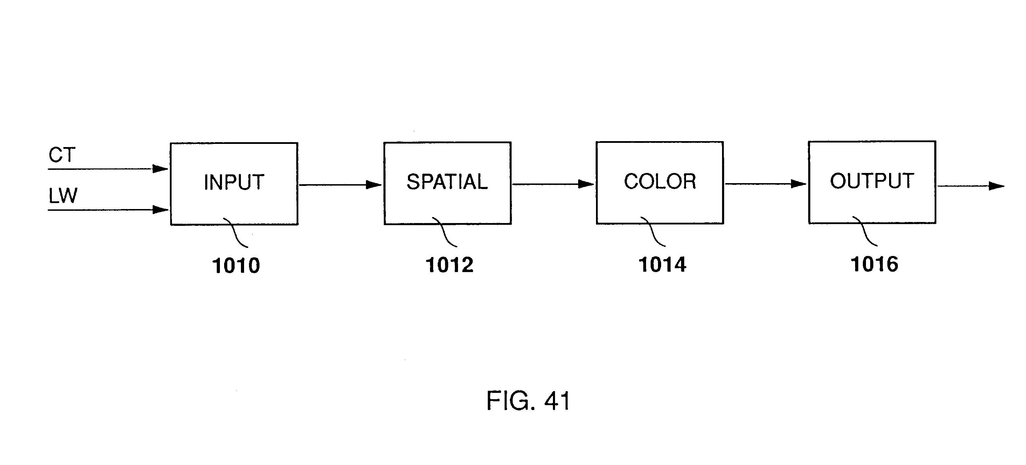

Alternative embodiments of the invention are now generally described with reference to Figs. 1 to 40. A preferred embodiment of the invention will be described in detail below with reference to Figs. 41 - 44.

Reference is now made to Fig. 1, which conceptually illustrates image processing apparatus 10 constructed and operative in accordance with an embodiment of the present invention.

The image processing apparatus 10 of the present invention comprises a spatial processing unit 14 for processing spatial characteristics of the color image ; and preferably a color processing unit 12 for processing color characteristics of an input color image; and may include, in same embodiments, a halftoning "screen" unit 16.

The screen unit is not required if the image processing apparatus of the present invention is connected to output apparatus with an integral screen device of its own or to a CT output device.

Preferably, the spatial processing unit 14 performs at least the following two functions. Preferably, the user may select use of both functions or use of only a single function:

a. A scaling function for varying the resolution of some or all portions of the representation of the image; and
b. A merging function for combining representations of portions of the image, which may be stored in different storage formats, into a single representation of the image. Merging or combining representations of portions of the image may comprise at least the following steps, not necessarily in this order:

"opening" the run length encoded representation of the image, thereby to obtain pixel by pixel representations; and
modifying the pixels in the vicinity of the boundary between representations of portions of the image.

The data may flow through the apparatus from left to right, in the above illustration. Alternatively, the data may flow through the spatial processing unit 14 prior to flowing through the color unit 12. Also, some or all components of the color unit 12 and the spatial processing unit 14, described in detail below, may not be provided, or alternatively may be provided but may be linked by a suitable bypass structure, thereby to enable them to be selectably bypassed, as described in detail below.

According to an embodiment of the present invention, the image processing apparatus can accept page description language such as Post-Script. The Postscript input may arrive from a Scitex MicroWhisper-based workstation having been converted by suitable means such as the "PS-Bridge", commercially available from Scitex Corporation, Herzlia, Israel, into CT/LW format.

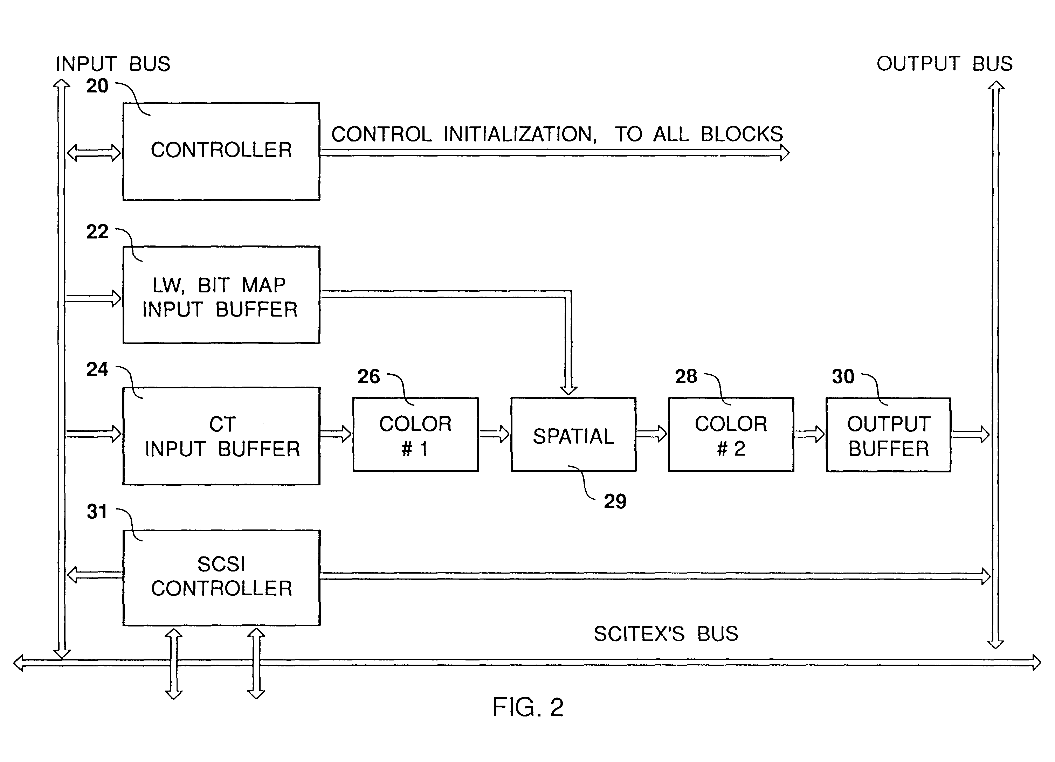

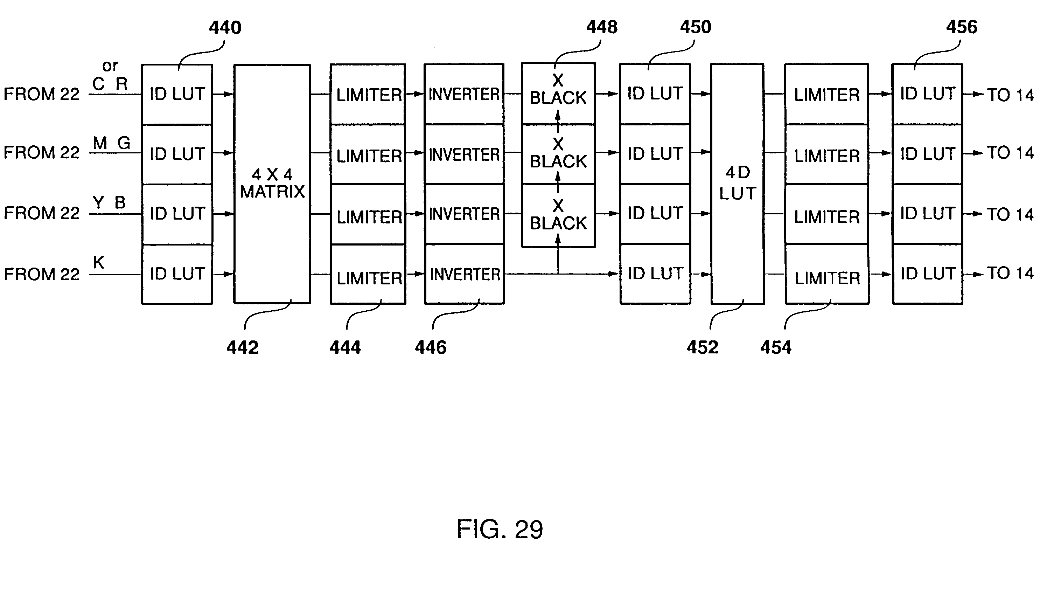

Reference is now made to Fig. 2 which illustrates a preferred hardware embodiment of image processing apparatus constructed and operative in accordance with a second embodiment of the present invention. The apparatus of Fig. 2 comprises a controller 20, a LW/bitmap input buffer 22, a CT input buffer 24 and two color manipulation units 26 and 28 which each perform part of the color processing functions described hereinabove with reference to Fig. 29. The apparatus of Fig. 2 also comprises a spatial manipulation unit 29 which may be similar to spatial unit 14 of Fig. 1, an output buffer 30 and a SCSI controller 31.

Controller 20 controls all operations, data transfers, initializations, table loading, and protocol to the outside world or to other workstations. Controller 20 is typically an Intel 80386 based controller. For faster systems, a RISC chip, such as the R3000 by MIPS Corporation, USA, may be used.

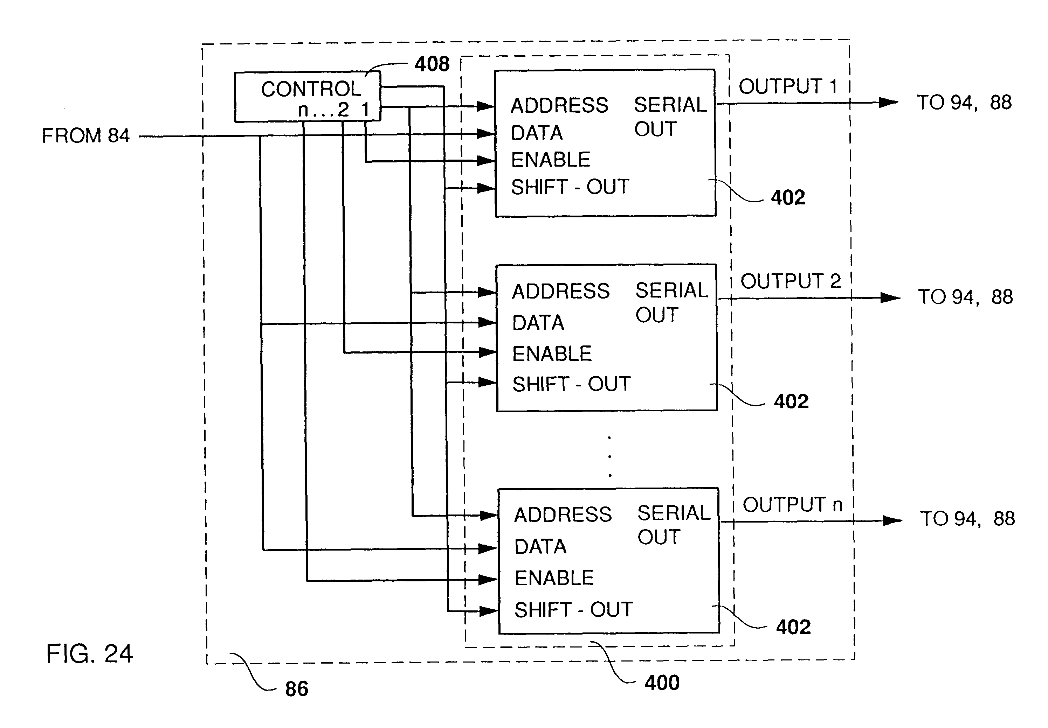

Input buffer 22 is a video RAM buffer, similar to the buffer described with reference to Fig. 24, which stores sections of the LW and/or bitmap data for future reading by spatial manipulation unit 29. The data is stored in an order which facilitates fast retrieval for spatial manipulation unit 29. Input buffer 22 is of a size that matches the data formats and data transfer speeds and is typically a 0.25M x 16 bit buffer.

CT buffer 24 is a video RAM buffer, similar to the one described with reference to Fig. 24, which stores sections of the CT data. In LW/bitmap buffer 22, the data is stored so as to facilitate rapid retrieval by color manipulation unit 26. For example, the data may be stored in a pixel interleaved format which is the internal format required for color manipulations. CT input buffer 22 is of a size that matches the data formats and data transfer speeds and is typically a 0.25M x 12 bit buffer.

Output buffer 30 is a video RAM buffer, similar to the buffer described below with reference to Fig. 24, and is used to convert pixels from the internal pixel interleaved format to the output format, which may be pixel interleaved, lines interleaved, separations interleaved or an output device specific format. Output buffer 30 may also be utilized to incorporate LW, other run length encoded data or specific output device controls and commands into the output stream. By making the serial port of the video RAM the output port, a high speed output rate or high speed output bursts can be achieved. Output buffer 30 is typically 1.0M x 12 bits.

The SCSI controller 31 is typically a general purpose SCSI controller, such as the NCR5390 manufactured by NCR, or, preferably, a NCR53C700, also by NCR, and is controlled by controller 20. SCSI controller 31 provides two data channels to the outside world via a Scitex bus and an output bus.

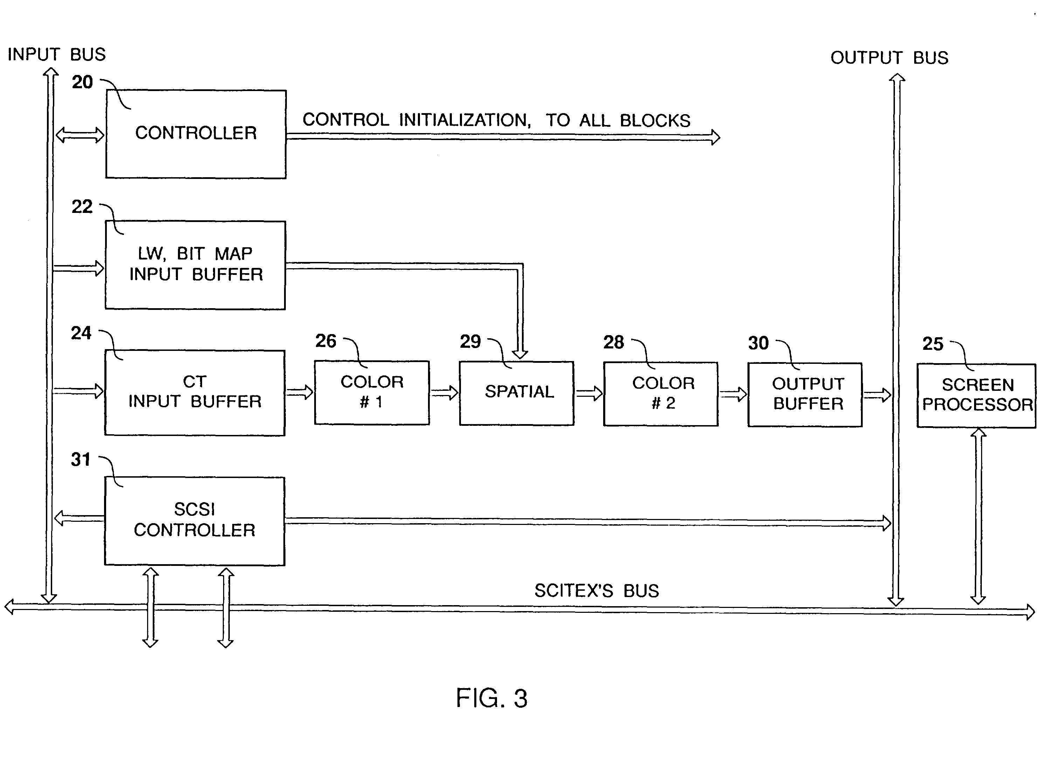

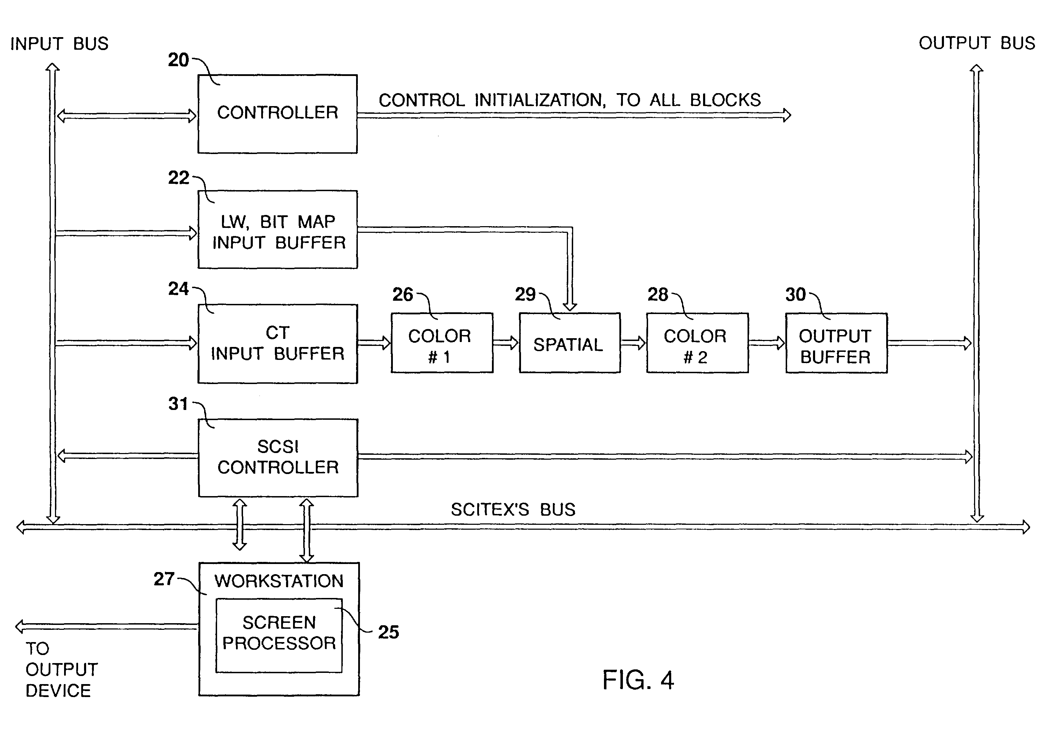

Reference is now made to Figs. 3 and 4 which are block diagrams of image processing apparatus constructed and operative in accordance with respective third and fourth embodiments of the present invention. The embodiments of Figs. 3 and 4 are similar to one another and to the embodiment of Fig. 2. Therefore, the reference numbers of Fig. 2 are used in Figs. 3 and 4 where appropriate. However, a screen processor 25 is added for outputting a screen image to an output device. In Fig. 3, the screen processor 25 comprises the Data 1 and Data 2 boards, manufactured by Scitex Corporation Ltd., Herzlia, Israel. Alternatively, as shown in Fig. 4, the screen processor 25 may be the screen processing unit provided integrally with the I/O Workstation, commercially available from Scitex Corporation Ltd., Herzlia, Israel. This workstation, referenced 27, incorporates the DATA 1 and DATA 2 boards. A SCSI interface may be employed to interface the color and spatial processing units with the workstation 27.

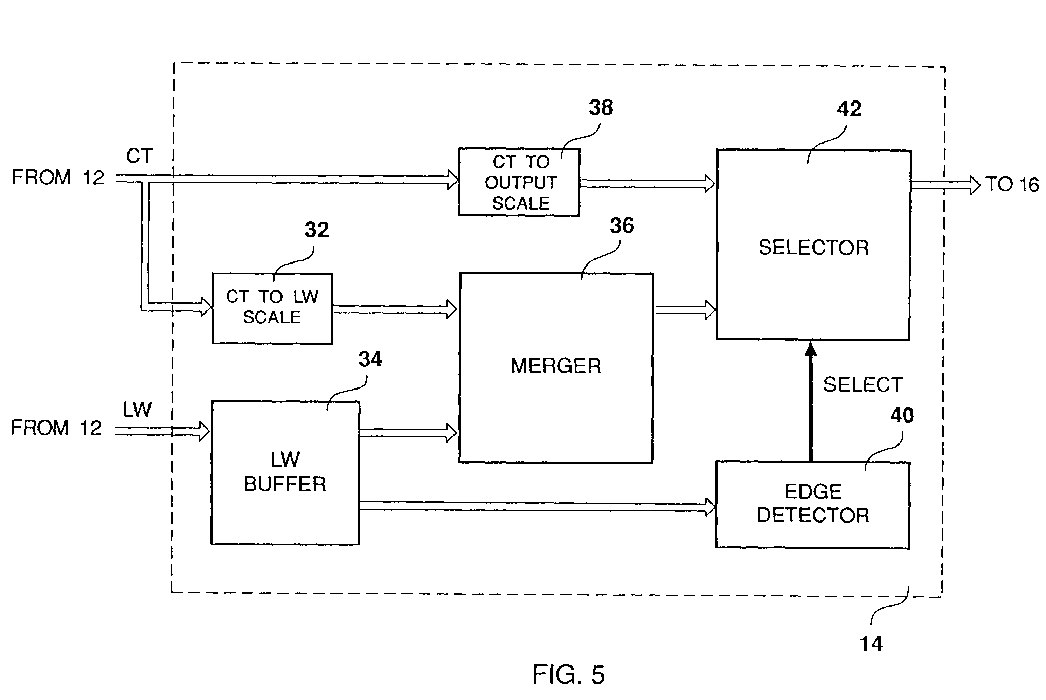

Reference is now made to Fig. 5 which is a block diagram of the spatial processing unit 14 of Fig. 1, constructed and operative in accordance with a first embodiment of the present invention. The apparatus of Fig. 5 is also suitable for implementing the spatial processing units of Figs. 2, 3, 4 and 41. The embodiment of Fig. 5 is particularly suited to software implementation.

The apparatus of Fig. 5, as shown, receives CT data and LW data which may be provided by color processing unit 12 of Fig. 1, preferably in parallel. There is provided scaling means 32 which increases the resolution of the CT data to the LW resolution. This is typically accomplished by a method other than convolution such as averaging, because it is desired to ensure that the output of scaling means 32 is always valid, which is not the case for output derived by convolution methods.

A LW buffer 34 stores a plurality of lines of LW data in the vicinity of the line currently being processed. The number of lines stored by LW buffer 34 is typically a function of the ratio between the resolutions of the input CT data and the input LW data.

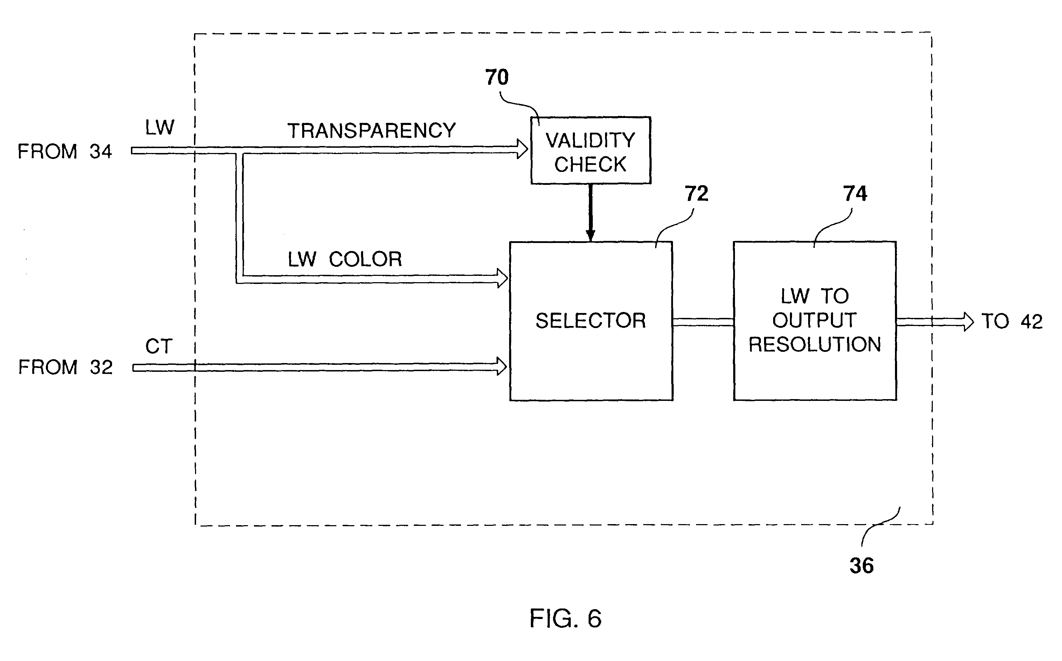

A merging unit 36, described in detail hereinbelow with reference to Fig. 6, "opens" the LW data received from LW buffer 34 for the line currently being processed and assigns a color value to each pixel. The color value is determined by the transparency indication of the corresponding LW pixel. If the LW pixel is indicated to be transparent to CT, the CT value, arriving from scaler 32, is assigned to the pixel. Otherwise, the LW value is assigned to the pixel. The output of merger 36 is, therefore, a valid (i.e. non-"garbage") but not necessarily optimal representation of the entirety of the color image.

A scaler 38 performs convolution operations such as resolution change, blur/sharp, etc. on the input CT data. Typically, scaler 38 changes the resolution of the input data to an output resolution, defined by the output device which it is desired to employ. Generally, a convolution-based method of resolution change is employed. The output of the scaler 38 generally comprises preferred values for the corresponding pixels, relative to the values provided by merger 36, with the exception of "invalid" values which have been computed by a convolution process performed upon at least one "garbage" CT pixel. These values are generally not selected for the final representation of the color image, as explained below.

Preferred convolution methods are discussed in detail below.

An edge detector 40 is operative to derive information regarding the locations of borders between LW areas of the image and CT areas of the image and also information regarding the location of the periphery of the image, from the LW data representing a plurality of lines adjacent to the line currently being processed. The LW data is received by the edge detector 40 via LW buffer 34.

A preferred software implementation of the edge detector 40 is based upon a "thickening" method useful in identifying LW pixels which are non-transparent to CT as well as identifying edge pixels, and marking the vicinity thereof. The vicinity of a non-transparent CT pixel, in this context, assuming that 5 x 5 convolution is to be carried out, is a 5 x 5 window around the non-transparent CT pixel. The vicinity of an edge, under the same assumption, is the edge pixels and the pixels adjacent to the edge pixels. The marked representation of the image is stored.

When an output value for a particular output pixel is to be computed, the "mark" of the CT pixel covering the center of that output pixel is inspected. If the pixel is marked, this indicates that at least one pixel in the 5 x 5 convolution window around it is "invalid", which means that a convolution-derived pixel value for that pixel is also invalid. A particular advantage of the marking process is to eliminate repeated inspections of the same pixels when determining whether convolution is a valid procedure for each of a plurality of pixels, by allowing the determination to be made in accordance with the marking on a single pixel rather than in accordance with an inspection of 25 pixels surrounding the single pixel.

For example, the following matrix is a representation of the "validity" of an image, each 1 representing a CT pixel which is entirely covered by non-transparent LW pixel; and each 0 representing a pixel which is at least partly covered by LW pixels which are transparent to CT:

```
0 0 0 0 0 0 0 0 0 0 0 0

0 0 0 0 0 0 0 0 0 0 0 0

0 0 0 0 0 1 0 0 0 0 0 0

0 0 0 0 0 1 1 0 0 0 0 0

0 0 0 0 0 1 1 1 0 0 0 0

0 0 0 0 0 0 0 0 0 0 0 0

0 0 0 0 0 0 0 0 0 0 0 0
```

Whichever pixels are 0's and are either neighbors of 1's or edge pixels are changed to 1's, thereby to obtain the following "thickened" image:

```
1 1 1 1 1 1 1 1 1 1 1 1

1 0 0 0 1 1 1 0 0 0 0 1

1 0 0 0 1 1 1 1 0 0 0 1

1 0 0 0 1 1 1 1 1 0 0 1

1 0 0 0 1 1 1 1 1 0 0 1

1 0 0 0 1 1 1 1 1 0 0 1



1 1 1 1 1 1 1 1 1 1 1 1
```

0 pixels which are neighbors of 1's are again changed to 1's, thereby to obtain the following, twice "thickened" image:

```
1  1  1  1  1  1  1  1  1  1  1  1
1  1  1  1  1  1  1  1  1  1  1  1
1  1  0  1  1  1  1  1  1  1  1  1
1  1  0  1  1  1  1  1  1  1  1  1
1  1  0  1  1  1  1  1  1  1  1  1
1  1  1  1  1  1  1  1  1  1  1  1
1  1  1  1  1  1  1  1  1  1  1  1
```

The term "neighbors" here refers to the eight pixels which are directly adjacent to the current pixel, either horizontally, vertically or along a diagonal. Alternatively, the term "neighbors" may be employed to refer to the four pixels which are directly adjacent to the current pixel either horizontally or vertically.

It is appreciated that the thickening process varies as a function of the size of the convolution matrix. For example, for 3 x 3 convolution, the image is "thickened" once, rather than twice.

Referring again to Fig. 5, selector 42 selects, for each output pixel, a value to be assigned thereto, in accordance with the information received by selector 42 from edge detector 40. If the information received from detector 40 indicates that the convolution used to compute the pixel value output by scaler 38 was based upon invalid CT pixels, in other words, if the pixel was "marked" by the thickening process, the value received from merger 36 is selected to represent the pixel. Otherwise, if the pixel was not "marked", indicating that the pixel value computed by a convolution process is valid, the pixel value output by scaler 38 will be assigned to the pixel. Selector 42 then provides an output indication of the final representation of the image.

The system of Fig. 5 can accept a third input stream which is in the format of a bitmap, for text files, by performing a logical OR operation between the third input stream and the decoded, but not yet averaged, LW value in merger 36 and then supplying the result to the portion of merger 36 which changes the resolution. If more than one color separation is to be processed simultaneously, a single spatial processing unit 14 may operate on each color separation in turn. According to a first alternative embodiment of the present invention, a single LW representation of the image pertains to all four separations and therefore the same LW data is used for all separations of each pixel. Alternatively, a plurality of associated LW representations may be provided, corresponding to the plurality of separations.

The system of Fig. 5 preferably has a plurality of user-selectable modes of operation. Four preferred modes are now described.

The first mode is capable of inputting CT, LW or, preferably, bitmap files, and outputting them in CT format. The first mode is useful for printing merged files on various output devices and for processing the files and passing them to a storage unit or other processing unit. It will be appreciated that this is the most general mode, the other modes discussed hereinbelow being specialized cases of this first mode.

A second mode is preferably provided for scaling LW files and converting them into CT format. This mode is useful for printing LW files on CT output devices or for processing them and passing them to a storage unit or other processing unit. In this mode, which is restricted to LW processing and outputting through the selector 42, only the merger 36, the edge detector 40 and the selector 42 are utilized. The LW data, stored in buffer 34, is "opened" and converted to CT format and is then scaled by the merger 36 and an output signal is provided to selector 42.

A third mode is preferably provided for handling only CT files. This mode is useful for printing CT files on CT output devices or other output devices which handle CT format. It is also useful for processing CT files and for passing them to a storage unit or other processing unit. In this mode, since the entire input file is in CT format, the input is always valid. The mode is restricted to CT processing and outputting through the selector 42 and thus, only scaler 38 and selector 42 are used. A convolution process is performed by scaler 38 which may change the resolution of the data and/or may perform other convolution functions such as sharpening, blurring and simple pattern extraction, wherein the appropriate convolution matrix coefficients dictate the type of convolution to be performed. The selector 42 outputs the CT data.

A fourth mode is preferably provided for merging CT and/or LW and/or bitmap files. This mode provides high quality, relatively fast merging of the input, as well as format conversion and unification. The output files are directed to an appropriate output device, to a storage unit or to another processing unit. In this mode, LW and CT files can be merged into files with CT input resolution. All components of the embodiment of Fig. 5 are operative and the convolution operation does not affect the CT file. The files are merged by selector 42 which also outputs the merged file. Optionally, scaler 32 can be utilized to merge a bitmap file with the merged file.

Reference is now made to Fig. 6, which is a block diagram of the merger 36 of Fig. 5. As stated hereinabove, merging unit 36 opens the LW data for the line currently being processed and assigns a color value (either the color value of the CT pixel or the color value of the LW pixel) to each pixel of the color image. The value which is assigned to the pixel is determined by the transparency of the corresponding opened LW pixel. If the pixel is indicated by a transparency determining unit 70 to be transparent, a selector 72 assigns the CT value arriving from scaler 32 of Fig. 5 to the pixel. Otherwise, selector 72 assigns the LW value arriving from buffer 34 to the pixel. The resolution of the output of selector 72 is then changed to the output resolution by scaler 74, preferably by averaging. The output of merger 36 is, therefore, a valid (i.e. non-"garbage") but not necessarily optimal representation of the entirety of the color image.

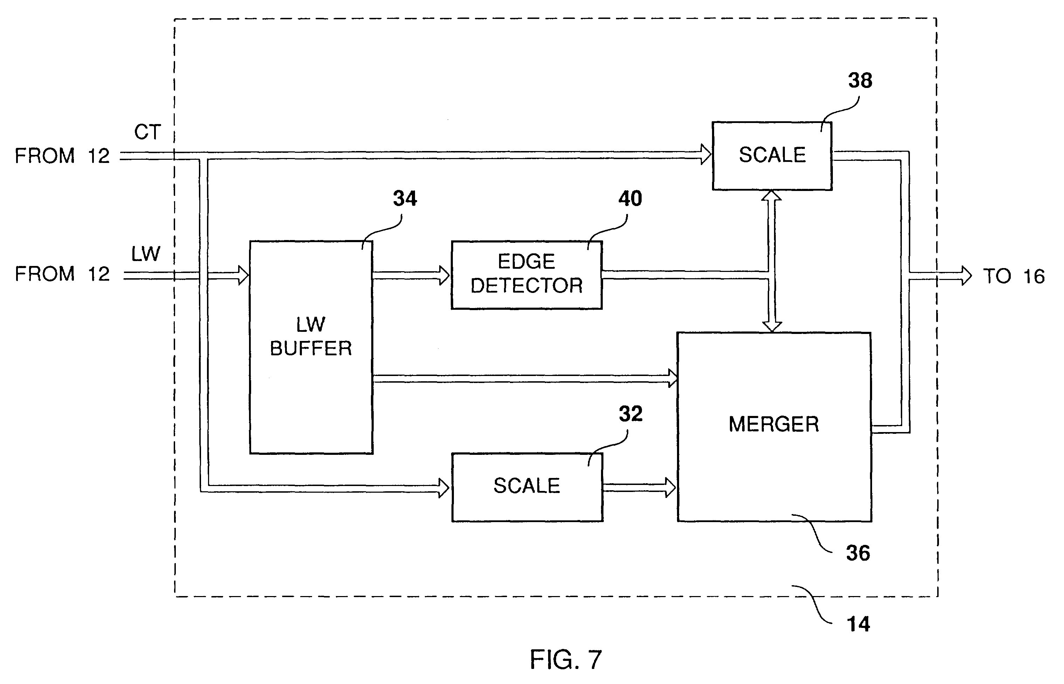

Reference is now made to Fig. 7, which is a block diagram of spatial processing unit 14 constructed and operative in accordance with a second embodiment of the present invention. Elements common to this embodiment and to the embodiment of Fig. 5 are identically numbered, for convenience. The apparatus of Fig. 7 generally resembles the apparatus of Fig. 5, with the exception that selection between the outputs of scaler 38 and of merger 36 is performed directly by edge detector 40, which is operative to turn either one of scaler 38 and merger 36 on and the other one off, in accordance with the edge location information computed from the LW data received from the LW buffer 34. The embodiment of Fig. 7 is particularly suited to software implementation.

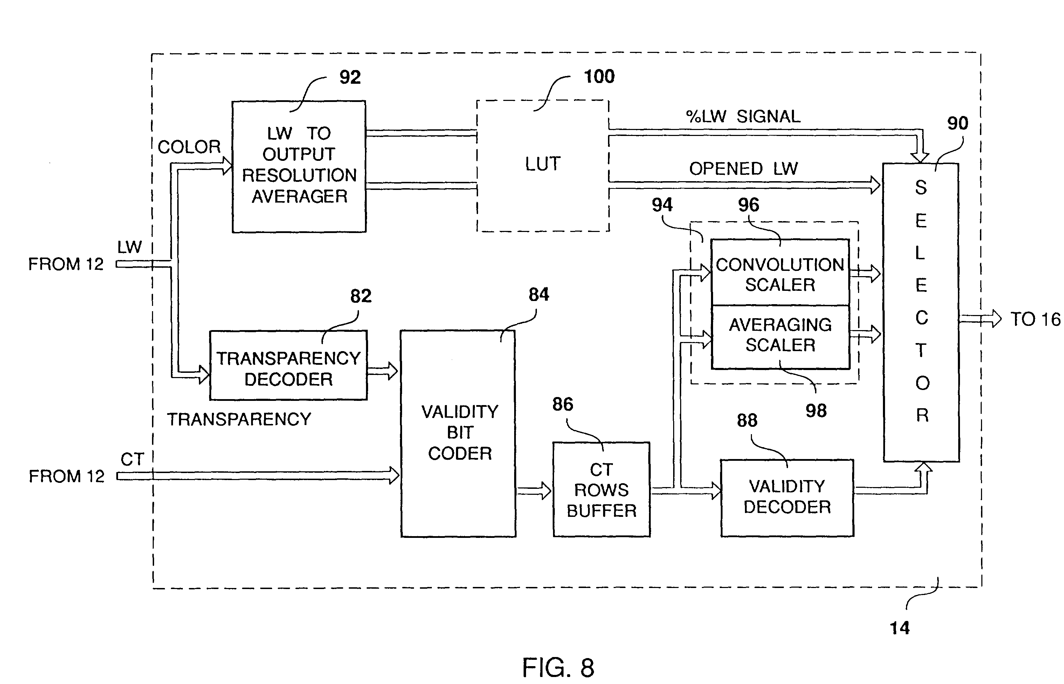

Reference is now made to Fig. 8 which is a block diagram of spatial processing unit 14 constructed and operative in accordance with a third embodiment of the present invention particularly suited to hardware implementation. Whereas the embodiment of Fig. 5 employs a "thickening" method for edge detection, the apparatus of Fig. 8 employs a validity bit encoding method. The difference between the two embodiments is that in the "thickening" embodiment of Fig. 5, averaging is carried out by merger 36 at LW resolution, which is typically relatively high, while in the validity bit encoding embodiment of Fig. 8, averaging is carried out at CT resolution, which is relatively low.

In the embodiment of Fig. 8, a transparency decoder 82 uses the indication of transparency of incoming LW data to compute an additional bit of information, termed herein the "validity bit", for each CT pixel, representing the validity of that CT pixel. Preferably, the validity bit is given a value of 1 if at least one of the LW pixels which overlap the CT pixel, partially or completely, is transparent. If none of the overlapping LW pixels are transparent to CT, the validity bit is given a value of 0. The validity bit is then implanted by a coder 84 into the appropriate CT data element.

A plurality of CT rows in the vicinity of the CT pixel being processed are stored in a CT rows buffer 86. A validity decoder 88 extracts the validity bit of each CT pixel in the vicinity being processed and provides a selector 90 with an indication of whether or not the output pixel being processed has a "valid" vicinity. In other words, validity decoder 88 provides an indication of whether the convolution window surrounding the output pixel being processed is entirely valid, in which case convolution is a valid and generally preferred method for computing the color value of the output pixel.

An averager or other scaling device 92 reduces the LW resolution to the output resolution. The averager also opens the LW format and computes %LW, the LW percentage signal, which is the percentage of each of the relatively large output pixels which is to be defined only by the relatively small LW pixels, i.e. the percentage of the output pixel which is non-transparent to CT. The opened LW data and also the % LW signal are received by selector 90.

A scaling unit 94 comprises two scalers 96 and 98 which are both operative to change the resolution of the input CT data to the output resolution, each using a different method. Scaler 96 typically uses a method based on convolution. Convolution is the preferred method, assuming that the vicinity of the pixel being convolved contains no invalid pixels, which assumption is checked by validity decoder 88. Scaler 98 uses a method which yields output which is of poorer quality than the output of scaler 96, but has the advantage of always being valid, regardless of the validity of the vicinity of the pixel being scaled. Typically, the scaler 98 employs an averaging method, averaging only those CT pixels which are valid, as indicated by the "validity" bit, and only those LW pixels which are non-transparent.

Selector 90 is operative to select a value for the output pixel from among the following: the LW output of averager 92, the output of scaler 96, the output of scaler 98, or some combination of the above. Selector 90 typically assigns a value to the pixel being processed as a function of the "validity" signal output of decoder 88 and the LW percentage signal output of averager 92, as follows:

If the output of the decoder is zero, then the convolution performed by scaler 96 is valid and the output of scaler 96 is assigned to the present pixel.

If the output of the decoder is greater than zero, then:

if % LW is zero, the output of scaler 98 is assigned to the present pixel;
if % LW is 100, the LW value output by averager 92 is assigned to the present pixel;
if % LW is between 0 and 100, the value assigned to the present pixel is some combination of CT and LW, such as according to one of the following formulae:

a. present pixel value = 0.01 x (%LW x LW + (100 - %LW) x CT)

b. present pixel value =

$$100-100(1-LW/100)^{\%LW/100}(1-CT/100)^{1-\%LW/100}$$

It is noted that, in formulae a and b, if LW=0% dot, the CT is unaffected by the LW value. If LW=100% dot, the result is unaffected by the CT value. All variables are given in % dot. Variable definitions are as follows:

%LW = LW percentage signal output of averager 92, i.e. the percentage of the area of the output pixel being processed which is "non-transparent" to CT, assuming all areas are either "transparent" or "non-transparent" to CT. More generally, the transparency may be defined to have more than two values, i.e. there may be values t intermediate t=100% (complete transparency) and t=0% (complete non-transparency) In this case, %LW is computed by partitioning the output pixel into a plurality of L locations, each having a transparency percentage $t_i$ and an area $a_i$ (i=1..L) respectively, and defining %LW as the sum, over the L locations, of $a_i(100-t_i)$;
LW = the "opened" LW value output by averager 92;
CT = the output of scaler 98.

Optionally, the % LW used for the above averaging procedure may be passed through a LUT 100 which is constructed in a suitable manner, e.g. the LUT may be constructed so as to provide output with a desired nonlinearity, such as output in which a particular separation is emphasized. The look up table (LUT) 100 is provided between averager 92 and selector 90. The LUT 100 receives the %LW signal provided by averager 92 and uses it to determine the weight to be given to the LW data when it is merged with the CT data by selector 90. Different weightings may be used for different separations, as when it is desired to emphasize text printed using only the black separation.

Decoder 82 and averager 92 are designed to be suitable for the particular LW format employed and may be based on any suitable relatively fast processor incorporating multipliers, such as the digital signal processor known as TMS320C30, commercially available from Texas Instruments, or, preferably, the digital signal processor known as DSP96002, commercially available from Motorola, Phoenix, Arizona, USA. According to a preferred embodiment, decoder 88, scaler 96 and scaler 98 all operate in parallel.

The embodiment of Fig. 8 may, alternatively, provide output in LW format if averager 92 is constructed and operative not to "open" the LW data. This allows the apparatus of Fig. 8 to provide both CT and LW files. The files may then be provided to a high quality output device, such as the Dolev or Raystar laser plotters manufactured by Scitex Corporation of Herzliya, Israel, to supply high quality printed output.

The system can accept a third input stream which is in the format of a bitmap, for text files, by performing a logical OR operation between the third input stream and the decoded, but not yet averaged, LW value in averager 92. To do this, a LW percentage value of 100% is sent to the selector 90.

If more than one color separation is to be processed simultaneously, a separate rows buffer 86 is preferably provided for each color separation. Validity bit coder 84 may be operated sequentially on each color separation. If a single LW representation is provided for all four separations, the decoder 88, selector 90 and scaling unit 94 may operate with the same LW data for all separations of each pixel. Also, the elements downstream of buffer 86 need only be implemented once because the LW data provides information related to all of the CT separations.

The embodiment of Fig. 8 preferably has several modes of operation. The first, most general mode is operative to receive CT, LW and optionally, bitmap files, and output them in CT format. Alternatively, the LW or the bitmap files can be output in a run-length format. This first mode is useful for printing merged files on various output devices, or for processing the files and passing them onto a storage unit or other processing unit. It will be appreciated that the first mode corresponds to the most general configuration of the apparatus of Fig. 8.

A second mode is preferably provided for scaling LW files and for subsequently printing them in LW format. This mode is useful for printing LW files on high quality output devices or for processing LW files and passing them to a storage unit or other processing unit. Only the LW averager 92 and the selector 90 are used. The LW is decoded and scaled by LW averager 92 and then coded back to LW run length format, also by LW averager 92.

A third mode is preferably provided for scaling LW files and for subsequently printing them in CT format. This mode is useful for printing LW files on CT output devices or for processing them and passing them to a storage unit or other processing unit. In this mode, incoming LW is decoded, converted to CT format and scaled by the averager 92 and is then output via selector 90.

A fourth mode is preferably provided for processing CT files. This mode is useful for printing CT files on CT output devices or other output devices which can handle CT format. It is also useful for processing CT files and for passing them to a storage unit or other processing unit. In this mode, the entire input file is in CT format and so may be assumed to be entirely valid.

In the fourth mode, coder 84 passes the entire CT file to the row buffer 86, having planted a "valid" CT bit in each pixel. At the scaler 96, a convolution operation is performed which may change the resolution of the CT file and/or perform other convolution functions such as sharpening, blurring, simple pattern extraction, the convolution matrix coefficients being determined by the type of convolution to be performed. The selector 90 always outputs the CT data.

A fifth mode is preferably provided for merging CT and/or LW and/or bitmap files without changing resolution. This mode provides high quality, fast merging of input files, as well as format conversion and unification. The resultant files are then directed to an output device, to a storage unit or to another processing unit.

In the fifth mode, input LW and CT files can be merged into one file in CT resolution, as follows: The LW file is decoded and scaled to the CT resolution by averager 92. Coder 84, buffer 86 and decoder 88 are all operative and scalers 96 and 98 perform a "unity" scaling, i.e. a scaling procedure that does not change the CT resolution. The files are merged at selector 90 which also outputs the merged file. Optionally, as described hereinabove, averager 92 may be constructed and operative to allow a bitmap file to be added to the merged file by performing a logical OR between the bitmap stream and the decoded but not averaged LW file.

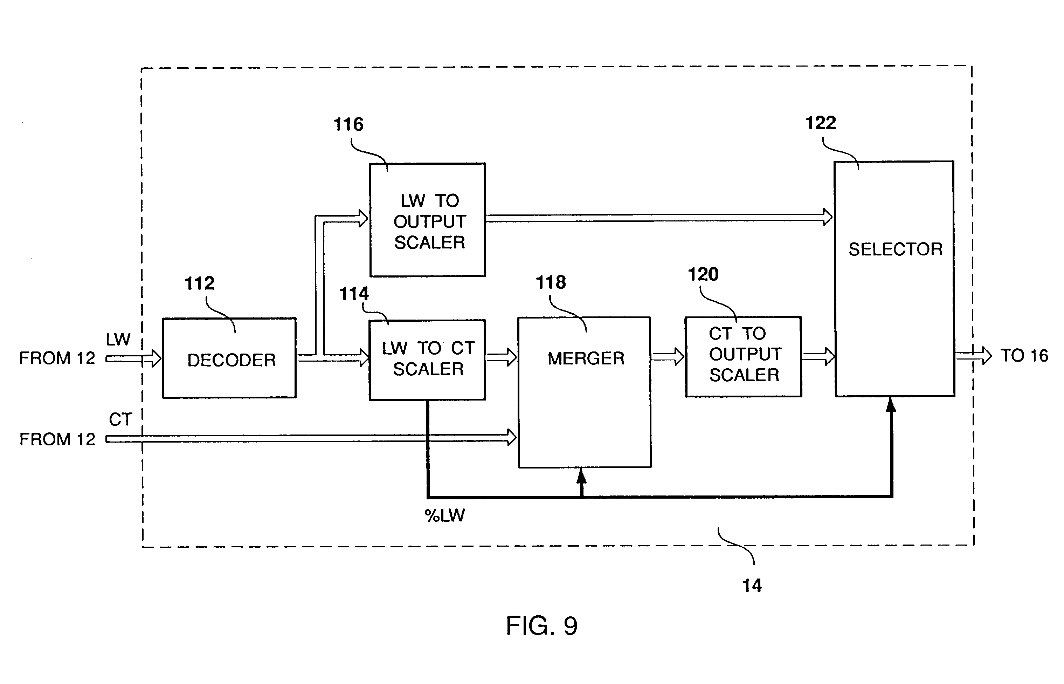

Reference is now made to Fig. 9 which is a block diagram of spatial processing apparatus constructed and operative in accordance with a fourth embodiment of the present invention.

In Fig. 9, incoming LW data is opened by a decoder 112 and then its resolution is changed to the CT resolution by a scaler 114.

LW to CT scaler 114 is also operative to compute a %LW signal and supply it to a merger 118 and to a selector 122. Merger 118 merges the LW and CT data, using a suitable combining method, such as that defined by the following formula:

$$CT \text{ pixel value} = 0.01 \times (LW \times LW\% + CT (100\text{-}LW\%)),$$

where LW and CT are the LW and CT pixel values in %dot, at CT resolution, input by the merger 118. It is noted that the output of the merger is always valid, unlike the CT input, which, if directed indiscriminately to a convolution process, would generally provide at least some invalid results.

The merged output is then scaled to the output resolution by a scaler 120 which may be a convolution based scaler similar to convolution based scalen 96 of Fig. 8. The output of scaler 120 is a complete representation of the color image, at output resolution, which has been computed by "valid" methods. However, the output of scaler 120 may have a number of drawbacks:

a. Information may have been lost en route, since the resolution of the original LW representation of the color image was first reduced to the low CT resolution level and subsequently was restored to, or reduced further to, the output level which may be higher or lower than the CT resolution level but is generally lower than the LW resolution level.

b. The characteristics of the peripheries of the LW areas of the color image may be somewhat "smeared" into the adjacent peripheries of the adjacent CT areas of the color image, and conversely, the characteristics of the peripheries of the CT areas of the color image may be somewhat "smeared" into the adjacent peripheries of the adjacent LW areas of the color image.

Therefore, according to a preferred embodiment of the present invention, a scaler 116 and a selector 122 are provided as shown, although they are not necessary to the operation of the embodiment of Fig. 9, in order to substantially overcome the two above-mentioned drawbacks. Scaler 116 "opens" the LW data, i.e. converts it to pixel-by-pixel format, and then changes the LW resolution directly to the output resolution.

Selector 122 is operative to select whether the output of scaler 120 or the output of scaler 116 will be output from the selector, using the LW% value as a criterion. Specifically, if LW%=100, this indicates that the LW is "non-transparent" to CT, at the location of the image being processed, and the LW output of scaler 116 is selected. Otherwise, the output of scaler 120 is selected.

The embodiment of Fig. 9 can alternatively produce output in LW format if LW scaler 116 operates in LW format rather than in "opened" format. Thereby, the system can produce either CT or LW files. The files may then be plotted by a high quality output device, such as the Dolev or Raystar laser plotters manufactured by Scitex Corporation of Herzliya, Israel, to supply high quality printed output.

The system can optionally accept a third input which is in the format of a bitmap, for text files, by performing a logical OR operation between a third input stream and the output of scaler 116 and then supplying the result to selector 122, thereby to ensure that the third input will always be selected.

If more than one color separation is to be processed simultaneously, merger 118, scaler 120 and selector 122 may be duplicated for each color separation or alternatively, these elements may operate with the same LW data for all color separations for each pixel. If a single LW representation is provided for all four separations, the remaining elements need only be implemented once.

A look up table (not shown) may optionally be provided between scaler 114 and merger 118. The LUT may receive the %LW signal generated by scaler 114 and determine the weighting given to the LW data when it is combined with the CT data in merger 118. If desired, different weighings for different separations may be used, such as to emphasize text that is printed using only the black separation.

The system of Fig. 9 has many different modes of operations. It can handle CT, LW and optionally, bitmap files, which are output in a CT format. Alternatively, the LW and bitmap files can be output in a run-length format. This first mode is useful for printing merged files on various output devices, or for processing the files and passing them to a storage unit or other processing unit. It will be appreciated that the first mode corresponds to the most general configuration of the apparatus of Fig. 9.

A second mode is preferably provided for scaling LW files and subsequently printing them in LW format. This mode is useful for printing LW files on high quality output devices or for processing LW files and passing them to a storage unit or other processing unit.

A third mode is preferably provided for scaling LW files and for subsequently printing them in CT format. This mode is useful for printing LW files on CT output devices or for processing them and passing them to a storage unit or other processing unit.

A fourth mode is preferably provided for handling only CT files. This mode is useful for printing CT files on CT output devices or other output devices which can handle CT format. It is also useful for processing CT files and for passing them to a storage unit or other processing unit. The convolution matrix coefficients are determined by the type of convolution to be performed.

A fifth mode is provided for merging CT and/or LW and/or bitmap files without changing resolution. This mode preferably provides high quality, fast merging of input files, as well as format conversion and unification. The resultant files are then directed to an output device, to a storage unit or to another processing unit.

In all of the above embodiments of spatial processing apparatus, convolution is a preferred method for implementing the various CT scalers. The drawback of convolution as a scaling method is that it is invalid if even one of the pixels used is "invalid", i.e. corresponds to a non-transparent area of the LW image, as explained hereinabove. It is noted that a CT pixel is preferably defined as invalid only if the entirety of the area of the color image defined thereby corresponds to an entirely non-transparent area of the LW image. If the LW image is even partially transparent to even a portion of the area of a particular CT pixel, the CT pixel is preferably defined as valid.

There follows a discussion of convolution and a presentation of hardware implementations of preferred convolution apparatus useful, inter alia, in implementing scaler 96 of Fig. 8.

General convolution and orthogonal convolution and methods for computing convolution coefficients are discussed in the following documents.

1. Schowengerdt, R. et al. "Topics in the two dimensional sampling and reconstruction of images", Int. J. Remote Sensing, 1984, Vol. 5(2), pp. 333 - 347.

2. Park, S. K. et al, "Image Reconstruction by parametric cubic convolution", Computer Vision, Graphics and Image-Processing, 23, 258-272, 27 July 1982.

3. Hall, E. L. Computer image processing and recognition, particularly pages 390-413. Academic Press, 1979, New York.

4. Baxes, G.A. Digital image processing, particularly pp. 2, 48, 50, 144, 149-150, 160. Prentice-Hall, Englewood Cliffs, NJ, 1984.

Generally, it has been found that many convolution operations can be performed in the X and Y directions independently.

This type of convolution process is termed herein "orthogonal convolution". In orthogonal convolution, a given convolution operation can be separated into two independent X and Y convolutions such that the result of sequentially operating the X and Y convolutions on given input are substantially identical to the results of operating the original convolution on the same input. This is done by defining row and column parameters $c_i$ and $c_j$ where $i=1..n$, $j=1..m$ ($n$ x $m$ being the dimensions of the original convolution matrix $c_{ij}$F such that for every $i$ and $j$, the $i,j$ matrix coefficient is equaled to the product $c_i$ x $c_j$. The advantages of performing convolution in the X and Y directions independently are, first, that less coefficients need be stored (approximately $n$ row parameters + $m$ column parameters, rather than $n$ x $m$ convolution matrix coefficients), and second, that less operations need be carried out.

The letters $n$ and $m$ refer to the dimensions of the convolution "window". $n$ is the number of rows and $m$ is the number of columns. Typically $n=m$. Typical values for $n$ and $m$ are 3 or 5, corresponding to first and second order operations respectively.

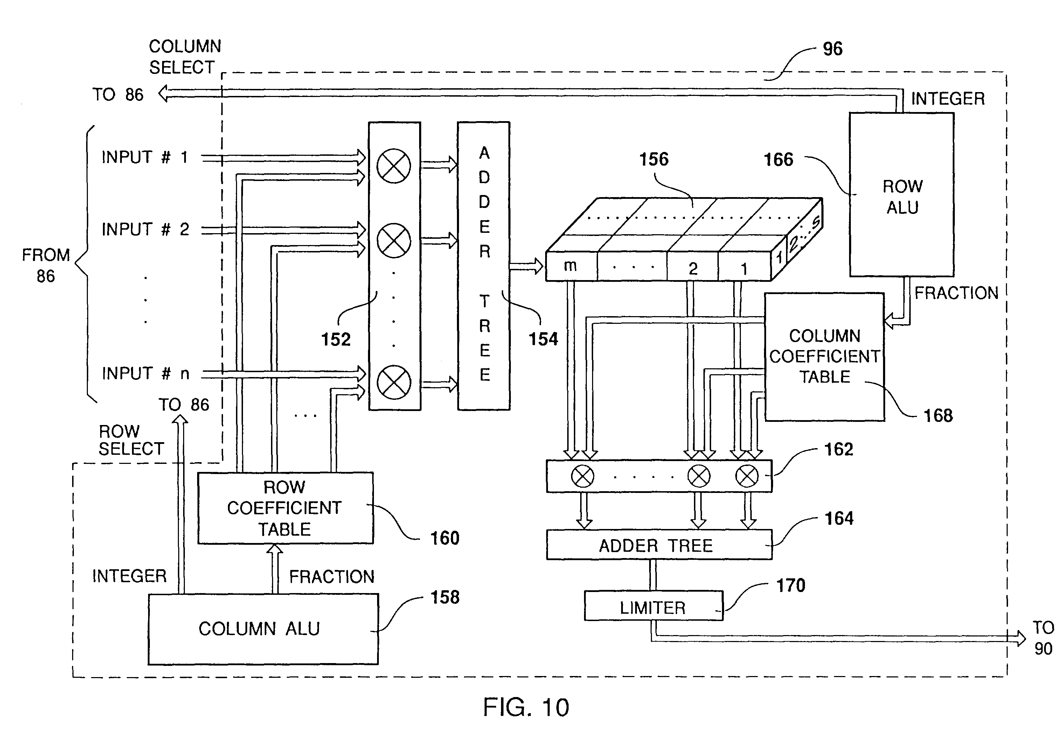

Reference is now made to Fig. 10, which is a block diagram of scaler 96 of Fig. 8 constructed and operative in accordance with a first embodiment of the present invention based on orthogonal convolution methods.

The particular features of the orthogonal convolution method of Fig. 10 will now be described.

The stream of CT pixels representing the color image being processed comprises a plurality of sequences $s_i$ of CT pixels, each sequence representing a row i of the color image. Sequence i comprises all pixels $p_{ij}$ (j=1...r, where r is the number of pixels per row). A suitable number of sequences, such as 20 to 200 sequences, from among the many thousands of sequences defined by the color image, are stored in a dual port row buffer such as rows buffer 86 of Fig. 8. Preferably, 5 sequences of CT pixels may be simultaneously retrieved by rows buffer 86. Therefore, rows buffer 86, at a given clock, is operative to simultaneously provide five pixels from the same column of each of five respective adjacent rows to a multiplier array 152 of Fig. 8. At the top and at the bottom of the color image, the five simultaneously retrievable sequences may not correspond to five adjacent rows of the image, but rather may correspond to only three or four adjacent rows of the image, the first or last of the rows being repeated more than once, as shown and described in detail below. This is because rows may be missing at the top and at the bottom of the color image. For example, when row 1 is being processed, two rows are available "ahead" of row 1, namely rows 2 and 3. However, no two rows are available "behind" row 1. Therefore, the two rows "behind" row 1 are both defined as row 1. So the 5 x 5 convolution window for each pixel in row 1 comprises five pixels each from rows 1, 1, 1, 2 and 3. Similarly, when the second row of the image is being processed, two rows are available "ahead" of row 2, namely rows 3 and 4. However, only one row is available "behind" row 2, namely row 1. Therefore, the second row "behind" row 1 is also defined as row 1, and the 5 x 5 convolution window for each pixel in row 2 comprises five pixels each from rows 1, 1, 2, 3 and 4.

The 5 simultaneously retrievable sequences of CT pixels within rows buffer 86 of Fig. 8 change over time. The following table shows the 5 sequences stored in rows buffer 86 during seven consecutive convolution cycles, corresponding to seven adjacent output pixels, for a variety of output resolution : CT resolution ratios:

| output | convolution cycles | | | | | | |
|--------|------|------|------|------|------|------|------|
| CT | 1 | 2 | 3 | 4 | 5 | 6 | 7 |
| 1 | 11123 | 11234 | 12345 | 23456 | 34567 | 45678 | 56789 |
| 3 | 11123 | 11123 | 11123 | 11234 | 11234 | 11234 | 12345 |
| 1/3 | 11123 | 23456 | 56789 | 8-12 | 11-15 | 14-18 | 17-21 |
| 2.5 | 11123 | 11123 | 11123 | 11234 | 11234 | 12345 | 1 - 5 |
| 0.4 | 11123 | 23456 | 45678 | 7-11 | 9-13 | 12-16 | 14-18 |

In the forgoing discussion, indices i, j, k and I will be used to denote the following:

i: a position along the vertical axis of, or a row of, the image;
j: a position along the horizontal axis of, or a column of, the image;
k: a position along the vertical axis of, or row of, the convolution coefficient matrix; and
l: a position along the horizontal axis of, or column of, the convolution coefficient matrix.

In conventional non-orthogonal convolution methods, the convolution coefficient set is represented by a coefficient matrix $C_{kl}$. In orthogonal convolution, however, the convolution coefficient set is represented by a first set of row coefficients $c_{k}$ and by a second set of column coefficients $c_{l}$. Therefore, less coefficients need be stored in orthogonal convolution. For example, in 5 x 5 convolution, a matrix of coefficients contains 25 coefficients, whereas the two sets of row and column coefficients contain 5 coefficients each, giving a total of only 10 coefficients.

A particular advantage of orthogonal convolution is that it is possible to reuse partial results of a convolution computation performed on a first "window" of CT data when performing the convolution computation of an adjacent second "window" of CT data.

Specifically, the 5 x 5 convolution computation on the first "window" of CT pixels defined in the image $p_{ij}$, namely the first five pixels of the first five rows, or all $p_{ij}$ for which i and j are both less or equal than 5, is as follows:

$$\text{Convolution result} = 1/25 \times \text{sum}_j \, [c_{j}(\text{sum}_i(c_{i} p_{ij}))]$$

where summations over i and over j are both from 1 to 5.

The apparatus of Fig. 10 operates in the following two stages:

a. The column convolutions are computed. $Sum_i(c_i p_{ij})$ is computed for each j from 1 to 5, resulting in five partial results $p_{.1}$, ..., $p_{.5}$. This step is performed by multiplier array 152, adder tree 154, column ALU 158 and row coefficient table 160, which stores the row coefficients $c_{i.}$. In order to clarify the terminology employed here, it is emphasized that the row coefficients are employed to compute the column convolution results, also termed partial results; whereas the column coefficients are employed to compute the row convolution result, which is the weighted sum of five column convolutions or partial results.

b. The row convolution is computed. Specifically, the sum of $c_{.j} p_{.j}$ for all j from 1 to 5, is computed. This step is performed by multiplier array 162, adder tree 164, row ALU 166 and column coefficient table 168, which stores the column coefficients $c_{i.}$.

It is noted that when the apparatus of Fig. 8 operates on the second "window" of CT pixels, some of the five partial results of step a may be "reused" instead of being computed anew.

The number of partial results used for computing a first output pixel which may be reused in order to compute a second adjacent output pixel along the same row depends on the ratio between the CT resolution and the output resolution. For example:

Example 1: If output resolution: CT resolution is 1:1, then the CT pixel window corresponding to the second output pixel is obtained by displacing the CT pixel window corresponding to the first output pixel sideways by one CT pixel. Therefore, four of the five partial results used for the first output pixel may be reused when computing the second output pixel.

Example 2: If output resolution: CT resolution is 1:2, then the CT pixel window corresponding to the second output pixel is obtained by displacing the CT pixel window corresponding to the first output pixel sideways by two CT pixels. Therefore, three of the five partial results used for the first output pixel may be reused when computing the second output pixel.

Example 3: If output resolution: CT resolution is 2:1, then the CT pixel window corresponding to the second output pixel is sometimes exactly the same as the CT pixel window corresponding to the first output pixel. This is because the CT pixel window is determined by its central pixel, which is defined as the CT pixel covering the center of the output pixel.

Specifically, if the output resolution is twice the CT resolution, the output pixels are half as long as the CT pixels. Therefore, in half of the cases, the centers of adjacent output pixels are covered by the same CT pixel and therefore the convolution windows corresponding to those adjacent output pixels are identical. In these cases, all five partial results used for the first output pixel may be reused when computing the second adjacent output pixel. However, the five partial results for the second output pixel will respectively be muliplied by 5 column coefficients which are generally not equal to the column coefficients by which the partial results were multiplied in order to compute the first output pixel.

In the remaining half of the cases, the centers of adjacent output pixels are covered by adjacent CT pixels and therefore the convolution windows corresponding to those adjacent output pixels are dispaced vis a vis one another by a single CT pixel. In these cases, four out of the five partial results used for the first output pixel may be reused when computing the second adjacent output pixel. As above, when the partial results are reused for the second output pixel, they are multiplied by respective column coefficients which are generally not equal to the column coefficients used to compute the first output pixel.

Referring again to Fig. 10, a dual port buffer array 156 is provided which comprises a plurality of dual port buffers corresponding in number to the number, s, of separations of the color image (typically s=3 or 4, such as in RGB and CMYK color coordinate systems, respectively). The dual port buffer array 156 stores the m partial results for each of the s separations. The partial results are computed by the column convoluting unit which includes: multiplier array 152, adder tree 154, row coefficient table 160, and column ALU 158.

Column ALU 158 is operative to control the operation of the column convoluting unit in accordance with the position of the center of the current output pixel along the y axis of the CT representation of the color image, also termed "the y location" or Y. The integer part of Y addresses the rows of the row buffer 86 of Fig. 8, since the convolution window is centered on the CT pixel which "covers" the center of the current output pixel, as explained above.

The fraction part of Y addresses the row coefficient table 160. This is because the values of the row coefficients vary as a function of the y location of the center of the current output pixel within the corresponding CT pixel. For example, it is often desired to have the weight of each CT pixel vary monotonically as a function of the distance of that CT pixel from the center of the output pixel. In this case, if the center of the current output pixel falls very close to the top of the corresponding CT pixel, then the top rows of the convolution window receive more weight in determining the color value of the output pixel, relative to the bottom rows of the convolution window. In other words, the top row coefficients will generally be large relative to the bottom row coefficients.

The partial results stored in dual port buffer 156 are supplied to the row convoluting unit which is operative to perform the row convolutions and which comprises: array 162 of multipliers, adder tree 164, row ALU 166 and column coefficient table 168. Row ALU 166 is operative to control the operation of the row convoluting unit in accordance with the position of the center of the current output pixel along the x axis of the CT representation of the color image, also termed "the x location" or LX. The integer part of LX addresses pixels within the rows of the row buffer 86 of Fig. 5, since the convolution window is centered on the CT pixel which "covers" the center of the current output pixel, as explained above.

The fraction part of LX addresses the column coefficient table 168. This is because the values of the column coefficients vary as a function of the x location of the center of the current output pixel <u>within</u> the corresponding CT pixel, analogously to the variation of the row coefficients as a function of the y location of the center of the current output pixel within the corresponding CT pixel, as explained above.

As explained above, row ALU 166 computes the current CT column location. Column ALU 158 computes the current CT row location.

Finally, a limiter 170 trims the result to within the range of the storage format, typically an 8-bit format.

It is noted that the row and the column convolutions are generally analogous operations and consequently, in the embodiment of Fig. 10, two generally identical row and column convoluting units, each comprising multipliers, adders, a coefficient table and an ALU, are coupled to one another to sequentially perform the two operations.

A particular advantage of the structure of Fig. 10 is as follows: In state of the art devices, It is generally the case that the column convolutions are sequentially computed and then stored for all pixels in the row being processed. Subsequently, the device returns to the beginning of the row and performs the row convolutions, typically employing only 3 to 5 of the stored column convolutions for each row convolution operation. In the device of Fig. 10, the row convolutions are performed "on the fly" relative to the column convolutions, rather than being performed only after an entire row has been convolved.

Therefore, only m column convolutions per separation need be stored in dual buffer array 156.

A further advantage of the embodiment of Fig. 10 is the provision of m buffers per separation, thereby enabling the convolutions for all separations (typically 3 or 4) of the color image to be performed on a single device comprising a single column convolution unit and a single row convolution unit, instead of three or four of each kind of unit.

A disadvantage of the embodiment of Fig. 10 is that, in cases in which the column convolution rate is not equal to the row convolution rate, only one of the row and column convolution units will be continuously operative at capacity, which is uneconomical.

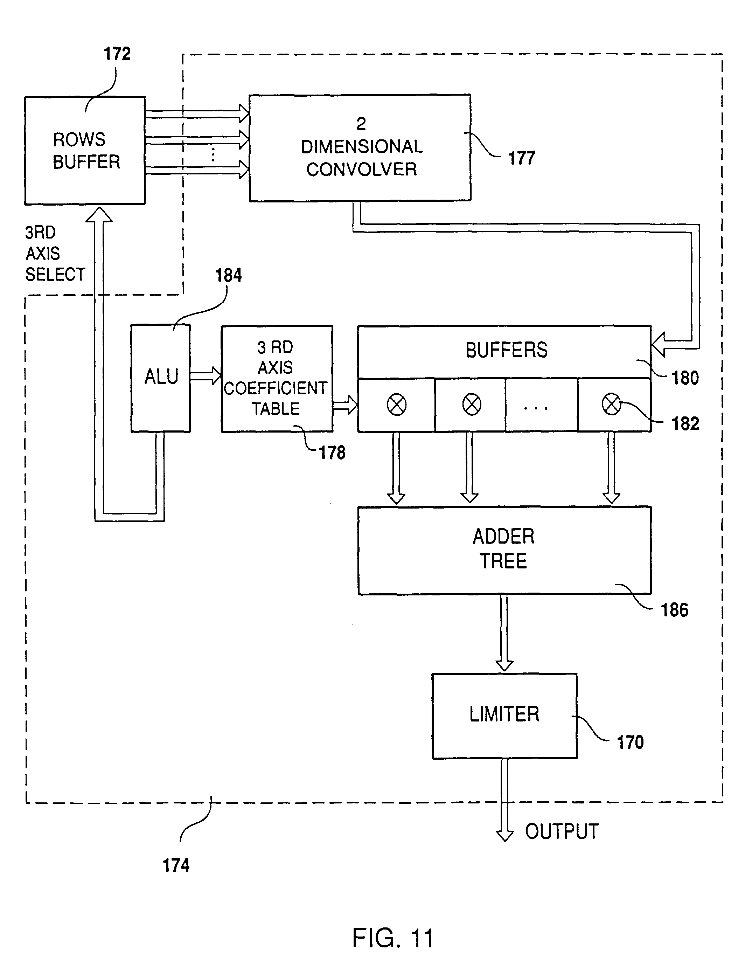

Reference is now made to Fig. 11 which is a block diagram of three dimensional convolution apparatus comprising a storage buffer 172 and a scaler 174. The storage buffer 172 and scaler 174 of Fig. 11 are respectively similar to the rows buffer 86 of Fig. 8 and the scaler 96 of Fig. 10. However, the apparatus of Fig. 11 is operative to process a 3 dimensional image, such as a 3 dimensional color image, rather than a 2 dimensional image. More generally, Fig. 11 illustrates how the structure of Fig. 10 may be extended analogously to process a color image of any number of dimensions.

As shown in Fig. 11, the three dimensional apparatus comprises a two dimensional convolver 177, which may be similar to the scaler 96 of Fig. 10 except that the limiter 170 of Fig. 10 is omitted, a coefficient table 178 for the coefficients of the third dimension, an array of dual port buffers 180 which may be substantially identical to dual port buffer array 156 of Fig. 10, an array of multipliers 182 which may be substantially identical to multiplier arrays 152 and 162 of Fig. 10, an ALU 184 which may be substantially identical to ALUs 158 and 166 of Fig. 10, and an array of adders 186 which may be substantially identical to the adders 154 and 164 of Fig. 10.

In certain applications, it may be desired to add a limiter after the adder of each dimension. In the above example, a limiter may be added between 2 dimensional convolver 177 and buffer array 180. The additional limiter per dimension is operative to restrict the result to a suitable accuracy.

Control ALU 184 is operative to address coefficient table 178 and to select a position along the third axis and provide an indication of the selected position to rows buffer 172.

Rows buffer 172 comprises a plurality of row buffer arrays, numbering at least five (assuming that the dimensions of the convolution window are 5 x 5 x 5) row buffer arrays, each of which may be identical to rows buffer 86 of Fig. 8.

If it is desired to add a plurality of dimensions to the apparatus of Fig. 10, it is appreciated that the modification of Fig. 10 to obtain Fig. 11, as described above, may be repeated a plurality of times, thereby adding one dimension to the convolution apparatus per repetition.

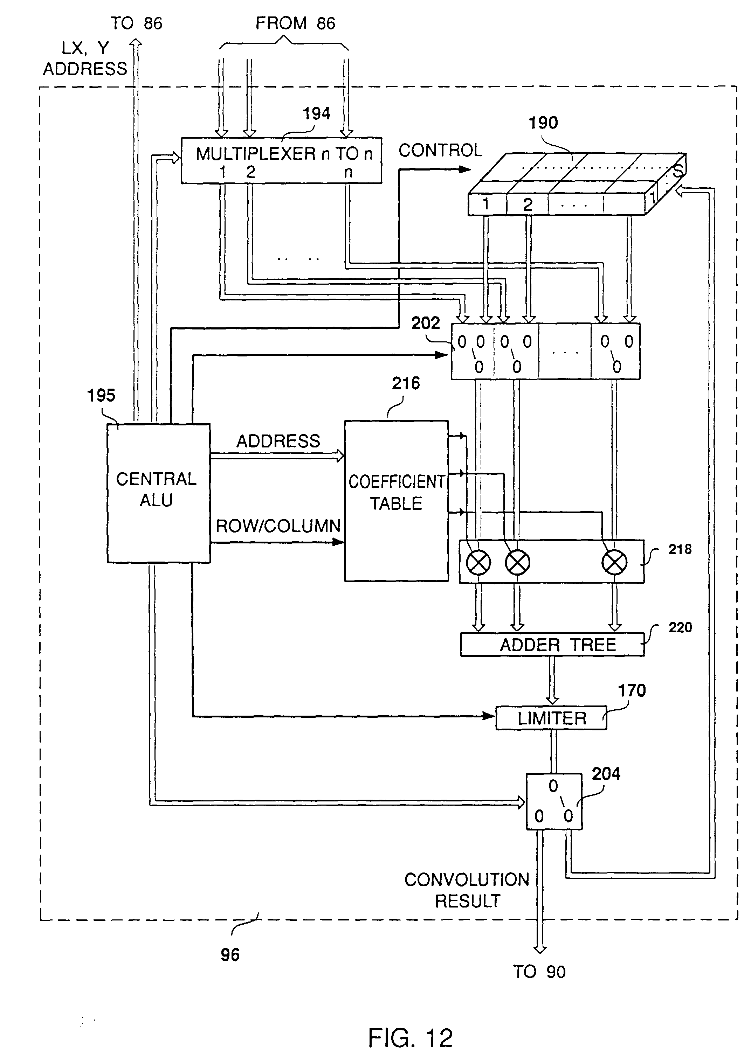

Reference is now made to Fig. 12, which illustrates a second preferred hardware implementation of scaler 96 of Fig. 8, comprising a modification of the apparatus of Fig. 10 which has the advantage of not requiring that a separate convolution unit, comprising buffer, multipliers, coefficient table, adders and ALU, be provided per dimension of the image to be processed. Instead, a single unit processes all dimensions of the image.

Fig. 12 generally resembles the embodiment of Fig. 10 except for the following two differences: First, the dual port buffer array 156 of Fig. 10 is replaced by a SIPO (serial in parallel out) shift register array 190. Second, an input multiplexer 194 is provided which provides cyclic permutations of the rows stored in rows buffer 86 of Fig. 8, thereby eliminating the need to rearrange either the row order in the buffer or the order in which the coefficients from the coefficient table are supplied, for each convolution process.

The apparatus also comprises a central ALU 195, a selector array 202 comprising n selectors, each controlled by the central ALU 195 and each having a column convolution position and a row convolution position; and a selector 204 controlled by the central ALU 195 and having a column convolution position and a row convolution position.

A preferred mode of operation of the apparatus of Fig. 12 will now be described. CT image data from five rows of the CT image arrive from row buffer 86 of Fig. 8 and is provided, via multiplexer 194 and selector array 202, to multipliers 218. Multiplexer 194 is operative to supply the appropriate rows in the appropriate order for the convolution window, by applying a suitable cyclic permutation to the output of row buffer 86 and by duplicating some of the rows of row buffer 86 as necessary, in the vicinity of the edges of the CT image.

Selectors 202 are in their column convolution position (as shown), namely, they are operative to select the inputs arrriving from the multiplexer 194 rather than "partial results" inputs arriving from SIPO array 190.

The five partial results are sequentially computed by multipliers 218 and full adder 220, using coefficients from coefficient table 216, and are trimmed by limiter 170. Selector 204 is in its column convolution position (as shown), namely it provides the information arriving from limiter 170 to the serial port of the SIPO array 190 rather than to selector 90 of Fig. 8.

When the five current partial results are present in SIPO array 190, they are simultaneously provided, at a suitable time as indicated by central ALU 195, to selector 202. Selector 202 is now in its row convolution position and therefore receives input from SIPO 190 rather than from multiplexer 194. The five partial results used to perform row convolution are operated upon by multipliers 218 and full adder 220, using coefficients from coefficient table 216, and the result is trimmed by limiter 170. Selector 204 is in its row convolution position, namely it provides the information arriving from limiter 170 to the selector 90 of Fig. 8, rather than to the serial port of the SIPO array 190.

Central ALU 195 is also operative to restore selectors 202 and 204 to their column convolution position, to change the position of multiplexer 194 and to extract new row information from rows buffer 86 of Fig. 8, thereby to allow another convolution cycle to begin.

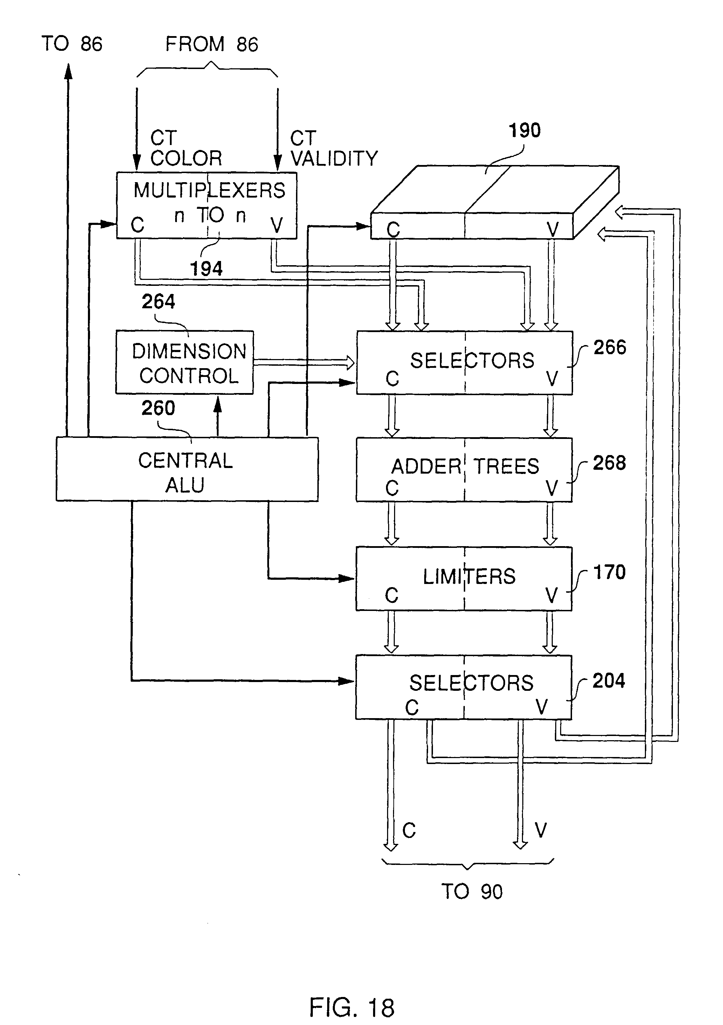

In accordance with a preferred embodiment of the apparatus, the input to the apparatus of Fig. 12 does not include the validity bit information coded by coder 84 of Fig. 8. The validity bit is typically provided to the scaler 98 of Figs. 8 and 18.

Central ALU 195 may be implemented using any suitable commercially available components, such as WS59032, commercially available from Wafer Scale, Fermont, CA, USA. Preferably, the components should be chosen such that a suitable level of computation accuracy is maintained and such that the accumulated location error is negligible.

It is appreciated that multipliers 218 and adders 220, which are typically the most costly components of the apparatus, are fully utilized, i.e. are generally never idle, thereby reducing the cost to performance ratio of the apparatus.

Coefficient table 216 contains as much information as do both coefficient tables 160 and 168 of Fig. 10, since it contains the coefficients to be used for both the column and the row convolutions. Coefficient table 216 may be implemented using any suitable commercially available high speed memory, preferably with a capacity of at least two pluralities (corresponding to the x and y directions) of 8 $(=2^3)$ by 5 words (assuming that the dimension of the convolution matrix is 5x5) of 12 bits each.

Coefficient table 216 is typically addressed by a 3 bit word provided by central ALU 195, and also by a one bit signal, also provided by central ALU 195, which indicates whether the row or the column coefficients are to be accessed. The address is determined by the fraction part of the location along the x axis, for row convolution, or along the y axis, for column convolution. Each address refers to a plurality of n words, typically 12 bits in width, which are output to the n multipliers in multiplier array 218. The number of bits in the address determines the accuracy of selection of the convolution coefficients.

The multiplier array 218 comprises a plurality of n multipliers, each preferably based upon commercially available integrated circuits such as the TRW2010, commercially available from TRW. The multiplier array receives 8 bit input from the multiplexer 194 via the selector 202, and also receives 12 bit input from the coefficient RAM 216. Typically, only 12 bits from the output of the multiplier array are utilized.

Referring back to Fig. 12, the limiter 170 preferably receives a bit of information from central ALU 195 indicating whether the apparatus is in its first, column convolution, stage of operation or in its second, row convolution stage of operation. This is because the range of the multiplier 218 is typically 12 bits, so that it is unnecessary for the limiter to trim to the output range value, which is typically 8 bits, unless the apparatus has completed its second, column stage of operation. Otherwise, it is sufficient to trim to 12 bits.

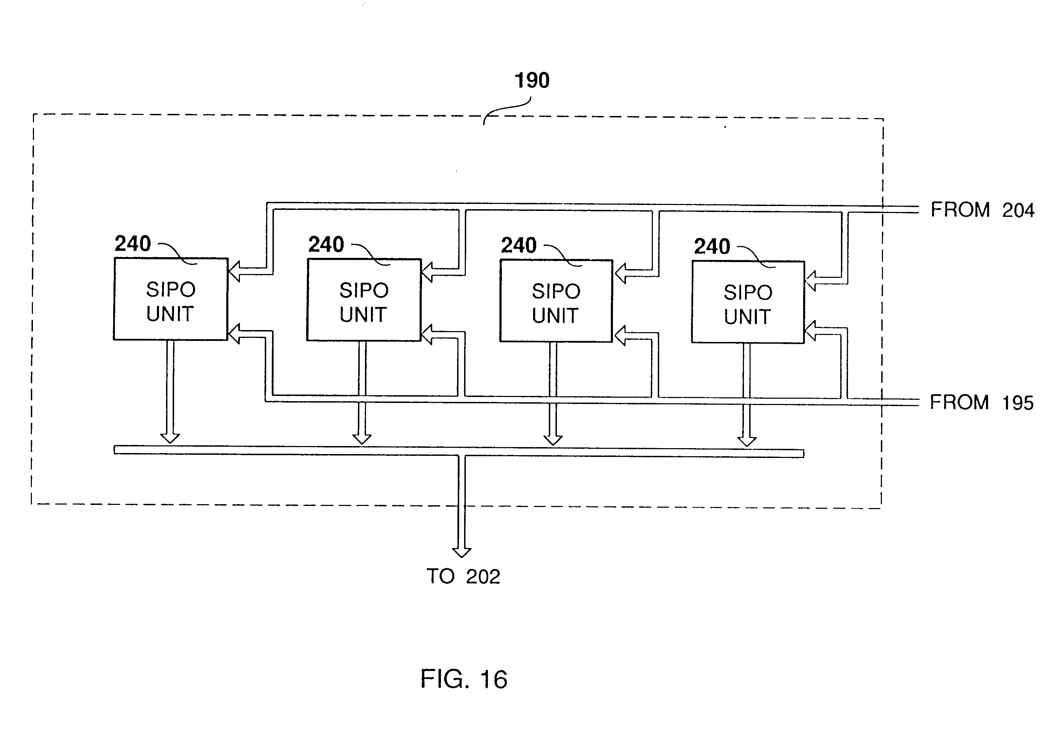

SIPO array 190, multiplexer array 194, adder tree 220 and selector 202 are described in detail hereinbelow, with reference to Figs. 16 - 17, 19 - 20, 14 and 15, respectively.

It is appreciated that the provision of a SIPO shift register array 190 has at least two important advantages, relative to a conventional row buffer such as the dual port buffer array 156 of Fig. 10.

    a. A particular feature of the apparatus of Fig. 12 is that the convolution cycles are generally continuous, in other words, it is generally not necessary to provide a delay between "adjacent" column convolution cycles or between "adjacent" row convolution cyles. The term " adjacent" refers to an operation which follows another operation. For example, if the CT:output resolution ratio is less than 1, two row convolution operations are sometimes performed one after the other on the same set of partial results (column convolutions), because the CT pixels are larger than the output pixels.

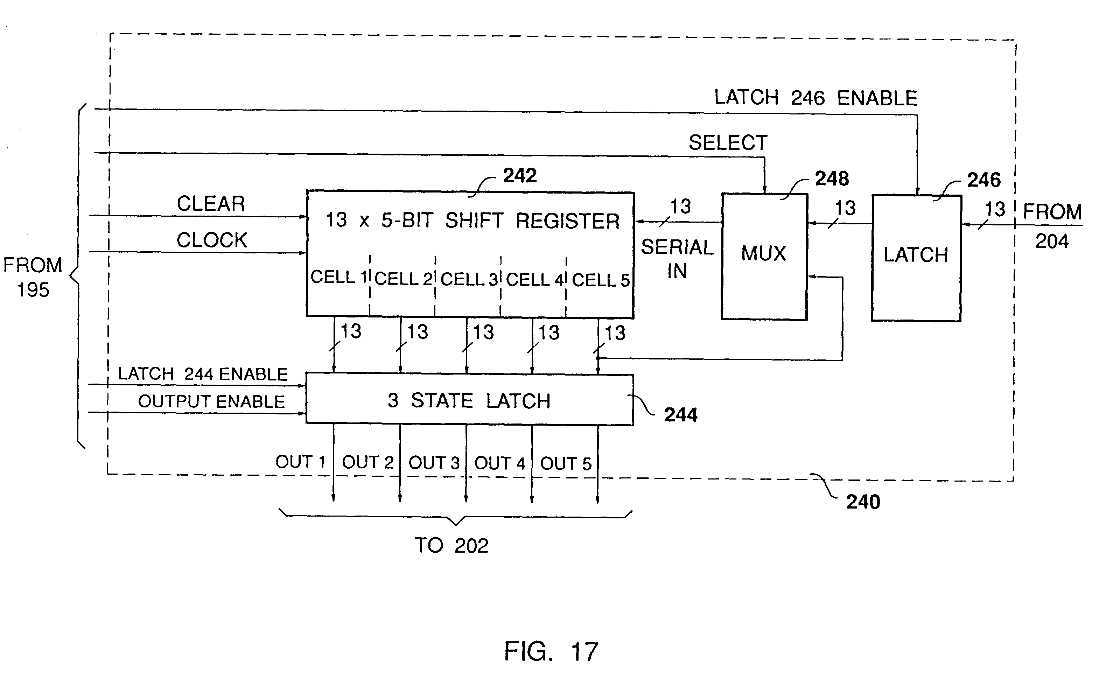

As a result, substantially all components of Fig. 12 of the circuit are normally operative and not idle. Nonetheless, partial results which are still needed are preferably never overwritten by newly computed partial results. The term "overwriting" is intended to refer to destruction or deletion of old data in a full storage device due to arrival of new data. This advantage is achieved by the particular structure of the SIPO shift register array, described below with reference to Figs. 16 and 17.

For example: if the resolution is being increased threefold, i.e. if the output resolution: CT resolution ratio is 3:1, three convolution operations are performed on the same five columns of CT pixels, corresponding to the three output pixels "superimposed" upon the central pixel of the middle column of CT pixels. Each convolution comprises the process of adding 5 column convolutions stored in SIPO 190, each weighted by an appropriate column coefficient arriving from coefficient table 216. Typically, the three sets of column coefficients used respectively for the three convolution operations differ, since the centers of the three respective output pixels occupy different positions along the y axis, as explained above.

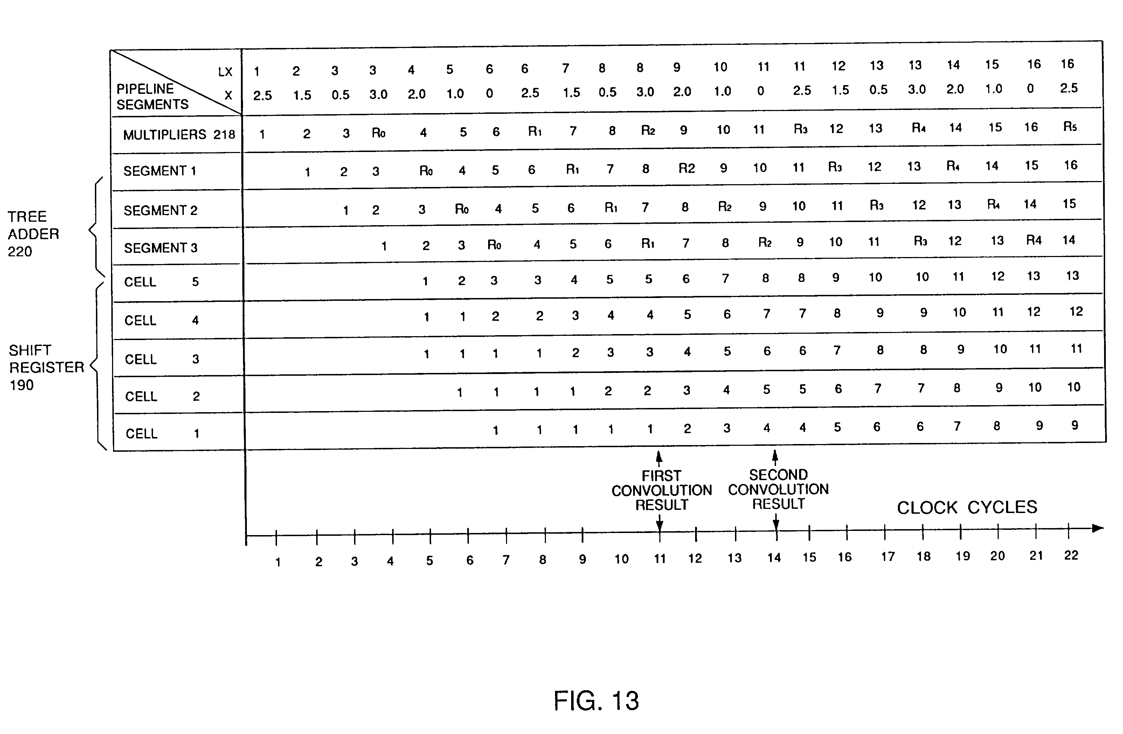

After the three convolution operations have been performed, the convolution window is "translated" forward a distance along the color image corresponding to the length of a single CT pixel, which, in the present example, corresponds to the length of three output pixels. Each of the 5 column convolutions (partial results) moves over one place in the SIPO shift register array 190 and the first computed column convolution is dropped from the shift register 242 of Fig. 17, being replaced by a newly computed column convolution at the other end of the SIPO shift register array 242. The convolution apparatus of Fig. 12 shifts from performing column convolutions to performing a row convolution. This advantage may be better understood with reference to the discussion of Fig. 13 below.

b. The order in which the partial results (column convolutions) are stored in the SIPO shift register array 190 corresponds to the order of the row convolution coefficients in the coefficient table 216.

For applications in which the data to be convolved comprises a representation of a color image having a plurality of separations, the convolution window is preferably translated only after all necessary operations have been carried out on all the separations, for the present convolution window.

For certain input:output data resolution ratios (the input resolution is also termed herein "CT resolution") and/or for certain relative alignments of the CT image data and the output image and/or in applications in which the data to be convolved comprises a representation of a color image having a plurality of separations, a fixed pipeline delay is required between switch 204 and SIPO array 190 in order to prevent a situation in which a row convolution operation would "overlap" a column convolution operation or vice versa, in other words, to prevent a situation whereby resources are simultaneously required for row convolution operations and for column convolution operations. The "overlap" problem may arise, for example, due to the uneven "pace" of at least one of the row and column convolutions. In other words, the number of partial results which are computed for a particular output pixel and are then reused for an adjacent output pixel may vary over output pixels as a result of the CT:output resolution ratio and/or the relative alignments of the CT image and the output image.

The pipeline delay may be implemented by adding at least one pipeline segment or cell betwen limiter 204 and SIPO array 190 and/or by adding at least one cell to each SIPO 240 of the SIPO array 190. The length of the pipeline delay is preferably fixed for the entire body of data.

Reference is now made to Fig. 13 which illustrates in table form a sample flow of data through the components of the convolution scaler of Fig. 12. In the illustrated example, the ratio of CT resolution to output resolution is 2.5:1, the number of separations is 1, and a 5 x 5 convolution window is employed.

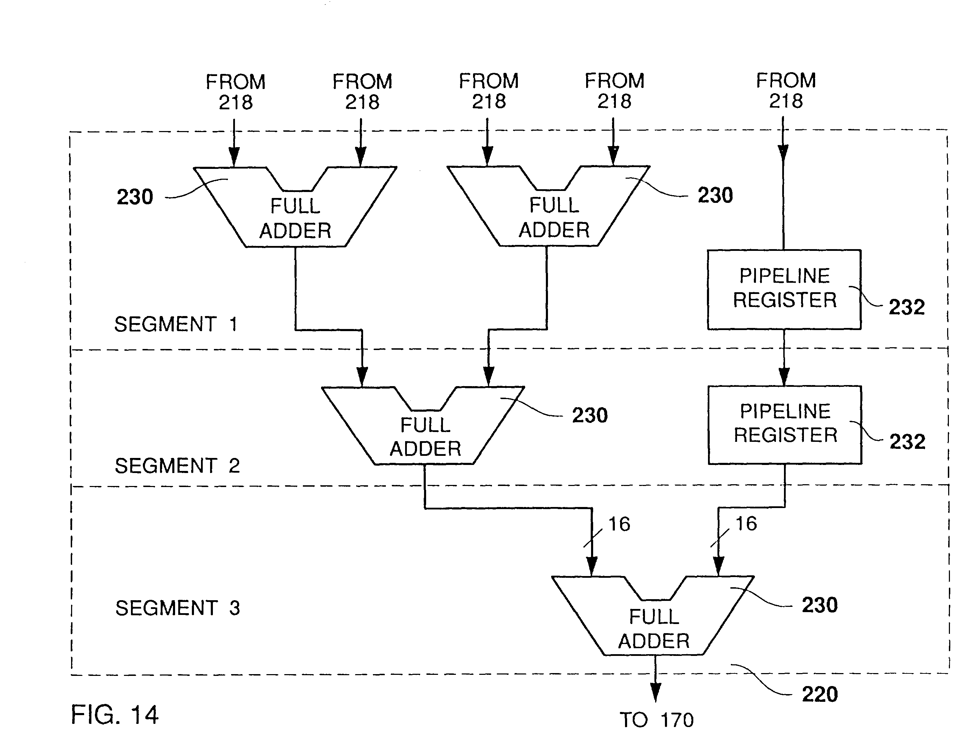

Pipeline segments within Fig. 12, which each delay data for one clock period, appear in the left hand column. They are: multiplier array 218; segments 1, 2 and 3 of the adder tree 220 (see Fig. 14); and cells 1 to 5 of the shift register array 190. The bottom row of Fig. 12 indicates the clock cycles. The top row of the heading indicates the value of a parameter LX, which parameter is discussed below. The bottom row of the heading indicates the value of a parameter X at each clock, the significance of which parameter is also explained below.

The natural numbers 1, 2, 3, ... within the table represent the 5 pixels or other units of data arriving from the five respective adjacent rows stored in rows buffer 86. The first arriving group of five pixels or data units is referenced 1. Group 2 of five pixels arrives after group 1, etc.

$R_0$ represents a delay or a "blank" pipeline segment. $R_i$, for all positive i, represents a pipeline segment which is utilized for a row convolution operation rather than for a column convolution operation. In general, row convolution is initiated after a time slot is provided at the last segment of the adder tree. For example, in clock 7, a time slot is provided at the last segment of the adder tree. This may be seen in Fig. 13, where the location of the table corresponding to segment 3 of the adder tree and to clock 7 is marked $R_0$. In the following clock period, clock 8, the first row convolution is initiated on the contents of the shift register, namely the five partial results of rows 1, 1, 1, 2 and 3. This requires that the multipliers 218 and subsequently, the adder tree 220, operate upon the partial results rather than on new data, and this is the reason why the time slot $R_1$ is provided.

As noted above, $R_1$ is performed on the partial results or column convolutions corresponding to pixel groups 1, 1, 1, 2 and 3, which are combined within the shift register at clock 7. $R_2$ is performed on the partial results corresponding to pixel groups 1 - 5, which are combined within the shift register at clock 10. $R_3$ is performed on the partial results corresponding to pixel groups 4 - 8, which are combined within the shift register at clock 14, and so on.

The flow of data for the first convolution operation, defining the first output pixel, will now be described with reference to the table: on the first clock, group 1 of five pixels from five adjacent rows arrives via rows buffer 86, multiplexer 194 and selector 202 to multiplier array 218 where each pixel is multiplied by a row coefficient from coefficient table 216.

On the second clock, group 2 of five pixels arrives at multiplier array 218 and group 1 continues to the first segment of the adder tree 220. On the third clock, group 3 of five pixels arrives at multiplier array 218 and groups 2 and 1 are in segments one and two of the adder tree 220 respectively. On the fourth to seventh clocks, the multiplier array 218 and the three segments of the adder tree are respectively "blank". It is noted that blank segments only occur prior to the first row convolution operation. For all subsequent row convolution operations i (i > 0), the segments corresponding to the above blank segments are utilized for the operations pertaining to row convolution i-1.

On the eighth clock, the multiplication step of row convolution $R_1$ occurs in the multiplier array 218. Row convolution 1 is "incomplete" in the sense that only three distinct rows, rather than five distinct rows, participate in the convolution.

On clocks 9 to 11, the five products (column convolution x column coefficient) are added. Therefore, the first convolution result is completed at clock 11.

The second convolution operations are initiated on clock 5 and the second convolution result is completed at clock 14. The flow of operation for the second convolution is generally the same as for the first convolution, except that some of the partial results computed for the first convolution remain in the shift register and are reused for the second convolution. In the present example, the reused partial results are those corresponding to pixel groups 1, 2 and 3.

Reference is now made to the second row of the heading of Fig. 13, referenced X, which indicates the value of a parameter X computed by ALU 195 and useful in controlling and sequencing the convolution operations within a given row. As seen, row convolution is initiated on clocks for which the value of X is less than 1. On those clocks, the value of X is incremented by x, which is the ratio of CT resolution to output resolution along the horizontal axis. In the present example, x = 2.5. On all other clocks, the value of X is reduced by 1.

Preferably, central ALU 195 also computes a parameter LX. The integer part of LX indicates the middle column of the convolution window, i.e. the column within which the central convolution pixel resides. LX is incremented by one on every clock for which X >=1.

X is also useful in selecting column coefficients for row convolution operations. Specifically, the fractional part of X is used by ALU 195 to access the coefficient table 216.

It is noted that a parameter Y is also employed by central ALU 195 for controlling the convolution operations between rows. The integer part of Y indicates the middle row of the convolution window, i.e. the row within which the central convolution pixel resides. Therefore, Y remains constant throughout the processing of any particular row. At the end of each row, Y is incremented by y, which is the ratio of CT resolution to output resolution along the vertical axis.

Y is also useful in selecting row coefficients for column convolution operations. Specifically, the fractional part of Y is used by ALU 195 to access the coefficient table 216.

Reference is now made to Fig. 14, which illustrates the full adder tree 220 of Fig. 10, constructed and operative in accordance with an embodiment of the present invention. As seen in Fig. 14, the full adder tree comprises a plurality of full adders based on commercially available integrated circuit full adders, such as the 74F283 commercially available from Philips, Eindhoven, Netherlands. In the present embodiment, the Fig. 14 full adder tree adds m=5 streams of input data.

Since 5 falls between the second and third powers of 2, a three-segmented full adder tree is provided, comprising four full adder trees. Suitable pipeline register elements 232 provide delays which "fill in" the full adder tree. The first segment adds two pairs of input data elements and provides the two sums to the full adder of the second segment, which adds them and provides the sum of the two sums to the full adder of the third segment. The fifth data element is delayed by the pipeline register elements 232 and is added to the sum of the two sums by the full adder of the third segment.

Analogous full adder trees can be constructed for other suitable values of m.

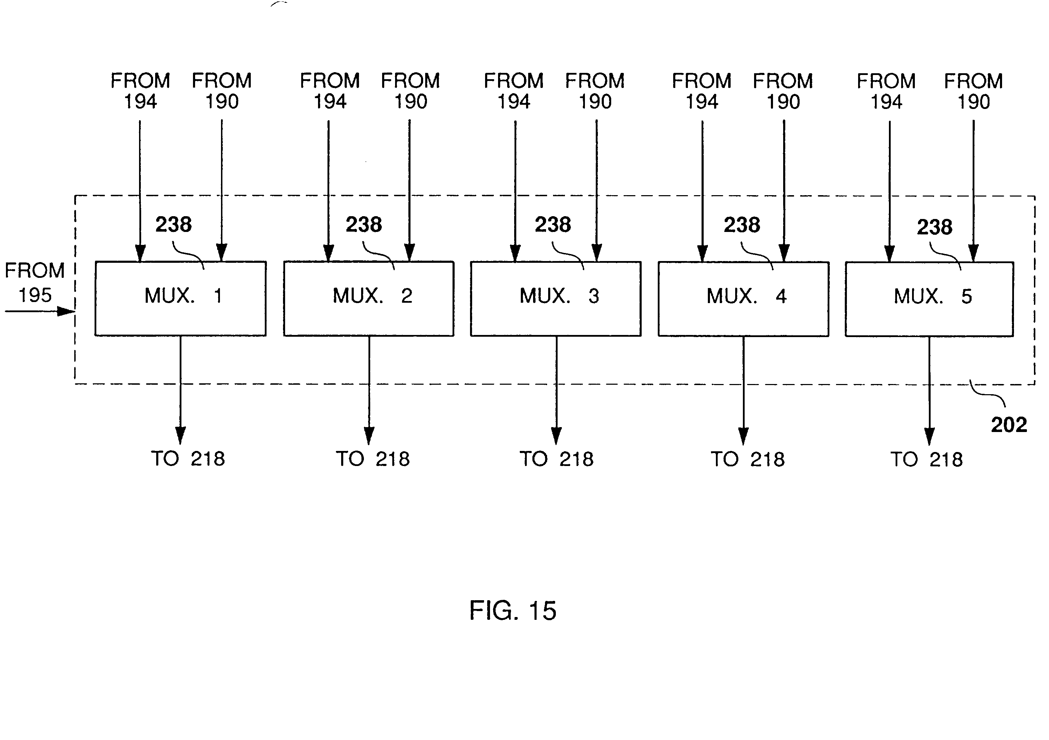

Reference is now made to Fig. 15 which is a block diagram of selector 202 of Fig. 12, constructed and operative in accordance with an embodiment of the present invention.

The selector 202 is operative to select between a first plurality of m streams of data arriving from multiplexer array 194 of Fig. 12 and a second plurality of m streams of data arriving from SIPO array 190. Selector 202 comprises an array of m multiplexers 238, each typically receiving an 8 bit stream of data from multiplexer array 194 and a 13 bit stream of data from SIPO array 190. In the illustrated embodiment, m=5, however, an analogous device may be constructed for any other suitable value of m. Multiplexers 238 may be commercially available integrated circuit multiplexers, such as the 74F157, commercially available from Philips.

Each multiplexer 238 typically selects one of the two inputs thereto and provides the selected signal as an output signal to multipliers 218 in accordance with a "select" signal provided by the sequencer 195 of Fig. 12. Since the second plurality of inputs arrives at multiplexer array 202 in 8 bits, the 8 bits are typically the LSB's and the remaining 5 bits of the multiplexer's inputs are grounded.

Reference is now made to Fig. 16 which is a block diagram of SIPO array 190 of Fig. 12. The SIPO array 190 is operative to process s=4 separations or less and preferably comprises 4 identical SIPO units 240 interconnected as shown.

Each SIPO unit 240 has an "output enable" channel controlled by central ALU 195. The SIPO unit 240 which receives a signal over the output enable channel is the unit which provides an output to selector 202.

Reference is made to Fig. 17 which is a block diagram of an individual one of SIPO units 240 of Fig. 16. The SIPO unit 240 comprises a 5 stage shift register 242 having a width of 13 bits. The SIPO unit also comprises a 3 state latch 244 between shift register 242 and selector 202 of Fig. 12. The latch 244 is operative to receive the output enable signal from central ALU 195. The latch 244 also receives a latch enable signal from central ALU 195 which enables the latch 244 to synchronize the outcoming signal from shift register 242 in relation to the other elements of convolution scaler 96 of Fig. 12, thereby to prevent premature overwriting of partial results data or pixel data.

The partial results which are loaded into the 13 bit wide serial input port of the shift register 242 arrive from selector 204 of Fig. 12 via a latch 246 and a multiplexer 248. The latch 246 is operative to receive a latch enable signal from central ALU 195 which enables the latch 246 to synchronize the incoming signal from selector 204 so as to prevent overwriting of stored data in shift register 242 until such data is no longer needed. The latch enable signal also results in the last column of the color image being stored in latch 246. The last column may thereby be provided in duplicate or triplicate to shift register 242. The duplication or triplication of column data within shift register 242 is intended to "fill in" the convolution window when the central column of the convolution window is too close to the edge of the color image.

The multiplexer 248 is operative to deal with data pertaining to the first few columns of the color image. The multiplexer receives a select signal from central ALU 195. The select signal indicates whether the muliplexer should supply the data in latch 246 to shift register 242, or whether the data most recently provided to shift register 242 should be duplicated therewithin. An analagous implementation may be employed to deal with data pertaining to the last few columns of the color image.

It is appreciated that central ALU 195 typically provides four of each of the following signals indicated in Fig. 17, one for each of the four SIPO units 240: latch 244 enable, output enable, latch 246 enable, and select.

Reference is now made to Fig. 18, which is a block diagram of averaging apparatus which is a preferred hardware implementation of the validity decoder 88 and the averaging scaler 98 of Fig. 8. It is appreciated that the apparatus of Fig. 18 is similar in many respects to the convolution scaler 96 of Fig. 12. Similar elements in Figs. 12 and 18 are identically numbered. However, the elements of Fig. 18 differ generally from the identically numbered elements of Fig. 12 in the following ways:

(a) Each element of Fig. 18 typically comprises two of the corresponding identically numbered element in Fig. 12.
(b) The elements of Fig. 18 may process a different number of bits, relative to the corresponding elements of Fig. 12.

The apparatus of Fig. 18 receives two inputs pertaining to the current CT pixel from rows buffer 86 of Fig. 8: the "validity bit", described above with reference to Fig. 8, to be termed herein the "V stream" of data, and the color value of the CT pixel, to be termed herein the "C stream of data". The output of the apparatus of Fig. 18, comprising V stream output and C stream output, is provided to selector 90 of Fig. 8. As explained above with reference to Fig. 8, the selector 90 employs the V stream in order to determine whether the output of scaler 96 or of scaler 98 will be selected. If the V stream output is 1 for all CT pixels in the convolution window, the CT data can be convolved and therefore the output of convolution scaler 96 is used. Otherwise, the output of averaging scaler 98 or the output of LUT averager 92 and LUT 100 or a combination of the two outputs, as explained above with reference to Fig. 8, is used.

Only valid CT pixels are summed by averaging scaler 98. Both the C data stream and the V data stream are summed. Since invalid CT pixels are not summed, the sum of the validity bits of the CT pixels at least partially overlapping each output pixel is exactly equal to the number of pixels which have been summed by scaler 98 to provide a color value for that output pixel. Therefore, the selector 90 divides the sum of the valid CT pixel color values computed by scaler 98 by the sum of validity bits (provided by the V stream), to obtain the "averaging" color value for the output pixel.

The apparatus of Fig. 18 comprises multiplexer 194, SIPO array 190, a central ALU 260, a dimension control unit 264, a selector array 266, an adder tree array 268, a limiter 170, a selector array 204.

Generally, the apparatus of Fig. 18 is constructed and operative similarly to the apparatus of Fig. 12, and therefore the discussion of various aspects of the apparatus of Fig. 12, such as pipeline delay, treatment of the edges of the image and overwriting issues is not repeated here. However, the following differences between the apparatus of Fig. 18 and the apparatus of Fig. 12 are noted:

All elements process the C and V streams in parallel.

Coefficient table 216 of Fig. 12 is replaced by dimension control unit 264, which limits the area of the color image used in the summing computation from the maximum allowed by the constraints of the hardware to the smaller area required for averaging.

Each multiplier 218 of Fig. 12 is replaced by a corresponding element of selector array 266, typically comprising one "and" gate per bit. Selector array 266 is operative to select only valid CT pixels for summing.

The adder tree unit 268 of Fig. 18 comprises two adder trees handling the V stream and the C stream respectively. Each adder tree may be implemented similarly to the adder tree illustrated in Fig. 14 hereinabove, except for the following differences: In the C stream tree, all inputs to all four adders carry 9 bits. In the V stream tree, all inputs to the two adders of segment 1 carry 3 bits. The outputs of the two adders of segment 1 are 4 bits and the output of the adder of segment 2 is 5 bits. The output of the V stream adder tree (the output of the adder of the third segment) is also 5 bits.

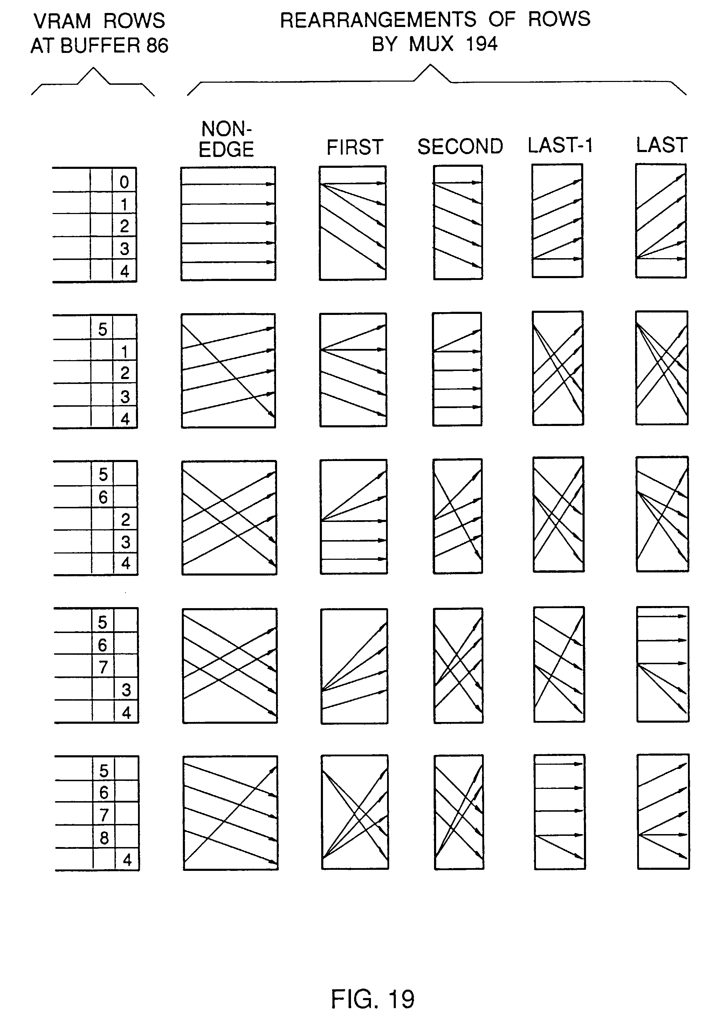

Reference is now made to Fig. 19 which conceptually illustrates aspects of the operation of multiplexer 194 of Figs. 12 and 18 in conjunction with the VRAM rows buffer 86 of Fig. 8. As explained above, a particular feature of input multiplexer 194 is that it provides cyclic permutations of the rows stored in rows buffer 86 of Fig. 8, thereby causing the row order of the rows arriving from rows buffer 86 to continually correspond to the order of the coefficients in coefficient table 216 of Fig. 12. Therefore, there is no need to rearrange either the row order in the buffer or the coefficient table, between convolution processes.

It is appreciated that the structure of the multiplexer 194 and of the rows buffer 86 may be useful in many other applications other than convolution applications, which also require that streams of data having a particular order be sequentially arranged in a sequence of cylic permutations of that order. Also, the present discussion pertains, for the purposes of illustration, to 5x5 convolution. However, the principles described here are relevant to convolution of any dimension.

According to a preferred embodiment of the present invention, the multiplexer 194 is also operative to deal with edge effects. Specifically, at the periphery of the page or color image, the data is not sufficient to define a convolution window. To solve this problem along the horizontal boundaries of the page, the multiplexer 194 employs an existing data row to replace non-existent data rows. To solve the analogous problem along the vertical boundary of the page, a plurality of cells of shift register 190 are filled in parallel with a single existing pixel value.

For example, if the current pixel is in the first column of the second row of the image, the multiplexer 194 may channel data row 1 to the data streams corresponding to the first and second rows of the convolution window. Data rows 2 to 4 may be channeled to the data streams corresponding to rows 3 - 5 of the convolution window. Within each of the rows, the first three cells of the shift register 190 are each filled with the color value of the first pixel of the row, as explained above with reference to Fig. 17. The fourth and fifth cells are filled with the color value of the second and third pixels of the row, respectively.

The rows buffer 86 preferably comprises a plurality of virtual "first in first out" storage units corresponding in number to the number of rows in the convolution window (five in the present example). Each storage unit preferably comprises a video RAM (VRAM). The rows of the color image are numbered 0, 1, 2, 3,.... Each storage unit of the video RAM is operative to store some of the rows of the color unit, as follows:

First storage unit: rows 0, 5, 10, ...
Second storage unit: rows 1, 6, 11, ...
Third storage unit: rows 2, 7, 12, ...
Fourth storage unit: rows 3, 8, 13, ...
Fifth storage unit: rows 4, 9, 14, ...

A VRAM rows buffer 86 constructed and operative in accordance with a preferred embodiment of the present invention is described below with reference to Fig. 24.

It is appreciated that this structure of the rows buffer 86 causes the relative order of the five available rows to vary. For example:

While the central pixel of the convolution window is in row 2 , the order of the available rows in the five storage units is 0, 1, 2, 3 and 4, as shown conceptually by the contents of the VRAM in the first row in Fig. 19.

While the central pixel of the convolution window is in row 3, the available rows are 1, 2, 3, 4, 5; however the order of the available rows at the serial output ports of the row buffer 86 storage units is 5, 1, 2, 3, 4, as shown conceptually by the contents of the VRAM in the second row in Fig. 19.

While the central pixel of the convolution window is in row 4, the order of the available rows is 5, 6, 2, 3, 4, as shown conceptually by the contents of the VRAM in the third row in Fig. 19.

While the central pixel of the convolution window is in row 5, the order of the available rows is 5, 6, 7, 3, 4, as shown conceptually by the contents of the VRAM in the fourth row in Fig. 19.

While the central pixel of the convolution window is in row 6, the order of the available rows is 5, 6, 7, 8, 4, as shown conceptually by the contents of the VRAM in the fifth row in Fig. 19.

While the central pixel of the convolution window is in row 7, the available rows are 5, 6, 7, 8, 9 (not shown). In other words, the relative order of the rows is the same while row 0 is being read as while row 5 is being read.

In general, the relative order of the rows while row 5R+r is being processed is the same as the relative order of the rows while row r is being processed, for integers R and r. Therefore, for example, the operation of the VRAM 86 and multiplexer 194 when the current row is row 5R+3 of the image, for any integer R, may be understood with reference to the second row of Fig. 19.

The multiplexer 194 is operative to permute the order of the rows such that the permuted order of the rows is always the same.

Referring specifically to Fig. 19, the first column from the left of Fig. 19 describes the five "relative orders" and locations of the available rows of row buffer 86 as explained above. For each illustrated row buffer in the first column of Fig. 19, the five numbers indicate the five available row numbers. The second column describes the cylic permutation introduced by multiplexer 194 for each of the "relative orders", for non-edge columns, i.e. for column 3 to column last-2, whose corresponding convolution window is complete and therefore contains no duplicated columns.

Columns 3 to 6 of Fig. 19 illustrate the cyclic permutation and row duplication functions performed by the multiplexer when rows are missing, which occurs when the current row is the first, second, next to last (last - 1) or last row of the color image or page. The third column illustrates the correspondence between the available rows in rows buffer 86 and the 5 rows or lines of the convolution window for pixels in the first row of the color image. The fourth column illustrates the correspondence between the available rows in rows buffer 86 and the 5 rows or lines of the convolution window for pixels in the second row of the color image. The fifth and sixth columns of Fig. 19 illustrate the correspondence between the available rows in rows buffer 86 and the 5 rows or lines of the convolution window, for pixels in the next to last and last rows of the color image, respectively.

Example: The operation of the VRAM 86 and the multiplexer 194 when the current row is row 5R+2 for any integer R will now be described with reference to the first row of Fig. 19. As seen in the first row of Fig. 19, the available rows in the five storage units of rows buffer 86 are respectively, 5R+0, 5R+1, 5R+2, 5R+3, and 5R+4. The multiplexer 194 operates with the "zero" permutation on these rows, and therefore, the input to the convolution apparatus remains in consecutive order. The rows of the convolution window, when the central pixel of the convolution is in rows 0, 1, last-2, last-1 and last, respectively, are as follows:

row 0: 0 0 0 1 2
row 1: 0 0 1 2 3
last-2 row: last-4 last-3 last-2 last-1 last
last-1 row: last-3 last-2 last-1 last last
last row: last-2 last-1 last last last

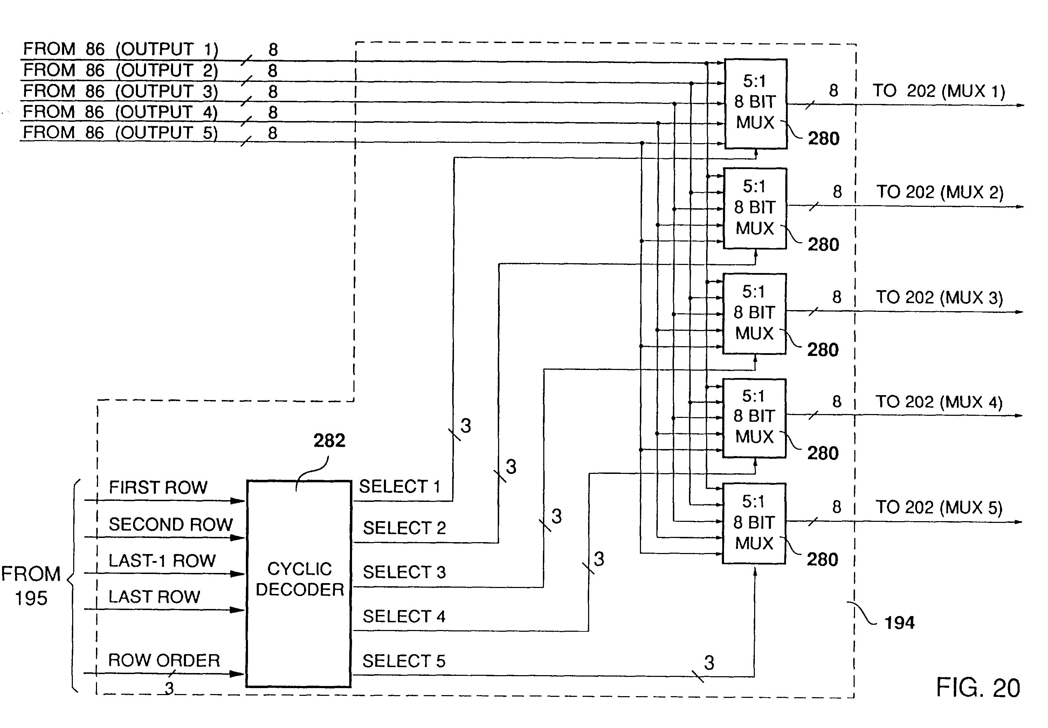

Reference is now made to Fig. 20 which is a block diagram of multiplexer array 194 of Fig. 12 constructed and operative in accordance with an embodiment of the present invention. The apparatus of Fig. 20 is a preferred implementation of the conceptual structure illustrated in Fig. 19. The multiplexer array 194 of Fig. 20 comprises five 5 to 1 eight bit wide multiplexers 280 each of which receives all five outputs from rows buffer 86, described in detail in Fig. 24, corresponding to the five rows of the convolution window. Each multiplexer 280 also receives a 3 bit select signal from a cyclic decoder 282 which selects the individual one from among the five rows input by the multiplexer 280 which is to be provided to the corresponding multiplexer of selector 202 of Fig. 12.

Cyclic decoder 282 is a combinatorical decoder which receives the following signals from central ALU 195:

ROW ORDER: a 3 bit signal of the relative order of the available rows of rows buffer 86 which are received by the multiplexers 280.

FIRST ROW, SECOND ROW: 1 bit signals respectively indicating whether the available row of rows buffer 86 having the lowest serial number is the first or the second row of the image.

LAST ROW, LAST -1 ROW: 1 bit signals respectively indicating whether the available row of rows buffer 86 having the highest serial number is the last or the next to last row of the image.

Cyclic decoder 282 is operative to provide the five select signals to the five multiplexers 280 respectively in accordance with the five signals arriving from central ALU 195, as described above with reference to Fig. 12.

In the illustrated embodiment, multiplexers 280 each interface identically with the five incoming signals from rows buffer 86 and the incoming signals are not permuted before they arrive at the multiplexers 280. Instead, the cyclic permutations of the incoming signals are determined by the select signal provided by decoder 282. Alternatively, however, the cyclic permutations may be provided by having the five multiplexers each interface with the five incoming signals from rows buffer 86 so as to permute the incoming signals. In other words, the signals arriving at the first, second, third, fourth and fifth multiplexers may be respectively permuted in accordance with the cyclic permutations illustrated in the first, second, third, fourth and fifth rows of the second, "non-edge" column of Fig. 19. In this alternative, the select signal of the cyclic decoder is only operative to determine the "deviations" from the cyclic permutations which are necessary to deal with the edges of the color image, as explained above with reference to the last four columns of Fig. 19.

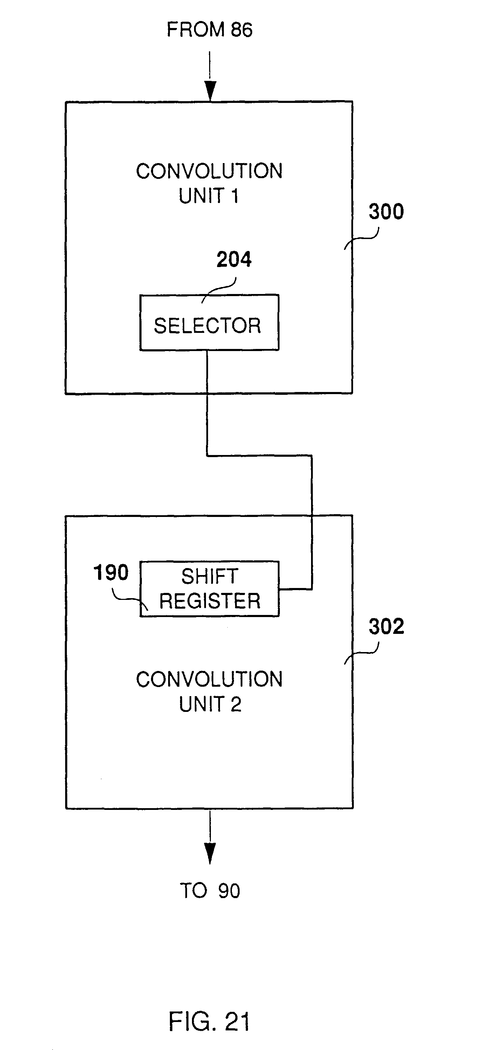

Reference is now made to Fig. 21, which is a block diagram of a pipeline cascaded implementation of scaler 96 of Fig. 8. According to a preferred embodiment of the present invention, several convolution scalers of the type shown and described in Fig. 12 may be combined in order to increase speed of processing. Fig. 21 illustrates use of pipeline cascading. Pipeline cascading is a known acceleration technique and is described in Computer Architecture and Parallel Processing, Hwang and Briggs, McGraw Hill, 1984.

In Fig. 21, a first convolution unit 300, which may be substantially identical to the convolution scaler 96 of Fig. 12, performs column convolutions and outputs, via its selector 204, to the shift register 190 of a second convolution unit 302 which may be substantially identical to first convolution unit 300. The second convolution unit 302 is operative to perform row convolutions on on the output of the first convolution unit 300.

Alternatively or in addition to pipelined processing, the processing can be speeded up by parallel execution of the convolutions on each of the typically three or four separations of the image by providing a convolution unit, or a pair of convolution units as illustrated in Fig. 21, for each separation. Parallel cascading is described in Computer Architecture and Parallel Processing, Hwang and Briggs, McGraw Hill, 1984, the disclosure of which is incorporated herein by reference.

According to an embodiment of the present invention, more than one convolution unit 300 and/or more than one convolution unit 302 may be provided. The ratio of the number of convolution units 300 to the number of convolution units 302 is a function of the ratio of the input resolution to the output resolution.

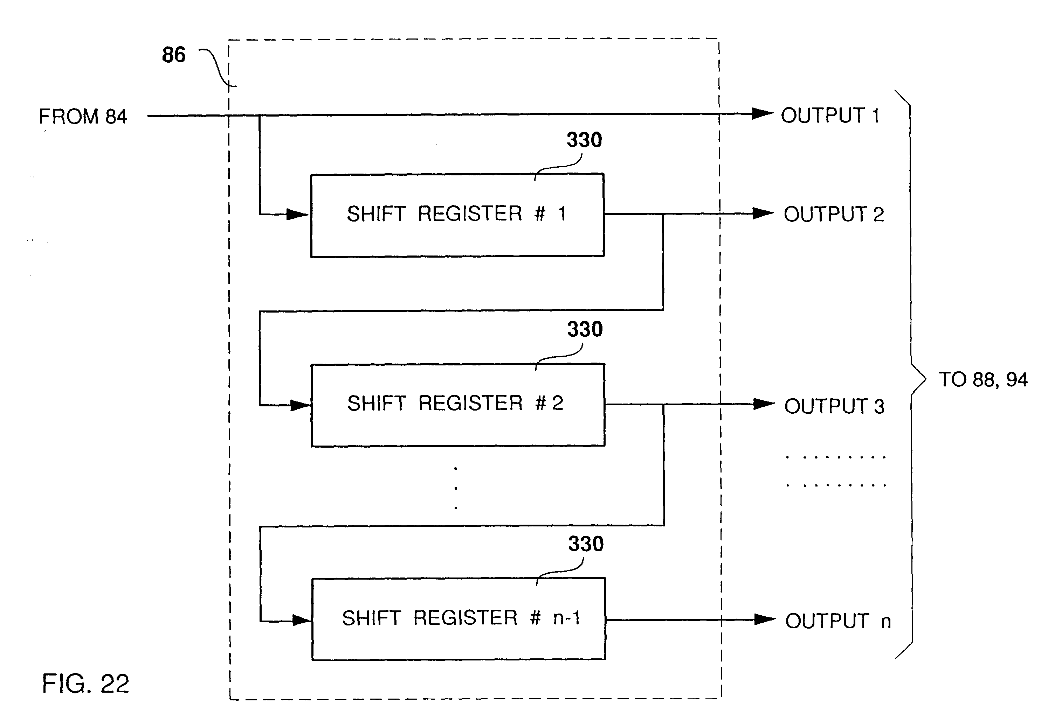

A number of alternative embodiments for implementing rows buffer 86 of Fig. 8 will now be shown and described, with reference to Figs. 22 - 24. The input to each of the row buffers of Figs. 22 - 24 is preferably a stream of CT pixels, each including a validity bit provided by validity bit coder 84 of Fig. 8.

Reference is now made to Fig. 22, which is a block diagram of rows buffer 86 of Fig. 8 constructed and operative in accordance with a first embodiment of the present invention.

The rows buffer 86 comprises an array of n-1 shift registers 330, operatively associated with one another as shown. Each shift register stores a row of the color image. The input stream to the shift register array is split into n output streams, each stream being delayed relative to the next by a single row length of the image. An n by m window is defined by examining m pixels in each of the n streams. Since shift registers are relatively expensive per bit, providing a relatively large number of registers, each large enough to store an entire row of the image, may not be optimal in terms of cost.

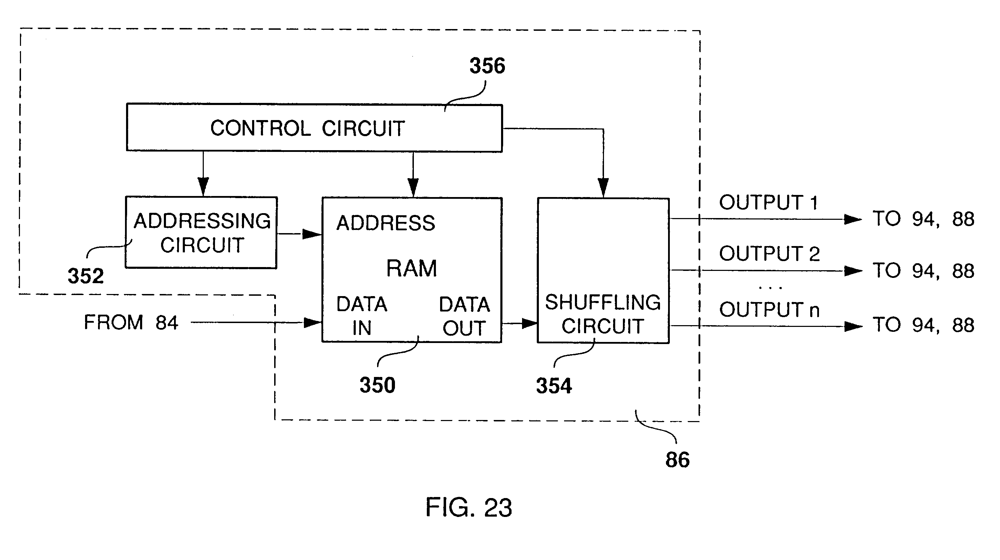

Reference is now made to Fig. 23, which is a block diagram of a rows buffer constructed and operative in accordance with a second embodiment of the present invention.

The rows buffer of Fig. 23 is based upon a RAM 350 and peripheral circuits preferably including an addressing circuit 352, a shuffling circuit 354 and a control circuit 356. The peripheral circuits are provided in order to allow the RAM to simulate the operation of an array of shift registers such as the array of Fig. 22. Although RAMs are relatively inexpensive per bit, the peripheral circuits are relatively cumbersome and expensive.

Reference is now made to Fig. 24, which is a block diagram of a rows buffer constructed and operative in accordance with a third embodiment of the present invention which is based upon a video RAM array 400 and which takes advantage of the fact that video RAMs have some of the properties of both RAMs and of shift registers. Any suitable commercially available video RAMs can be used to implement the structure of Fig. 24 such as TMS44C251, commercially available from Texas Instruments, Dallas, Texas, USA. The rows buffer shown and described in Fig. 24 is operative to re-shuffle an input stream of data arranged in rows into data suitable for processing by n x m convolution apparatus. Preferably, the rows buffer of Fig. 24 is also operative to convert one data format to another, such as a line-interleave to pixel-interleave conversion, as required. The rows buffer of Fig. 24 can also serve as a general purpose dual buffer for CT or LW data.

According to one embodiment of the present invention, the array 400 of video RAMs comprises a plurality of n video RAM units 402 arranged along a single bus, where n is the number of rows of the convolution window. A typical value for n is 5. Each video RAM unit 402 comprises 2 four bit wide VRAMs, for the 8 bit color data of each row and a third VRAM, for the validity bit of each row.

Each video RAM unit 402 has a random access input port and a serial output port. The rows buffer 86 also comprises a control circuit 408 which is operative to send a single address and "shift-out" signal to each of the video RAMs, and to cyclically send an "enable" signal to the random input of only one of the video RAM units. In other words, only one of the video RAM units is initially enabled, so only that video RAM unit receives input data. The control circuit 408 also comprises a refresh mechanism (not shown) for the video RAM. Once a complete row has been loaded onto a video RAM unit 402, a second video RAM unit 402 is enabled and a row is loaded thereon, and so on.

Each row loaded into a particular video RAM unit is subsequently transferred to the shift registers forming part of the video RAMs within that video RAM unit and is then shifted out serially. As the row is shifted out, other data may simultaneously be loaded at the random port of the VRAM unit, thereby increasing efficiency. Since the shift out needs only one clock after block initialization, the address may be used mainly for the random ports.

A preferred mode of operation of a video RAM rows buffer constructed in accordance with the embodiment of Fig. 24 and being operative in accordance with a cyclic permutation introducing multiplexer is described above with reference to Fig. 19.

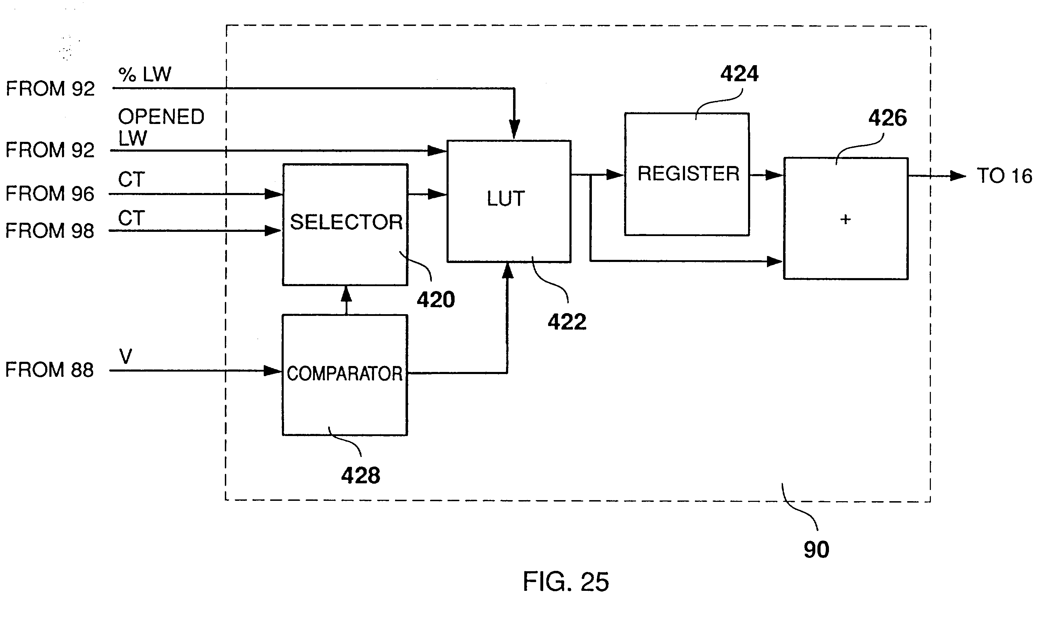

Reference is now made to Fig. 25, which is a block diagram of selector 90 of Fig. 8. As described above, selector 90 is operative to select a value for the output pixel from among the following: the opened LW output of averager 92, the output of scaler 96, the output of scaler 98, or some combination of the above. Selector 90 typically assigns a value to the pixel being processed as a function of the "validity" signal output of decoder 88 and the % LW output of averager 92, as follows:

If the output of the decoder is 25 (for 5 x 5 convolution), then the convolution performed by scaler 96 is valid and the output of scaler 96 is assigned to the present pixel.

If the output of the decoder is less than 25, then:

if the LW percentage signal (%LW) is zero, the output of scaler 98 is assigned to the present pixel;
if the LW percentage signal is 100, the LW value output by averager 92 is assigned to the present pixel;
if the LW percentage signal is between 0 and 100, the value assigned to the present pixel is some combination of CT and LW.

The selector 90 typically comprises selecting means 420, a LUT 422, a register 424, an adder 426 and a comparator 428, interconnected as shown. The sum of validity bits arriving from validity decoder 88 of Fig. 8 is compared with 25 by comparing means 428. Comparing means 428 then provides a suitable binary signal to selecting means 420. The binary signal is the criterion used to select a CT stream from among the two CT streams arriving from scalers 96 and 98, the LW stream, or a combination thereof, as explained above with reference to Fig. 8. The selected output stream, the %LW signal received from averager 92 and the validity signal received from comparator 428 together address the LUT 422. The V input to the comparator 428 is used for extracting data from LUT 422, which data is normalized according to the number of valid participating CT pixels as explained above with reference to Fig. 18.

The LUT 422 contains two types of data, computed by the following two equations respectively:

$$data1 = 0.01 \times LW \times \%LW$$

$$data2 = 0.01 \times CT \times (100\text{-}\%LW)$$

where CT is the % dot signal arriving from the selected one of scaler 96 or scaler 98, respectively. The LW % dot signal and %LW signal arrive from averager 92 via LUT 100 if provided.

Register 424 and adder 426 are operative to receive a data1 and a data2 value, add them and output the sum. This is done by extracting the data1 value from LUT 422 and storing it in register 424. Subsequently, the data2 value is extracted from LUT 422 and added to the data1 value in register 424 by the adder 426.

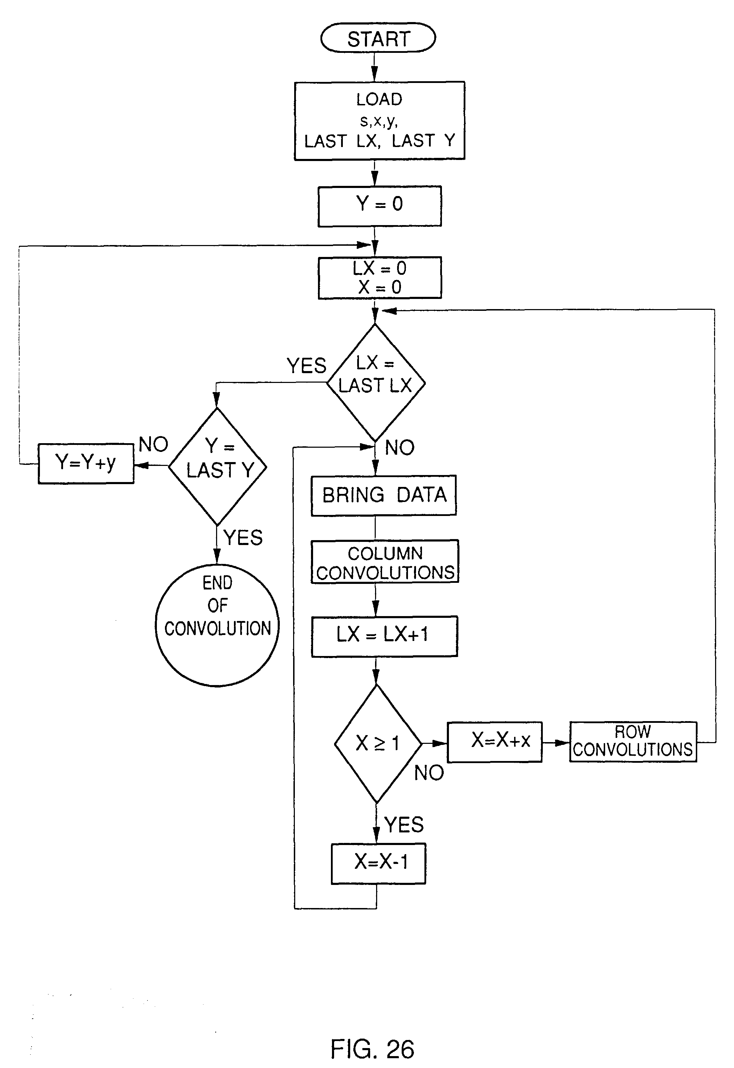

Fig. 26 is a flow chart describing a method for control of two dimensional convolution, useful in implementing ALU 195 of Fig. 12.

As shown, the first step is loading of the following parameters: x, y, last LX, last Y and s, where:

x is defined as the ratio between the CT input resolution along the horizontal axis and the output resolution along the horizontal axis. For example, in Fig. 13, x = 2.5;
y is defined as the ratio between the CT input resolution along the vertical axis and the output resolution along the vertical axis;
last LX = the number of pixels per row;
last Y = the number of rows in the color image or page; and
s = the number of separations of the color image, for color image applications.

The following variables are then initialized: Y, LX, X; where:

Y indicates the location of the current CT pixel, relative to the current output pixel, along the vertical axis and controls row convolution operation. The integer part of Y indicates the middle row of the convolution window, i.e. the row within which the central convolution pixel resides. Therefore, Y remains constant throughout the processing of any particular row. At the end of each row, Y is incremented by y, which is the ratio of CT resolution to output resolution along the vertical axis. Y is also useful in selecting row coefficients for column convolution operations. Specifically, the fractional part of Y is used by ALU 195 to access the coefficient table 216; and

LX indicates the location of the current CT pixel, relative to the current output pixel, along the horizontal axis and controls column convolution operation. The integer part of LX indicates the middle column of the convolution window, i.e. the column within which the central convolution pixel resides. LX is incremented by one on every clock for which X >=1; and

X, as described above with reference to Fig. 13, is useful in controlling and sequencing the convolution operations within a given row. As seen in Fig. 26, row convolution is initiated on clocks for which the value of X is less than 1. On those clocks, the value of X is incremented by x. On all other clocks, the value of X is decremented by 1. X is also useful in selecting column coefficients for row convolution operations. Specifically, the fractional part of X is used by ALU 195 to access the coefficient table 216 of Fig. 12.

While LX is less than "last LX", the current row is convolved, pixel by pixel. For each pixel, data for all four separations is brought; column convolution is performed on the current pixel, as indicated by LX, for all separations; LX is incremented by 1; row convolution is performed on the accumulated partial results for all separations if X is greater than 1; and the value of X is updated as explained above.

When LX = last LX, the entire current row has been convolved. If LY = last LY, the current row is the last row and the convolution of the image is complete. If LY is less than "last LY", Y is updated to refer to the next row and convolution of the next row is initiated.

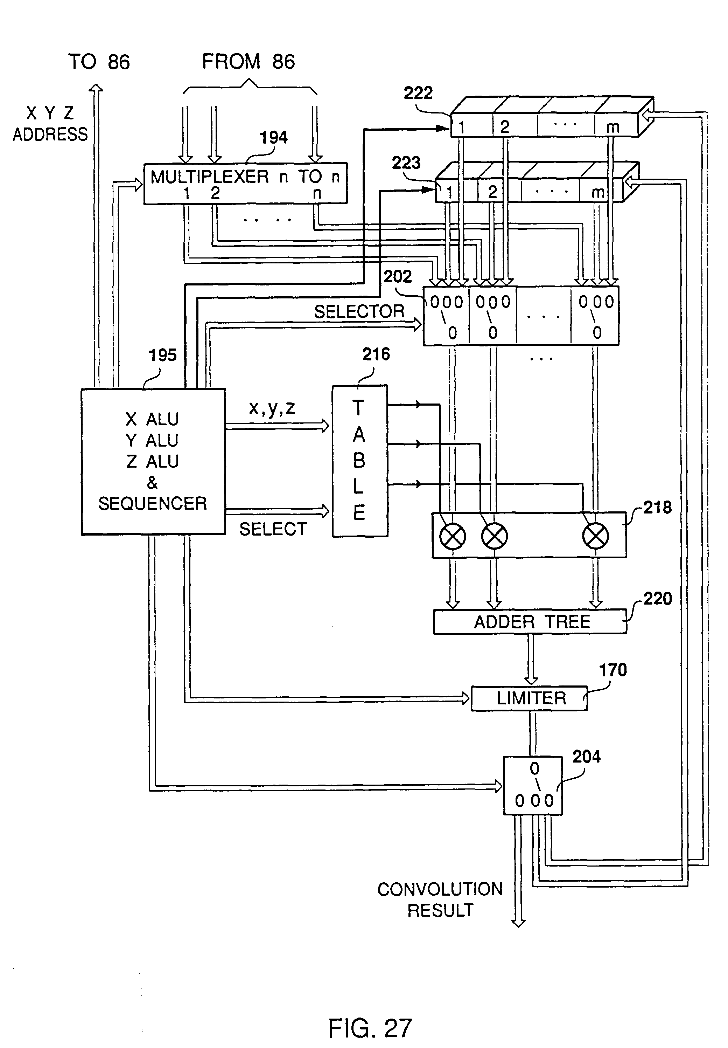

Reference is now made to Fig. 27, which is a block diagram of a three dimensional convolution scaler which is an extension of the two dimensional convolution scaler of Fig. 12. It is appreciated that the principles by which the apparatus of Fig. 12 is expanded to provide Fig. 27 are general and are useful in converting a d dimensional convolver to a d+1 dimensional convolver. To convert the two dimensional convolver of Fig. 12 to the three dimensional convolver of Fig. 27, the following modifications are made:

a. A shift register 222 is added, which is operative to store row convolutions, which are now partial results rather than being final results. Shift register 222 may be generally identical to the shift register 190 of Fig. 12. Shift register 190 is replaced by a shift register array 223 which is five times larger than the shift register 190, in order to allow column convolutions to be stored for five values of z, the third dimension. In other words, shift register 223 preferably comprises an array of five shift registers, each of which may be generally identical to the shift register 190, and each of which corresponds to a value of z.

b. Multiplexer 202 is operative to multiplex 3 to 1, rather than 2 to 1 as in Fig. 12. Alternatively, multiplexer 202 may be a 2 to 1 multiplexer and the selection between shift register units 222 and 223 may be in accordance with output enable signals arriving from the control sequencer 195.

c. Coefficient table 216 is operative to store the new axis coefficients as well as row coefficients and column coefficients.

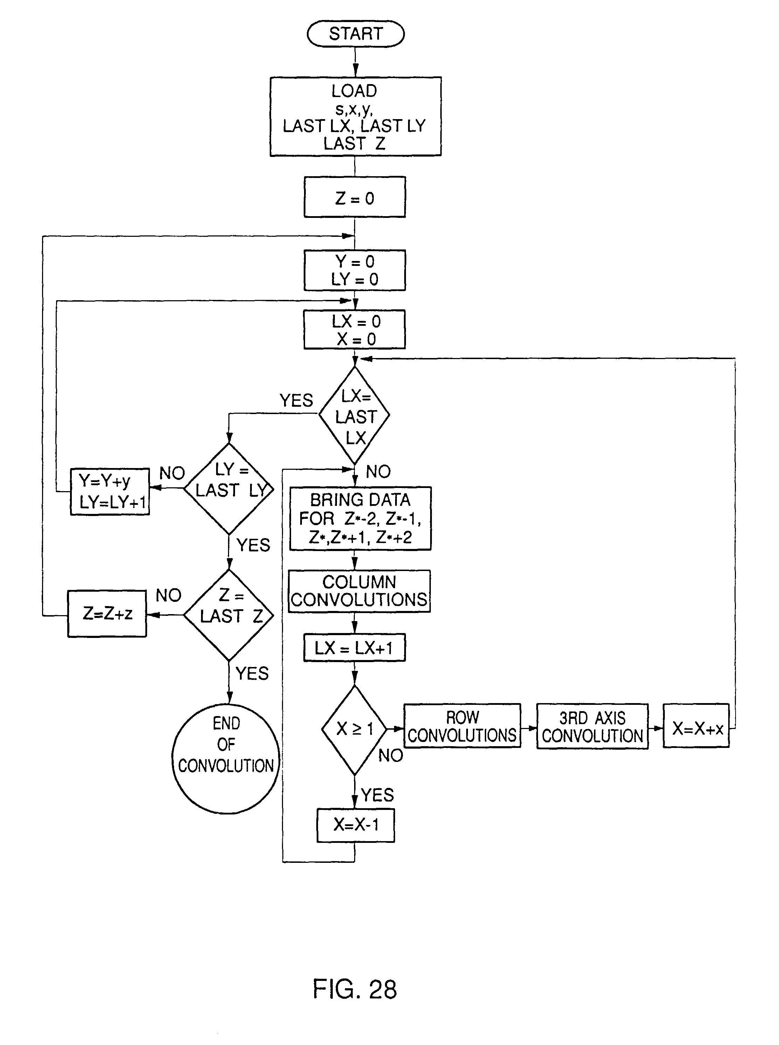

d. Suitable modifications are made in central ALU 195, to accomodate the new dimension or z axis. An algorithm useful in implementing central ALU 195 for the embodiment of Fig. 27 is presented in the flowchart of Fig. 28. Central ALU 195 may be based upon a WS59032 component, commercially available from Wafer Scale.

e. The switch 204 is a three position switch rather than a two position switch as in Fig. 12. Alternatively, switch 204 may be a two position switch and the selection between shift register units 222 and 223 may be in accordance with suitable addressing signals arriving from the control sequencer 195.

The number of multipliers need not increase as the dimension of the apparatus is increased, and may remain n, the number of pixels along the first axis of the convolution window. The convolution window is now a three dimensional array.

Generally, the apparatus of Fig. 27 is constructed and operative similarly to the apparatus of Fig. 12, apart from the differences discussed above, and therefore the discussion of various aspects of the apparatus of Fig. 12, such as pipeline delay, treatment of the edges of the image and overwriting issues is not repeated here.

Reference is now made to Fig. 28 which is a flow chart illustrating an algorithm useful in implementing central ALU 195 for the embodiment of Fig. 27. The three dimensional algorithm of Fig. 28 is more clearly understood by comparison to the two dimensional algorithm of Fig. 26.

The algorithm of Fig. 28 is generally similar to the algorithm of Fig. 26, except for the following differences:

A variable Z is used to indicate the position along the third dimension or z axis.

A parameter z is defined as the input:output resolution along the third dimension and is analogous to x and y as defined above with reference to Fig. 26.

A parameter "last Z" is defined. "Last Z" is the number of positions along the third axis or z dimension.

A parameter "last LY" is defined which is the number of positions along the second axis or y dimension. In Fig. 26, this parameter was called "last Y".

The variable Y which is useful for controlling the convolution operations along the second dimension is defined analogously to the variable X which is useful for controlling the convolution operations along the first dimension and which is discussed above with reference to Fig. 26.

The "bring data" step in Fig. 26 comprises the step of bringing data for a single column convolution. The "bring data" step in Fig. 28 comprises the step of bringing enough data for a single column convolution for each of five positions along the third axis. These positions are termed Z*-2, Z*-1, Z, Z*+1, Z*+2 where Z* is the integer part of Z and indicates the central position, along the third dimension, of the current convolution window.

The column convolution step and the subsequent row convolution step are then carried out for the five different positions along the third axis, thereby to provide 5 row convolution results. The row convolutions are now partial results which may be stored in shift register array 222 of Fig. 27. Z convolution is then carried out on the 5 row convolution results.

Reference is now made to Fig. 29, which illustrates in conceptual form color image processing apparatus for color processing of an image represented in a color coordinate system such as the CMYK coordinate system or, alternatively the RGB coordinate system or any other suitable color coordinate system.

The color processing apparatus of Fig. 29 forms a preferred embodiment of a color processing unit such as the color processing unit 12 of Fig. 1 or unit 1014 of Fig. 41. The color processing apparatus is general and may be employed to introduce substantially any suitable color transformation to the color image, such as d dimensional color transformations, where d=1, 2, 3 or 4.

For example, the color processing apparatus may preferably be employed to input a representation of a color image, and to output another representation of a color image which, when printed by a first given color printing device, will appear substantially identical to the input representation printed on a second given color printing device, which may or may not be identical with the first color printing device.

Preferably, the color processing apparatus of Fig. 29 may also be employed for converting color values in a first color coordinate system such as RGB to color values in a second color coordinate system such as CMYK.

Preferably, the color processing apparatus of Fig. 29 may also be employed for changing the amount of black colorant provided. Conventional black removal and addition techniques are discussed in the following documents,

Johnson, T. "The application of printing specifications to gray components replacement", TAGA Proceedings, 1988, p. 502; and

J. A. C. Yule. Principles of Color Reproduction, New York: Jon Wiley & Sons, 1967.

Preferably, the color processing apparatus of Fig. 29 may also be employed in color data communications applications, in order to convert data in a particular format to data in another format, such as a standard format which it is desired to adopt.

Preferably, the color processing apparatus of Fig. 29 is also useful for editing color images. In particular, transformations which it is sought to apply to the color image being edited may be applied to one of the LUTs of Fig. 29, such as LUT 452, instead. Application of the transformation to the LUT rather than to the color image results in relatively high processing speed.

The color processing apparatus of Fig. 29 also preferably enables a correction which was specified by an observer of a final image, such as an image viewed on an output device, to be suitably implemented on a precursor of the final image. For example, assume that a customer observing a final image on a proofer requests that 5% be added to the yellow separation or component. A preferred method for doing this is to construct a LUT which represents the relationship between the final image and the precursor image, i.e. which represents the inverse of the color transformations which produced the final image from the precursor image. The value with the 5% addition is then passed through the LUT, and the output value will be the desired value of the yellow component of the precursor image. Generally, the output value is not the original precursor image value plus 5%.

The color processing apparatus of Fig. 29 may also preferably be employed to provide a reproduction of the color image which resembles a target representation except that certain selectable modifications have been made on the reproduction. One criterion for identical appearance of two analog representations of a color image is that the two representations, when read by a given color reading device, will yield substantially identical digital representations of the color image. This criterion may or may not result in analog representations which appear substantially identical to the human eye, depending on the extent to which the characteristics of the color reading device resemble the color reading characteristics of the human eye. Therefore, it is sometimes desirable to correct a reproduction of an analog representation of a color image, derived using a color reading device as reference, so as to compensate for the differences in the color reading characteristics between the color reading device and the human eye.

The above applications and other applications are discussed in detail below and in a coassigned Israel Patent Application, the disclosure of which is incorporated herein by reference. A copy of this document is appended hereto and is referenced Appendix C.

The color processing apparatus of Fig. 29 may receive color image data from a suitable input device such as a FIFO, and may output to a suitable output device such as a FIFO.

The color image data processed by the apparatus of Fig. 29 may be 4 dimensional, such as CMYK data. However, it is appreciated that the color image data may in fact have any other suitable number of dimensions such as three dimensions.

The color processing apparatus of Fig. 29 typically comprises a first LUT array 440 comprising four one-dimensional LUTs, a 4 x 4 matrix 442, first limiting means 444, inverting means 446, multiplying means 448, a second LUT array 450 comprising four one-dimensional LUTs, a four-dimensional LUT 452, second limiting means 454, and a third LUT array 456 comprising four one-dimensional LUTs.

It is appreciated that many modifications of the above structure are possible. In particular, adjacent LUTs/matrices may be united into a single LUT/matrix.

Preferably, a plurality of suitably arranged exits and bypasses is provided (not shown) to allow only certain portions of the processing apparatus to be used in applications where this is desired. A preferred bypass and exit structure comprising 4 exits and 2 bypasses is as follows, it being appreciated that any suitable bypass and exit structure may be substituted therefor:

## Exits:

| | between | and | Function |
|---|---|---|---|
| 1. | LUT 440 | Matrix 442 | use one 1D LUT |
| 2. | Limiter 444 | Inverter 446 | use 1D LUT and matrix |
| 3. | Multiplier 448 | LUT 450 | use 1D LUT, matrix & black multiplication |
| 4. | Limiter 454 | LUT 456 | skip last 1D LUT |

## Bypasses:

|  | from | | | to | | |
|---|---|---|---|---|---|---|
| | between | and | | between | and | |
| 1. | LUT 440 | Matrix 442 | | Limiter 444 | Inverter 446 | |

Bypassed unit: Matrix multiplication

| 2. | Limiter 444 | Inverter 446 | Multipliers 448 | LUT 450 |

Bypassed unit: Black multiplication

Four examples of functions which it may be desired to implement using the apparatus of Fig. 29, and how they may be implemented using the above exit and bypass structure, are as follows:

1. <u>1D</u> <u>LUT</u> <u>only</u>: Use bypass 1, bypass 2, exit 3.
2. <u>Color</u> <u>correction</u> <u>without</u> <u>matrix</u> <u>multiplication</u>: Use bypass 1, bypass 2.
3. <u>RGB</u> <u>Scanner</u> <u>(no</u> <u>black</u> <u>to</u> <u>multiply</u> <u>by)</u>: Use bypass 2.
4. <u>Matrix</u> <u>multiplication</u> <u>only</u> <u>without</u> <u>4D</u> <u>LUT</u>: Use bypass 2, exit 3.

The operation of the apparatus of Fig. 29 is preferably as follows: CT pixels are sequentially input to 1D LUT array 440. The four components C, M, Y and K of the input pixel are received by a corresponding one of the four 1D LUTs 440 which are each operative to perform suitable modifications of each of the components of the input vector independently, such as adjustment for the particular characteristics of the particular reading device employed. For example, if the color reading apparatus employed to read the input pixel is known to separate dark colors poorly, these colors must be "spread out".

It is appreciated that the contents of the LUTs 440 varies as a function of the reading apparatus to be employed. Preferably, a user of the processing apparatus is, therefore, provided with a "library" of LUT arrays 440, each array corresponding to an individual color reading device.

The output from LUT array 440 is received by a matrix multiplication unit 442 which receives matrix coefficient information from a coefficient storage unit and operates four respective functions, each typically comprising a linear combination of the four components of the pixel value, on each of the four respective components. For example, if it is desired to provide a cyan containing less magenta, the linear combination operated on the cyan component will have a negative magenta coefficient.

Preferably, the matrix of matrix multiplication unit 442 has the following properties:

The first column of the matrix describes the influence of the cyan input component on the output appearance of each of the other separations, the second column describes the influence of the magenta input component on the output appearance of each of the other separations, and the third and fourth columns do the same for yellow and black respectively. The first row of the matrix describes the influences of the four input components on the cyan output component and the second to fourth rows describe the influences of the four input components on the remaining three output components, respectively. Therefore, for example, the matrix coefficient in the second row, first column (M row, C column) represents the influence of the cyan input component on the magenta output component.

Some examples of 4 x 4 matrices suitable for processing CMYK pixels are as follows:

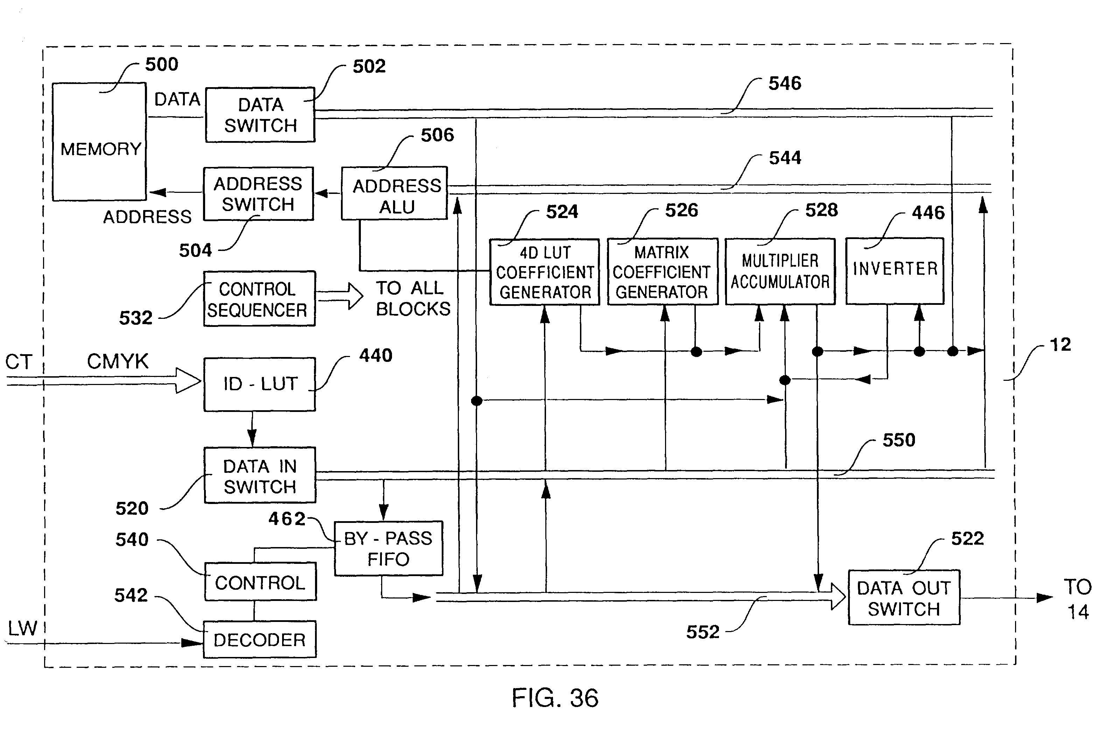

<u>Example 1</u>: The four dimensional identity matrix $I_4$, which is employed if it is not desired to effect any transformations of the CMYK pixels. Similarly, it is noted that any of the LUTs of Fig. 36 may comprise the identity LUT if no transformation of the data is required by that LUT in a particular application.

<u>Example 2</u>: A matrix for adding cyan to the magenta component of each pixel. This may be used, for example, if it is desired to provide a printed product which is similar to a reference printed product in which the magenta is "dirty" and contains some cyan:

$$
\begin{array}{cccc}
1 & 0 & 0 & 0 \\
0.1 & 0.9 & 0 & 0 \\
0 & 0 & 1 & 0 \\
0 & 0 & 0 & 1
\end{array}
$$

<u>Example 3</u>: A matrix for removing cyan from the magenta component of each pixel. This may be used, for example, if the green (corresponding to magenta) filter of a color reading device has too wide a spectrum and, therefore, retains some unwanted red (corresponding to cyan):

$$
\begin{array}{cccc}
1 & 0 & 0 & 0 \\
-0.1 & 1.1 & 0 & 0 \\
0 & 0 & 1 & 0
\end{array}
$$

0  0   0  1

It is noted that, in examples 2 and 3, the first, third and fourth rows, corresponding to the influences of the four input components on the C, Y and K output components respectively, are the same as the corresponding rows of the identity matrix. This is because, in examples 2 and 3, it is not desired to change the appearances of the C, Y and K output components, but rather only the appearance of the M outputcomponent.

Similarly, in examples 2 and 3, the third and fourth columns are the same as the corresponding columns of the identity matrix. This is because, in examples 2 and 3, it is not desired to change the influence of the Y and K input components on the output appearance of each of the other separations. Only the influence of the C input component is of interest. No desired change in the influence of the M input component was specified; however, since is it advantageous to provide matrix coefficients which sum to 1 over each row, in order to preserve the gray scale balance, the M input component in the second row of both matrices is not the same as in the identity matrix, but rather is such as to provide a sum of 1 over the second row coefficients.

In other words, the only coefficients in the matrices of Examples 2 and 3 which differ from the corresponding coefficients of the identity matrix of Example 1 are:

a. the matrix coefficient in the second row, first column (M row, C column) which represents the influence of the cyan input component on the magenta output component; and
b. the matrix coefficient in the second row, second column, which was changed to ensure a sum of one over the second row coefficients.

A preferred method for constructing the matrix 442 is as follows:

A. Provide an initial matrix 442, such as the four dimensional unity matrix.
B. Print cyan, magenta, yellow and black on the printer or output device.
C. Use the matrix 442 of step A to transform the four colors from B and then print the four colors from B, as calibrated, on a proofer.
D. Examine the two printed representations to determine whether the colored appearances thereof differ. If so, determine which separation is responsible for the difference and introduce a suitable change in the matrix. For example:
If the cyan contains more magenta in the print than in the proof, increase the value of the second row, first column position of the matrix. Conversely, if the cyan contains less magenta in the print than in the proof, decrease the same value.
E. Repeat steps B-D until suitably accurate results are obtained.

The above method may be executed interactively using a MicroWhisper workstation, commercially available from Scitex Corporation, Herzlia, Israel.

4 x 4 matrix 442 may also be constructed using the TRANSCOL function or the TRANSBIP function, provided on the FYROX workstation, commercially available from Scitex Corporation, Herzlia, Israel.

Referring again to Fig. 29, the output of the matrix 442 is received by limiting means 444. The limiting means 444, typically comprising an array of 4 conventional limiters, is operative to ensure that the output pixel value falls within the limits of the number of bits used to store the pixel. For example, if 8 bits are used per component of the pixel, then each output component must have a value between 0 and 255. Preferably, the limiter trims the output of matrix 442 to the smallest number of bits upon which the remaining computations can be performed without loss of quality.

Typically, CMYK input and CMYK output to the apparatus of Fig. 29 is such that a value of 0, for any of the four components C, M, Y, K, corresponds to 100% dot and a value of 255 corresponds to 0% dot. However, the input to the matrix 442 is preferably inverted, so that the values of 0 and 255 correspond to 0% dot and 100% dot, respectively. The inversion of the input data is preferably performed by LUT array 440 prior to processing by matrix 442, and is then re-inverted by inverter array 446 after processing by matrix 442 and limiter array 444.

It is sometimes desirable that one or more of the output components not be linear combinations of the four input components. For example, it is sometimes desirable to "discard" the black component, and provide the required color in terms of the C, M and Y components only. Therefore, optionally, one or more of the output components may be defined as the product of a linear combination of the C, M, and Y components, times a multiple of the K component. Multiplication of the black component "into" the C, M and Y components is carried out by black multiplication array 448, comprising an array of three multiplying units corresponding to the C, M and Y data streams respectively.

For example, the output C coefficient, $C_*$, might be computed as follows, the particular numerical coefficients having no particular significance but rather being intended to be illustrative of the form of the expression:

$$C^* = 100\text{-}((100\text{-}(1.1C + 0.1\ M - 0.1\ Y\ ))\ (100 - 0.95K))/100$$

instead of this way:

$$C^* = 1.1C + 0.1M - 0.1Y + 0.95\ K$$

where C, M, Y and K are in % dot units, i.e. the 0...100 range corresponds to the entire range from white to black.

"Discarding" the black component of the input color image data is required, for example, when the output device does not provide a black component. An example of such an output device is a CRT.

A particular advantage of employing black multiplication is that the "dimension" of the color image data is thereby reduced by 1 (for example, from 4 to 3 dimensions). Consequently, subsequent color processing by the elements of Fig. 29 which are "downstream" of the black multiplication unit will be 3 dimensional instead of 4 dimensional. As a result, the 4 dimensional LUT 452 may be replaced by a 3 dimensional LUT, which has the advantage of yielding better results for a given memory capacity.

It is appreciated that the present discussion pertains not only to black multiplication but more generally to the multiplying of any "masking" separation into other separations. A masking separation is one which, when printed on top of other colors, results in its own color rather than resulting in a combination of the other colors and its own.

A sample application which is particularly suited to black multiplication is when the CMYK input to the apparatus of Fig. 29 comprises digital instructions to a halftone output device such as an offset printer and the black component substantially masks out any components printed below it.

Preferably, the bypass structure is is such as to allow the user of the apparatus the option of selecting either the "black multiplication" form of the functions or the "linear" form of the functions. This may be implemented by either of the following:

(a) providing a bypass over black multiplication unit 448, so that the data passes directly from the inverter 446 to 1D LUT 450; or
(b) providing a bypass over inverter 446 and black multiplication unit 448, so that the data passes directly from limiter 444 to 1D LUT 450. In this case, since inverter 446 is inoperative, the LUT 450 is preferably operative to invert the color image data.

The output of black muliplication array 448 is received by 1D LUT array 450. The 1D LUT array 450 may be operative, preferably in conjunction with 4 x 4 matrix 442, to modify the image data, thereby to maximalize the effectiveness of the 4D LUT 452, as will be explained in detail below. If no adjustments are required, each LUT 450 may be an identity LUT. In applications where the inverter 446 is not operative, each LUT 450 may be employed as an inverting LUT by being loaded with the function $f(x)=255\text{-}x$.

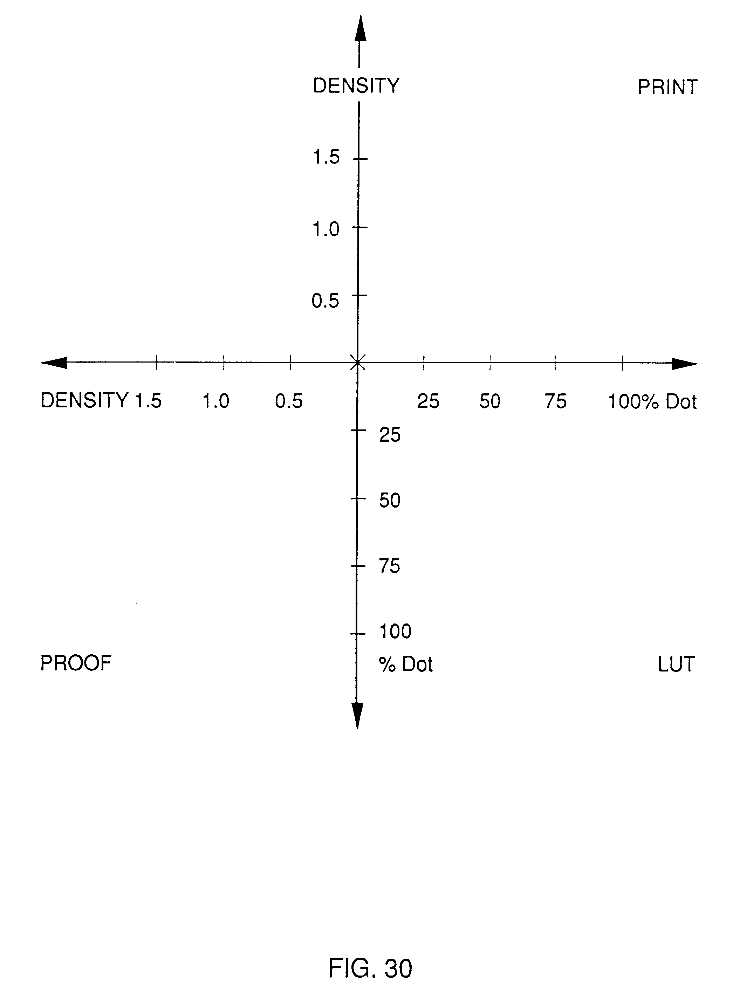

Preferred methods for constructing 1D LUTs are described below with reference to Figs. 30 - 34.

The output of 1D LUT array 450 is provided to 4D LUT 452 which is operative to perform transformations of the pixel value which depend simultaneously on all four components of the pixel. Preferred methods for constructing 4D LUTs 452 for a variety of purposes are disclosed in a coassigned Israel Patent Application, the disclosure of which is incorporated herein by reference. A copy of this document is appended hereto and is referenced Appendix C.

As explained in that document, a preferred method for constructing a 4D LUT 452 (or a 3D LUT 452) involves using a database or array of color patches. According to a preferred embodiment of the present invention, the array of color patches is printed by a proofer that was calibrated using a 1D LUT constructed in accordance with the second 1D LUT construction method described below with reference to Figs. 30, 33 and 34. Further in accordance with a preferred embodiment of the present invention, the 4D LUT constructed using a particular 1D LUT is employed in conjunction with that 1D LUT which is copied into LUT 456 of Fig. 29.

The output of 4D LUT 452 is received by limiting means 454 which trims the output of LUT 452. The four components of the pixel output from limiting means 454 are received by an array 456 of 4 respectively corresponding 1D LUTs which may be operative to "linearize" the output device employed by adjusting for its particular characteristics. For example, if the color printing apparatus employed to read the output pixel is known to separate dark colors poorly, these colors must be "spread out". Alternatively or additionally, LUTs 456 are operative to "fit" the color values processed by the apparatus of Fig. 29, which color values may have been read from the output of a proofer, to the color values of the printer or other output device which is to be used to print the output of the color apparatus of Fig. 29. This process is referred to herein as calibration.

Preferred linearization and calibration methods are described in detail below.

It is appreciated that the structure of the LUTs 456 may vary as a function of the output apparatus employed. Preferably, a user of the processing apparatus of Fig. 29 is, therefore, provided with a "library" of LUT arrays 456, each array in the library corresponding to an individual color output device.

It is appreciated that the 1 dimensional LUTs of Fig. 29 may be employed to overcome one-dimensional non-linearities of any substantial magnitude, e.g. dot gain.

According to an embodiment of the present invention, the elements of Fig. 29 which are "upstream" of 4D LUT 452 may serve to optimize the 4D LUT 452. In other words, the elements "upstream" of 4D LUT 452 may serve to modify the input data, thereby to provide data covering substantially the entirety of the input domain of the 4D LUT 452, thereby yielding better results for a given memory capacity.

For example: In a certain application, a CMYK representation of a color image is received in which each component is 8 bits. In other words, each pixel value comprises four 8 bit words. The four components of the address to the 4D LUT 452 are, respectively, the four MSB's of each word. The four LSB's of each word are employed to perform linear interpolation between the values stored in the 4D LUT.

The color image is such that the C component in the CMYK representation thereof varies only from 0 to 15 and never assumes any value in the 16 - 255 range. In other words, the MSB's of the C component of all of the pixels in the CMYK representation are identical. Therefore, the 4D LUT 452 is, practically speaking, inoperative for the data as received.

In consequence, it is preferred to "expand" the input data in order to optimally utilize the 4D LUT. In other words, the minimum C value, 0, will remain at 0, the maximum C value, 15, will be transformed to 255, and all intermediate values will be transformed so as to preserve linearity. This may be done in either of the following ways:

a. Constructing the 1D LUT 450 in accordance with the function $f(x) = 255x/15$; or
b. Constructing a matrix 442 which is identical to the identity matrix $I_4$ in all rows and columns except that the (1,1) element, corresponding to the influence of cyan on itself, is 255/15.

It is appreciated that the apparatus of Fig. 29 is an example of very general color processing apparatus having a wide variety of applications and uses, such as but not limited by the following:

a. Adaptation of color image data for a particular output device.
b. Modification of color image data received from a color reading device.
c. Transformation of color image input data in a first color space to a second color space.
d. Editing of a color image stored in a workstation.

Applications a-d of the color processing apparatus of Fig. 29 will now be discussed in detail:

a. Adaptation of color image data for a particular output device:

This application includes two possible cases:

1. Linearization of an output device, for at least one component of the color vector. A linearized output system for a particular component is a system in which there is a linear relationship between that component of the measured color or luminance of each pixel of a printed product and the value of that component of the corresponding pixels in the digital precursor of the printed product.

If the linear relationship is required for only a single component of the color vector, then only one component of the apparatus of Fig. 19 need be used. That component may be any of the 1D LUT arrays 440, 450 and 456.

A preferred method for constructing a linearization LUT is described below with reference to Figs. 30, 33 and 34.

2. Calibrating the output device such that the printed products produced thereby will be substantially identical in appearance to the printed products produced by a reference output device.

To implement this, the components employed are at least multidimensional LUT 452, for the calibration process itself, limiter array 454 and, preferably, 1 D LUT 456, for linearizing the calibrated output device. In this case, the 1D LUT is a linearization LUT which may be constructed as described below with reference to Figs. 30, 33 and 34.

Alternatively, a 1D LUT may be employed to perform the calibration process, instead of the 4D LUT 452. In this case, the 1D LUT is a "calibration" LUT, which may be constructed using the calibration LUT construction method described below with reference to Figs. 30 - 32.

According to still another alternative, a 3 dimensional LUT 452 may be employed to calibrate three of the dimensions of a four dimensional data space and a 1 dimensional LUT may be employed to calibrate a fourth dimension of the data space, such as the black dimension. In this case, the C, M and Y components of the 1D LUT array 456 are preferably constructed using the linearization LUT construction procedure described below with reference to Figs. 30, 33 and 34. The K component of the 1D LUT array is preferably constructed using the calibration LUT construction procedure described below with reference to Figs. 30 - 32.

A preferred calibration method which employs all elements of Fig. 29 except for black multiplication unit 448 and LUT 450 in order to calibrate a particular output device such as a proofer with relative to a reference output device is as follows:

1. Construct a linearization LUT for the proofer, using the linearization LUT construction method described below with reference to Figs. 30, 33 and 34.

2. Using the linearization LUT from step 1 as LUT 456, and bypassing the other elements of Fig. 29, employ the apparatus of Fig. 29 to plot a database useful for constructing a 4 dimensional LUT. Then construct the 4 dimensional LUT. Suitable databases and suitable multidimensional LUT construction methods, employing a reference output device, are described in Applicant's coassigned Israel Patent Application, appended hereto and referenced Appendix C.
Load the resulting 4 dimensional LUT into LUT 452 of Fig. 29.

3. Select a test color image and print it, using the proofer in conjunction with the apparatus of Fig. 29. In this step, the elements "upstream" of multidimensional LUT 452 are bypassed and 4D LUT 452, limiters 454 and 1D LUT array 456 are operative.

4. Examine or scan the printed representation of the color image and construct matrix 442 so as to overcome any discrepancies between the actual appearance of the color image and the desired appearance thereof.

5. Construct a calibration LUT, using the calibration LUT construction method described below with reference to Figs. 30 - 32. In step F of that method, in which a digital representation is printed using the output device to be calibrated, use the proofer in conjunction with all elements of Fig. 29 downstream of and inclusive of matrix 442 to print the digital representation. In step B of that method, in which a digital representation is printed using a printer, use the reference output device to print the digital representation.
Alternatively, the calibration LUT may be constructed using the DRANGE function provided on the FYROX workstation, commercially available from Scitex Corporation, Herzlia, Israel. Use of the DRANGE function is particularly suited to applications in which accuracy of the gray scale is important.

6. Load the 1D LUT 440 with the calibration LUT constructed in step 5. The proofer in conjunction with all elements of Fig. 29 is now calibrated with reference to the reference device.

### b. Modification of color image data received from a color reading device.

The color image data received from the color reading device is generally RGB data. The RGB data which is obtained by scanning a particular analog representation of a color image will vary as a function of the color reading device employed. Therefore, it is desirable to modify the RGB data, in order to obtain "uniform" RGB data, i.e., RGB data which does not reflect the particular characteristics of the color reading device employed to provide that data.

The uniformization of the RGB data is preferably implemented by employing matrix 442. In other words, a matrix 442 is constructed for each color reading device from which input is accepted and desired to be uniformized.

Additionally, it may be desirable to linearize each of the three components of the RGB data. This may be done by using an analytic formula, e.g. by raising each component to a particular power such as 0.45. However, according to a preferred embodiment of the present invention, the linearization may be implemented by passing the data through a "power-raising" LUT, i.e. a LUT, such as 1D LUT 440, which is constructed and operative to raise the power of the data passing therethrough.

### c. Transformation of color image input data in a first color space to a second color space.

A sample color transformation is described in a document produced by the Society of Motion Picture and Television Engineers entitled "SMPTE Standard for television: signal parameters: 1125/60 high-definition production system" and referenced SMPTE 240M, 1988.

If the transformation of the first color space to the second color space is a one dimensional transformation defined by a known analytical formula, then the 1D LUT 440 may be constructed in accordance with that formula. The 1D LUT 440 is subsequently employed to implement the transformation.

If the transformation of the first color space to the second color space is a linear transformation defined by a known matrix, then that matrix may be loaded into matrix 442 and matrix 442 may be employed to implement the transformation.

It is appreciated that some transformations may be effected by use of a 1D LUT array in conjunction with a matrix.

For example, 1D LUT array 440 and matrix 442 may be used to effect a power function and to subsequently perform a four dimensional linear transformation. Matrix 442 and 1D LUT 450 may also be used to first effect a transformation consisting of performing a four dimensional linear transformation and subsequently to raise the transformed data to a certain power.

Alternatively, any transformation, including a transformation for which no analytical formula is known, may be effected by constructing a 4 D LUT as described in a coassigned Israel Patent Application appended herein as Appendix C, and copying that LUT into 4D LUT 452 of Fig. 29.

d. Editing of a color image stored in a workstation:

One editing application is as follows:

In certain workstations such as the MicroWhisper, commercially available from Scitex Corporation, Herzlia, Israel, modifications are made by the user on a 1D LUT, termed the "gradation" LUT, rather than on the stored digital representation of the color image. The analog representation of the color image appearing on the workstation screen is provided by passing the digital representation of the color image through the 1D gradation LUT. When the user is satisfied with the appearance of the color image on the screen, the final form of the 1D gradation LUT is operated on the stored digital representation of the color image, thereby to provide a modified digital representation of the color image.

The LUT operation step may be implemented using the apparatus of Fig. 29 by copying the final gradation LUT onto 1D LUT 440 of Fig. 29 and passing the digital representation of the color image through LUT 440.

It is appreciated that some applications for which the apparatus of Fig. 29 is useful may be a combination of applications a - d discussed above. For example, a digital file stored in a workstation may be edited, and the edited gradation LUT may be copied onto LUT 440. It may then be desired to transform digital data exiting LUT 440, thereby to obtain digital data in a different color space. This may be done by using the following suitably constructed elements: matrix 442, limiter array 444, inverter array 446 and 1D LUT 450. Finally, it is desired to output the resulting digital data on a color output device which is to be calibrated with reference to a reference color output device. This may be done by using the following suitable constructed elements: multidimensional LUT 452, limiter 454 and 1D LUT 456.

Reference is now made to Figs. 30 - 32 which illustrate a method for constructing a 1 dimensional LUT useful for calibration of an output device relative to a reference device. As explained above, the function of the 1 D LUT constructed in accordance with the method of Figs. 30 - 32 is to "fit" the color values of the proofer used to provide an analog precursor of the digital data processed by the apparatus of Fig. 29, to the color values of a printer which it is desired to employ to print the digital data processed by the apparatus of Fig. 29.

In other words, a 1 dimensional LUT may be constructed which receives a first digital representation derived from an analog representation of a color image produced on a proofer and modifies it, thereby to define a second digital representation, such that the second digital representation, when received by the proofer, will provide an analog representation susbtantially identical in appearance to the analog representation which would result from printing the first digital representation of the color image on the printer.

The method preferably comprises the following steps, which are performed for each separation or color component:

A. Provide a digital representation of an image in which the color values of the separation increase or decrease monotonically along one of the dimensions of the separation in accordance with a predetermined pattern or rule. The variation in color may be either continuous or discrete. The dot-percent value at each location of the image is known.

A sample digital representation having the above characteristics is the following 17 x 5 pixel array, where each pixel is given in CMY values from 0 to 255:

```
255 255 255; 255 255 255; 255 255 255; 255 255 255; 255 255 255;
240 255 255; 255 255 255; 255 240 255; 255 255 255; 255 255 240;
224 255 255; 255 255 255; 255 224 255; 255 255 255; 255 255 224;
208 255 255; 255 255 255; 255 208 255; 255 255 255; 255 255 208;
192 255 255; 255 255 255; 255 192 255; 255 255 255; 255 255 192;
176 255 255; 255 255 255; 255 176 255; 255 255 255; 255 255 176;
160 255 255; 255 255 255; 255 160 255; 255 255 255; 255 255 160;
144 255 255; 255 255 255; 255 144 255; 255 255 255; 255 255 144;
128 255 255; 255 255 255; 255 128 255; 255 255 255; 255 255 128;
112 255 255; 255 255 255; 255 112 255; 255 255 255; 255 255 112;
 96 255 255; 255 255 255; 255  96 255; 255 255 255; 255 255  96;
 80 255 255; 255 255 255; 255  80 255; 255 255 255; 255 255  80;
 64 255 255; 255 255 255; 255  64 255; 255 255 255; 255 255  64;
 48 255 255; 255 255 255; 255  40 255; 255 255 255; 255 255  40;
 32 255 255; 255 255 255; 255  32 255; 255 255 255; 255 255  32;
 16 255 255; 255 255 255; 255  16 255; 255 255 255; 255 255  16;
  0 255 255; 255 255 255; 255   0 255; 255 255 255; 255 255   0;
```

As seen, the cyan component of the first column of pixels changes from 255, or 0% dot, to 0, or 100% dot. The magenta and yellow components of the first column of pixels are both always white.

All three components of the second column of pixels are white (255 or 0% dot).

In the third column of pixels, the magenta component changes from 255, or 0% dot, to 0, or 100% dot. The cyan and yellow components of the third column of pixels are both always white.

All three components of the fourth column of pixels are white (255 or 0% dot).

In the fifth column of pixels, the yellow component changes from 255, or 0% dot, to 0, or 100% dot. The cyan and magenta components of the fifth column of pixels are both always white.

The appearance of an analog representation of the above digital information is of a color image comprising a first cyan vertical line which is lightest at the top and darkens as it descends, a second magenta vertical line which is lightest at the top and darkens as it descends and a third yellow vertical line which is lightest at the top and darkens as it descends. In between the three colored lines there are white vertical lines.

It is noted that the gradations of the cyan component in the first column, the magenta component in the third column and the yellow component in the fifth column are linear. In other words, the difference between the relevant component of adjacent pixels in each column is uniform (16, in the present example). However, if an analog representation of the data is produced on a color output device and subsequently read by a color reading device such as a scanner, the resulting scanner color values will generally not be completely linear. This is due, inter alia, to irregularites of the color output device. For the same reason, if first and second analog representations of the data are produced on respective first and second color output devices and both representations are subsequently read by a color reading device such as a scanner, the resulting first and second sets of scanner color values will generally not be identical to one another.

B. Print the digital representation provided by step A, using the printer.

C. Select a plurality of points, typically at least 20, which are preferably evenly distributed over the printed image, and measure the density of each point with a densitometer.

D. Plot the plurality of points from C in the upper right hand quadrant of a graph in which:

i. the dot-percent values of each of the plurality of points is represented along the positive portion of the X axis (values may range from 0 to 100% dot);
ii. the density of each point, as measured in step C, is represented along the positive portion of the Y axis (values may range from 0 to 3.0);

A typical graph is shown in Fig. 30. The upper right hand quadrant is used to represent information regarding the characteristics of the printer. The lower left hand quadrant is used to represent information regarding characteristics of the proofer.

Draw a smooth curve between the points as plotted on the graph.

E. Draw the y = -x curve in the upper left hand quadrant of the graph, i.e. a line oriented 45 degrees clockwise from the horizontal.

F. Print the digital representation of the image on the proofer, then

G. Plot the plurality of points from F in the lower lefthand quadrant of the graph such that:

i. the dot-percent values of each of the plurality of points are represented along the negative portion of the Y axis (values may range from 0 to 100% dot);
ii. the density of each point, as measured is step C, is represented along the negative portion of the X axis (values may range from 0 to 3.0);

Draw a smooth curve between the plotted points.

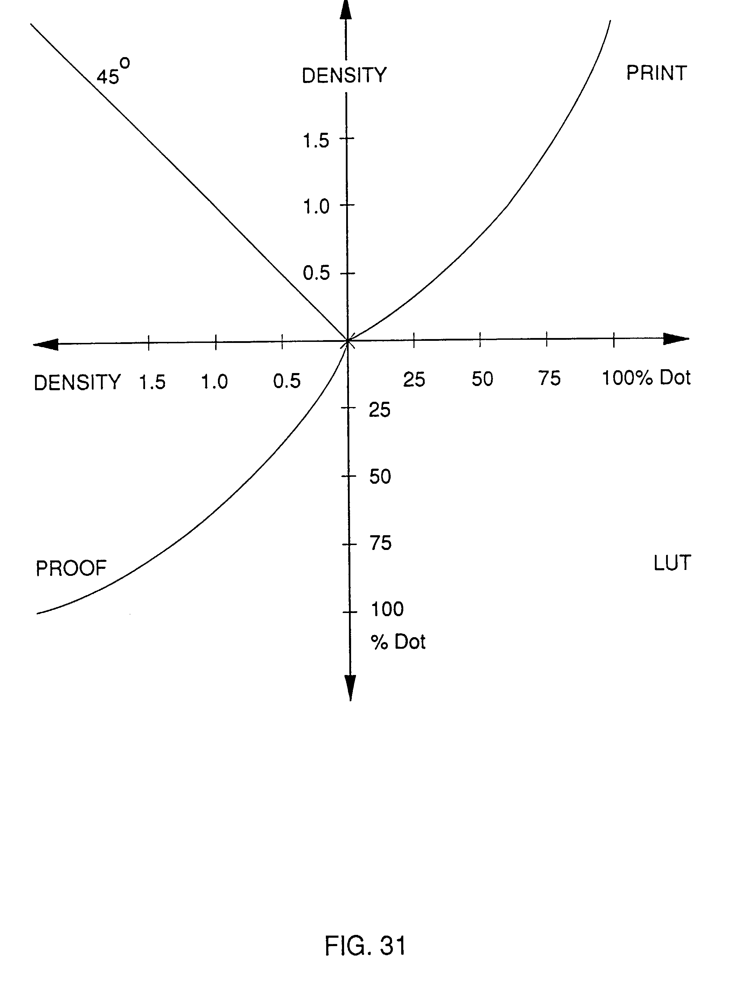

Fig. 31 illustrates the graph after step G has been completed.

H. Select a plurality of points along the y=-x line, preferably at least 20.

I. For each of the points in H:

i. Join the point to the curve of step G with a vertical line.
ii. At the meeting point of the curve and the vertical line, draw a horizontal line extending to the right.
iii. Join the point to the curve of step D with a horizontal line.
iv. At the meeting point of the curve and the horizontal line, draw a vertical line downward, joining the meeting point to the horizontal line of substep iii. Mark the point P at which the vertical line meets the horizontal line of substep iii.

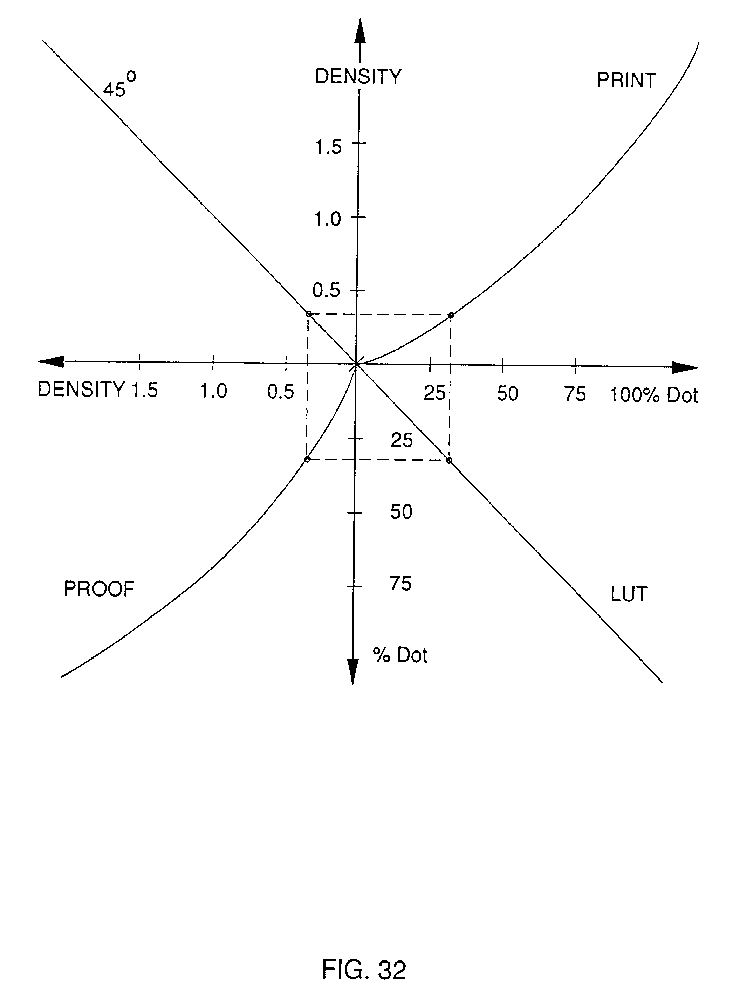

Fig. 32 illustrates the graph after step I has been completed.

J. Draw a curve through all points P.

K. Convert the curve into a LUT. This step may be effected using a commercially available device such as the MicroWhisper, commercially available from Scitex Corporation, Herzlia, Israel.

A method for constructing a 1D LUT useful for output device linearization is now described.

As explained above, it is generally the case that equal gradations of a particular component, when printed and scanned, will no longer be equal. In other words, color outputting and reading processes cause "distortion" of the colored appearance of color images. A 1 dimensional LUT may be employed to "linearize" the output of a color output device.

A preferred method of constructing a 1D LUT operative to linearize the output of a color output device comprises the steps A-K of the method described above with reference to Figs. 30 - 32, with the following modifications:

In step C, the plurality of points preferably includes a point corresponding to the maximum density, i.e. the proofer's reading at 100% dot, and a point corresponding to the minimum density, i.e. the proofer's reading at 0% dot.

In step D, the plurality of points are plotted in the lower left hand quadrant, rather than in the upper right hand quadrant. Referring to Fig. 30, the upper right hand quadrant now represents the desired linear relationship between the % dot and the dimension. The lower left hand hand quadrant now represents the characteristics of the proofer.

Steps F and G are replaced by the step of plotting a straight line between the proofer's minimum reading, i.e. the proofer's reading at 0% dot, and between the proofer's maximum reading, i.e. the proofer's reading at 100% dot. The resulting straight line replaces the "curve of step G" referred to in step I.

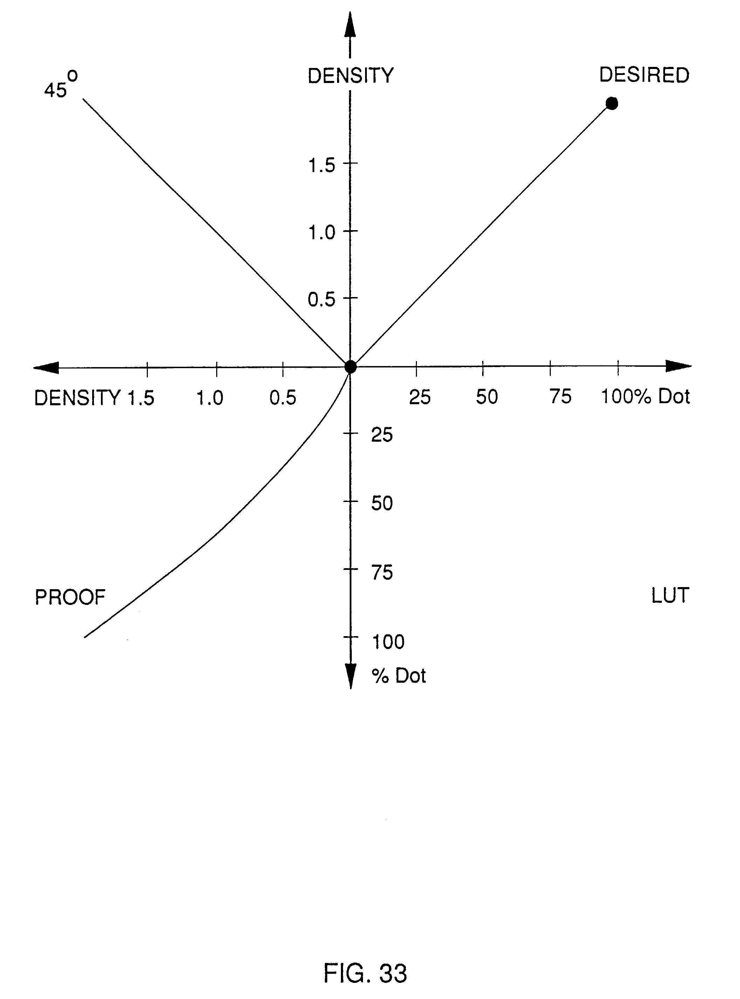

Fig. 33 illustrates the graph after this plotting step has been completed.

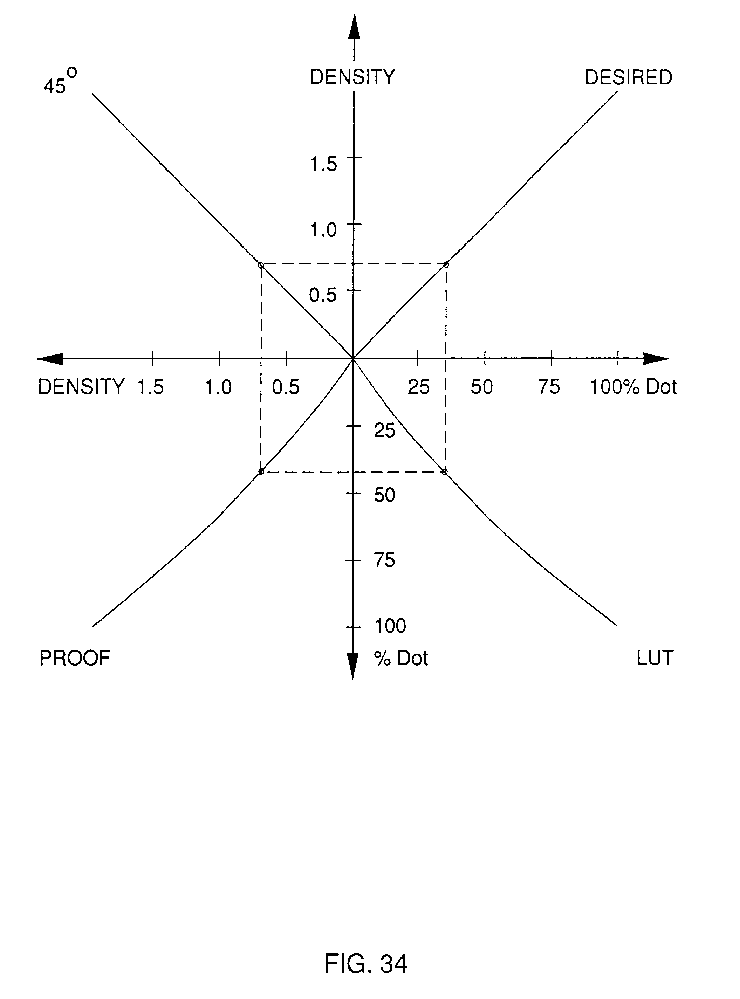

Fig. 34 illustrates the graph after step I has been completed.

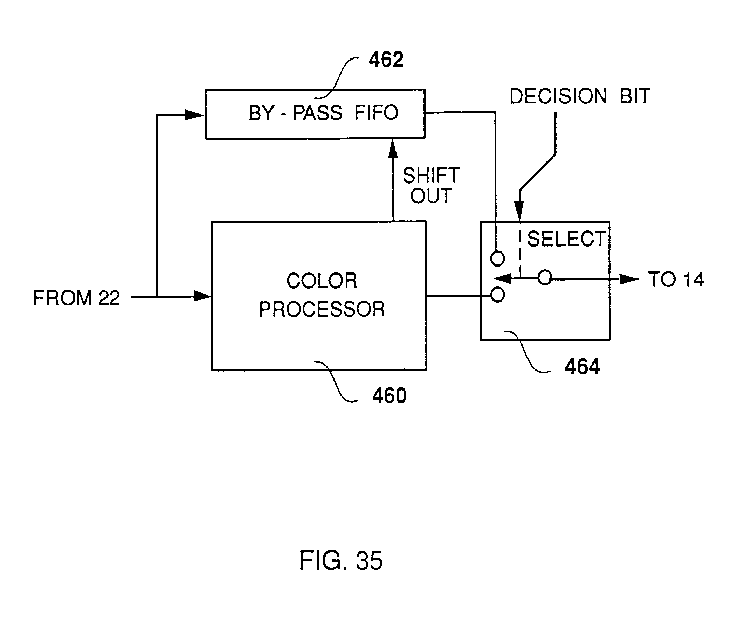

Reference is now made to Fig. 35, which is a block diagram of color image processing apparatus for color processing of a digital representation of an image. The color processing apparatus of Fig. 35 is a further embodiment of a color processing unit such as color unit 12 of Fig. 1 or color unit 1014 of Fig. 41. A particular feature of the color processing apparatus of Fig. 35 is that it is selectively operable. In some applications, it may be desirable to perform color transformations on only some of the color components of the color image, for example, only on the C and M components and not on the Y and K components. Alternatively or in addition, it may be desirable to perform color trasnformations on only some of the area of the color image, instead of on the entire area thereof.

As shown in Fig. 35, the color processing apparatus preferably comprises a color processing unit 460 which may include some or preferably all of the elements illustrated in Fig. 29; a FIFO buffer 462 which enables the original input data, in addition to the transformed output data, to be available; and selection means 464 for selecting either the original input data or the transformed output data in accordance with a decision bit.

A preferred mode of operation of the apparatus of Fig. 35 is as follows: a stream of pixels is received by the by-pass FIFO 462 and by the color processor 460. Each pixel is modified by color processor 460 and is later provided to the selector 464 at time intervals which may not be fixed and which may not be known. However, it is known that the operation of color processor 460 is "first in first out". In other words, if pixel A precedes pixel B on its way into color processor 460, then pixel A will precede pixel B on its way into selector 464.

Therefore, the preferred means for storing the original input pixels is a "first in first out" storage unit. This allows each original pixel to be shifted out of the "first in first out" storage unit 462 when an appropriate shift-out signal arrives from color processor 460, indicating that the corresponding modified pixel is now being shifted out of color processor 460.

It is appreciated that the apparatus of Fig. 35 provides "automatic" synchronization of the processed input data and the original input data. In other words, the processed input data and the original input data arrive at the selector 464 simultaneously without keeping track of the delay introduced by color processor 460, which may vary from pixel to pixel and from component to component of the same pixel.

It is appreciated that the automatic synchronization function provided by the apparatus of Fig. 35 is useful in a variety of data processing application. In other words, the color processor 460 of Fig. 35 may be replaced by any suitable data processing unit for which the order of outcoming data elements is the same as the order of incoming data elements.

Reference is now made to Fig. 36, which is a block diagram illustrating a preferred hardware implementation of selectively operable color processing apparatus including a bypass unit (referenced 462 to correspond to the bypass unit of Fig. 35) and a color processor. In the embodiment of Fig. 36, the color processor includes all components illustrated in Fig. 29.

A memory 500 stores LUTs 450, 452 and 456 of Fig. 29. A data switch 502 and an address switch 504 which interface memory 500 provide address routing and preferably maximalize utilization of memory 500 by compacting it. Address switch 504 is associated with an address ALU 506. Data input and output switches 520 and 522 respectively interface to the data stream, which, in the illustrated embodiment, comprises a stream of 12-bit CT data, although the applicability of the apparatus is not limited to this example. A conventional storage device storing LUT 440 interfaces with data in switch 520. Data input switch 520 may be implemented based upon registers such as Philips' 74374 and is strobed by a signal arriving from control sequencer 532 (see below).

A 4D LUT coefficient generator 524 generates coefficients for 4D LUT 452 of Fig. 29. A matrix/black coefficient generator 526 generates coefficients for the matrix 442 and for black multipliers 448 of Fig. 29. A multiplier/accumulator array 528 comprises a plurality of multiply/accumulator units, each comprising a multiplier and an adder. The number of multiply/add units corresponds to the number of separations, and the plurality of multiply/add units preferably work in parallel on the respective separations.

A controller/sequencer 532 interfaces with all major components of Fig. 36 and is operative to control the operation of the apparatus of Fig. 36, and in particular, to implement a user-selected bypass and exit structure, as explained above with reference to Fig. 29.

In accordance with a preferred embodiment of the present invention, the LW representation of a color image also includes user-determined information as to which locations and/or which separations are to be processed and which are to be left unchanged. The LW representation may then be employed to determine the decision bit of Fig. 35.

Bypass FIFO 462 receives a decision bit from a control unit 540 which preferably receives the LW data stream via a decoder 542. It is appreciated that the decoder 542 may be implemented by conventional means, depending on the exact type of LW or other run length encoded data employed. Alternatively, the control unit 540 may be programmed to bypass one or more separations.

Bypass FIFO 462 may be based upon the integrated circuit known as CY7C408, commercially available from Cypress Semiconductors, San Jose, CA, USA. Since this circuit handles only 8 bits, two FIFOs may be provided, in parallel, to fit input and output busses of 12 bits each. Preferably, 8 bits are handled by the first FIFO and the remaining four bits are handled by the second FIFO. The components also receive control signals such as shift-in, shift-out, and reset, from control sequencer 532 and control unit 540 of Fig. 36.

Data switch 502 is operative to select which of four separations supplied by memory 500 will be passed to internal data bus 546 (see below). Typically, one or all four separations are passed on. The selection is in accordance with signals arriving from control sequencer 532. Switch 502 may be based upon the 74F153, commercially available from Philips.

Data out switch 522 preferably comprises a plurality of registers such as 74F374, commercially available from Philips, which are strobed by a data strobe arriving from control sequencer 532.

The coefficient generator 526 preferably comprises a memory having a four word capacity, each word comprising four 13-bit fields. This may be implemented using five 82S09 chips from Philips. Coefficient generator 526 is operative to store the coefficients of matrix 442 of Fig. 29.

Control sequencer 532 is operative to control the operations of all units of Fig. 36. Each unit of Fig. 36 is preferably controlled by an internal state machine (not shown) which may be based upon a PAL such as an AMD 22V10. Each state machine operates the corresponding unit exactly once, upon receipt of a control signal from control sequencer 532, which operates as a "master state machine". Upon completion of the operation of each operating unit, the state machine corresponding thereto provides a suitable termination signal to control sequencer 532 which then sends a control signal to whichever unit of Fig. 36 is to operate next. Sequencer 532 may be based upon a plurality of PALs, such as the AMD 22V10.

Preferably, an internal address bus 544 and an internal data bus 546, as well as an input bus 550 and an output bus 552, are provided which allow all units to work in parallel by allowing parallel data transfer.

A preferred mode of operation of the apparatus of Fig. 36 is now described. CT data arrives at 1D LUT storage device 440. The CT data as transformed by 1D LUT 440 is carried onto input bus 550 via data in switch 520, which is in a first, new data input position. The CT data next arrives at multiplier/accumulator unit 528 where the operations of matrix 442 multiplication and limiting are carried out, using the matrix 442 coefficients which arrive from coefficient generator 526. The C, M and Y components of the data are then provided to inverter 446 which inverts the system value data, thereby to provide %dot data for those components.

The inverted data returns to the multiplier/accumulator unit 528 where the black multiplication operation is carried out. The black multiplication coefficients arrive from coefficient generator 526. The data is shifted onto output bus 552. Data out switch 522 is in a first, no data out position and the data arrives at address ALU 506 which is enabled to receive it by control sequencer 532.

Black multiplier array 448 of Fig. 29 is implemented as follows: All four separations are preferably inverted by inverter 446 and the C, M and Y separations are multiplied by the black.

Address ALU 506, in conjunction with address switch 504, compute the address of 1D LUT 450 which is stored in memory 500 and access memory 500. The accessed information from memory 500 arrives at output bus 552. Alternatively, the address to LUT 450 may be provided by the multiplier array 528 which performs the matrix multiplication.

The data out switch 522 is still in its no data out position, so the data arrives at coefficient generator 524 which selects interpolation coefficients, using the LSB's of the data, and provides them to multiplier/accumulator unit 528.

Address ALU 506 and address switch 504 together access memory 500 which stores 4D LUT 452. The address ALU 506 uses the MSB's to access the 4D LUT 452. The accessed contents of 4D LUT 452 arrive at multiplier/accumulator unit 528.

Multiplier/accumulator unit 528 interpolates an output value by multiplying each interpolation coefficient by the corresponding accessed data from 4D LUT 452, thereby to obtain a product, and then adding the products and "limiting" the result.

The final output of multiplier/accumulator unit 528 arrives, via output bus 552 and address bus 544, at address ALU 506. Address ALU 506, in conjunction with address switch 504, accesses LUT 456 which is stored in memory 500. Once transformed by the LUT 456, the data exits through data switch 502, data bus 546 and output bus 552. Control sequencer 532 causes data out switch 522 to assume its second data out position and the data is shifted out of the color processing unit.

Apparatus and methods for color processing using a four dimensional LUT such as LUT 452 are described in the following United States Patents,

US-A-4,500,919 to Schrieber, US-A-4,477,833 to Clark et al; US-A-4,511,989 to Sakamoto.

It is preferable to use 17 points along each of the four dimensions of the LUT 452, thereby to facilitate interpolation in the 16th interval. Specifically, a preferred method for interpolating for pixels having at least one color component falling within the 240 - 255 interval is by using the 17th point, 256, defined along the axis corresponding to that component. State of the art technology generally divides the 0...255 bit range along each LUT dimension to $2^n$ segments, where n is some integer such as 4. In accordance with a preferred embodiment of the present invention, in order to partition each LUT dimension into $2^n$ segments, $2^n+1$ points are defined, i.e. including both ends of the range. Therefore, the LUT 452 preferably comprises 17 not 16 entries or points per dimension.

A particular features of the apparatus of Fig. 36 is that a plurality of separations may be processed in parallel. This feature is provided due to the provision of input busses 550 and 544 and output bus 552, and due to the fact that the multiplier/accumulator array 528 includes a plurality of multipliers which correspond in number to the number of separations to be processed.

A further particular feature of the embodiment of Fig. 36 is that the multipliers, which may contain a very large number of gates, are utilized in the implementation of a plurality of or all of the following components of Fig. 29: 4 x 4 matrix 442, black multiplication unit 448, and interpolations for LUT 452. The advantage of this feature is that it allows generally continuous operation of the multipliers during color processing rather than intermittent operation thereof.

A further particular feature of the apparatus of Fig. 36 is the provision of address switch 504 which allows efficient use of only a relatively small and compact portion of memory in applications where only a relatively small amount of memory is required. This is done by storing substantially the entirety of the body of information to be stored in a single area of the memory thereby enabling a very large proportion of the memory to be utilized.

Processing speed of the apparatus of Fig. 36 may be increased as follows:

Preferably, pipelining techniques are employed, thereby allowing some of the operations carried out by the components of Fig. 36 to be carried out in parallel. For example, the matrix multiplication carried out by multiplying means 528 may be carried out simultaneously with the table look up operation carried out in memory 500. Pipelining may result in a relative fast information processing rate, such as one pixel per clock.

According to a preferred embodiment, a plurality of devices such as the device shown and illustrated in Fig. 36 may be provided. The devices may be mutually cascaded. For example, two mutually cascaded devices may be provided. The first device may perform the operation of matrix 442 and the second device may perform the operation of the 4 dimensional LUT 452.

Further in accordance with a preferred embodiment of the present invention, a plurality of devices such as the device illustrated in Fig. 36 may be provided for operation in parallel. For example, a first device or a first plurality of mutually cascaded devices may process odd addressed pixels whereas a second device or second plurality of mutually cascaded devices may process even addressed pixels.

The above two methods of increasing processing speed may be used separately or in combination.

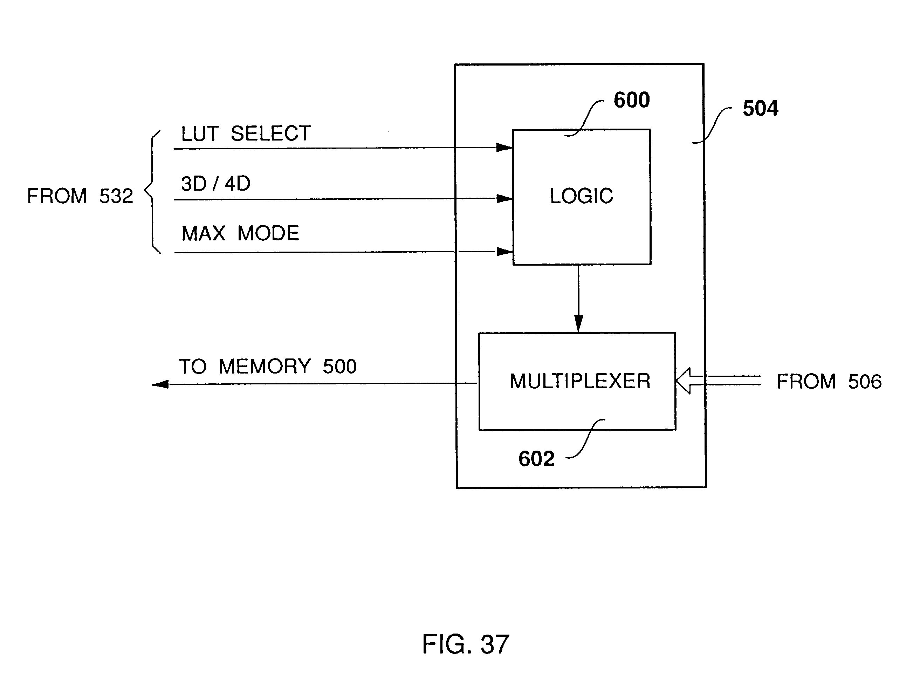

Reference is now made to Fig. 37, which is a block diagram of address switch 504 of Fig. 36. As shown, switch 504 comprises a logic unit 600 and a multiplexer 602 which interfaces with address ALU 506 of Fig. 36. The logic block 600 may be implemented using a PAL such as the AMD 18L4. The multiplexer 602 may be implemented using the 74F153 from Philips.

The switch 504 preferably addresses memory 500 according to at least one option selected by a user and communicated via control sequencer 532. A first signal from control sequencer 532 indicates which of the LUTs stored in memory 500 is to be accessed. Typically memory 500 stores 1D LUT 450, 4D LUT 452 and 1D LUT 456. A second signal from control sequencer 532 indicates whether the input data is three or four dimensional, which in turn determines whether LUT 452 is a three dimensional LUT or a four dimensional LUT.

A third signal is operative to select either a maximum or a minimum mode if a three dimensional LUT is used. In the minimum mode, each of the three separations or dimensions are addressed in four bits. The remaining four bits are used for coefficient generation. In the maximum mode, each of the three separations or dimensions are addressed in five bits, and therefore only three bits remain for coefficient generation. For this purpose, memory 500 preferably has a capacity of 128K 40-bit words.

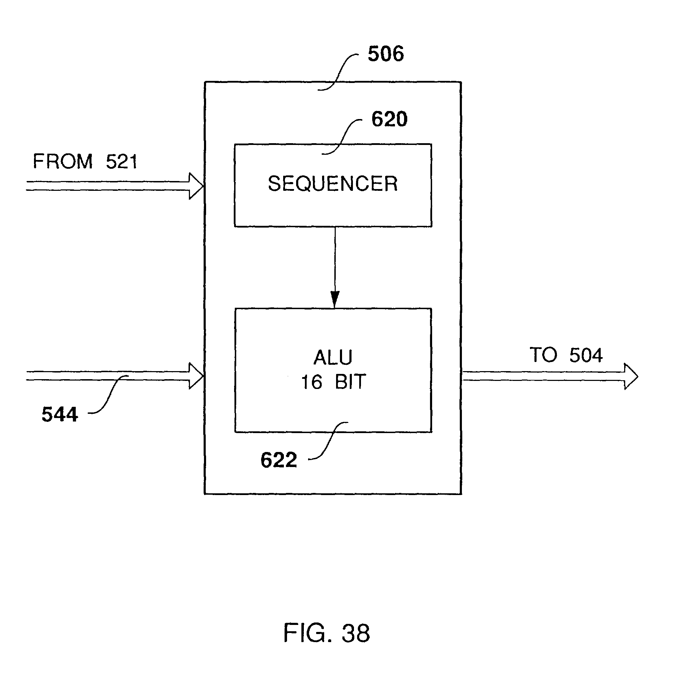

Reference is now made to Fig. 38, which is a block diagram of the address ALU 506 of Fig. 36, constructed and operative in accordance with an embodiment of the present invention. The ALU 506 preferably comprises a sequencer 620 such as a AMD PAL22V10, and a 16 bit ALU 622. The sequencer 620 receives a control signal from coefficient generator 524 which indicates which addresses are to be used for interpolation. ALU 622 is operative to add one to the appropriate components of the MSB-determined address arriving from address bus 544, thereby to provide the addresses to be used for interpolation.

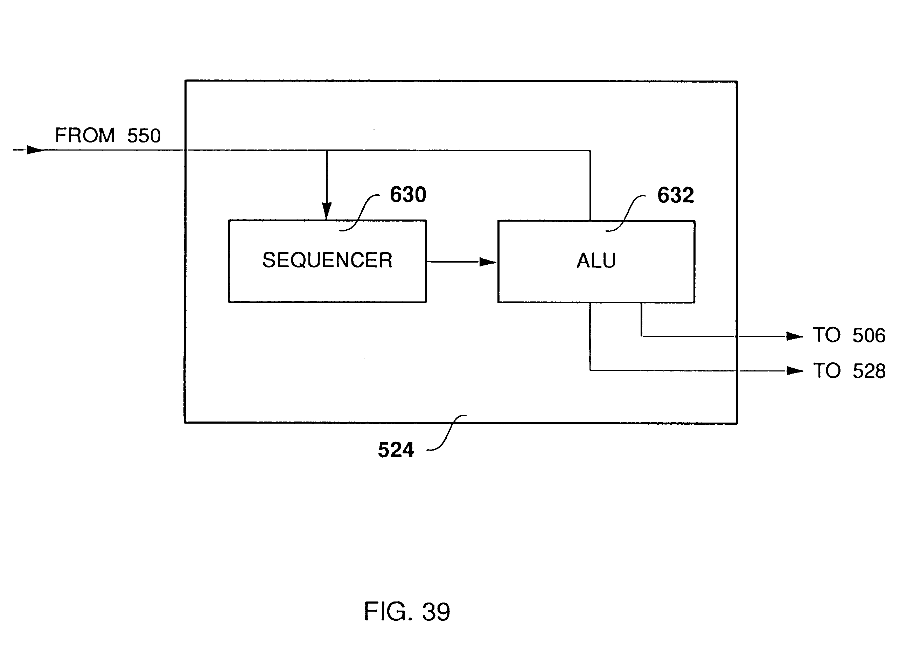

Reference is now made to Fig. 39, which is a block diagram of the 4D coefficient generator 524 of Fig. 36. The 4D coefficient generator 524 preferably comprises a sequencer 630 such as the ALTERA EPM 5032, commercially available from Altera, Santa Clara, CA, USA and an ALU 632 which may be based upon a WS 59032.

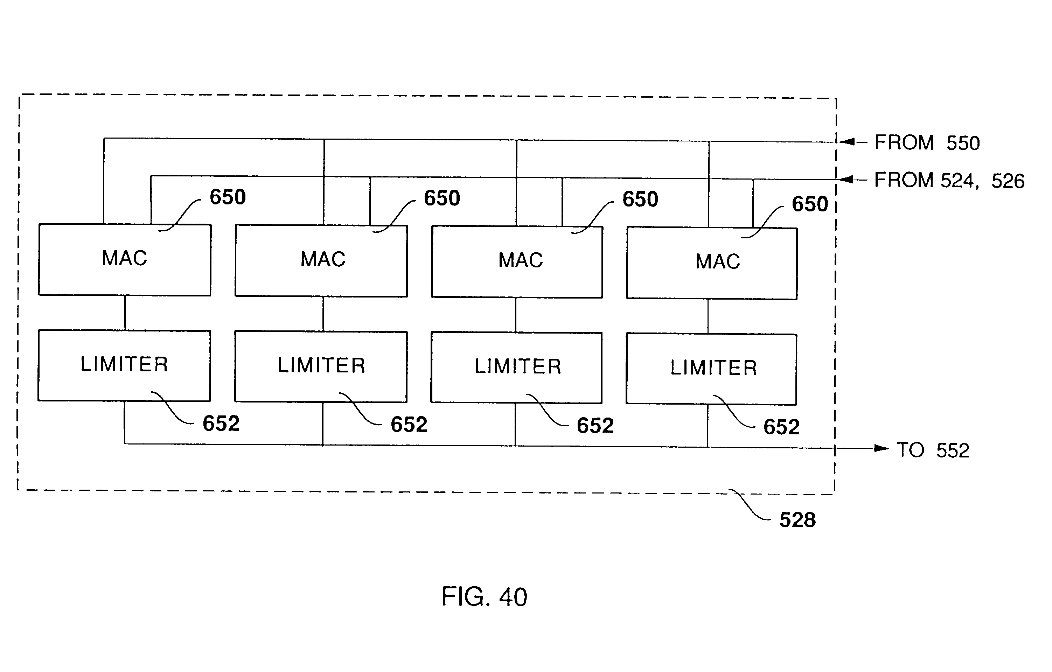

Reference is now made to Fig. 40, which is a block diagram of the multiplier/accumulator array 528 of Fig. 36, which comprises four multiplier/accumulators 650 such as the TRW2010, commercially available from TRW, La Jolla, CA, USA, and four limiters 652 interfacing with the multiplier/accumulators 650 as shown.

Reference is now made to Fig. 41 which is a generalized block diagram As shown, the apparatus comprises an input module 1010, which may receive CT, LW or Postscript input, a spatial module 1012 which interfaces with the input module and is operative to perform spatial transformations of the input data, a color module 1014 which is operative to perform color transformations of the spatially transformed input data, and an output module 1016.

Alternatively, the locations of spatial module 1012 and color module 1014 may be reversed.

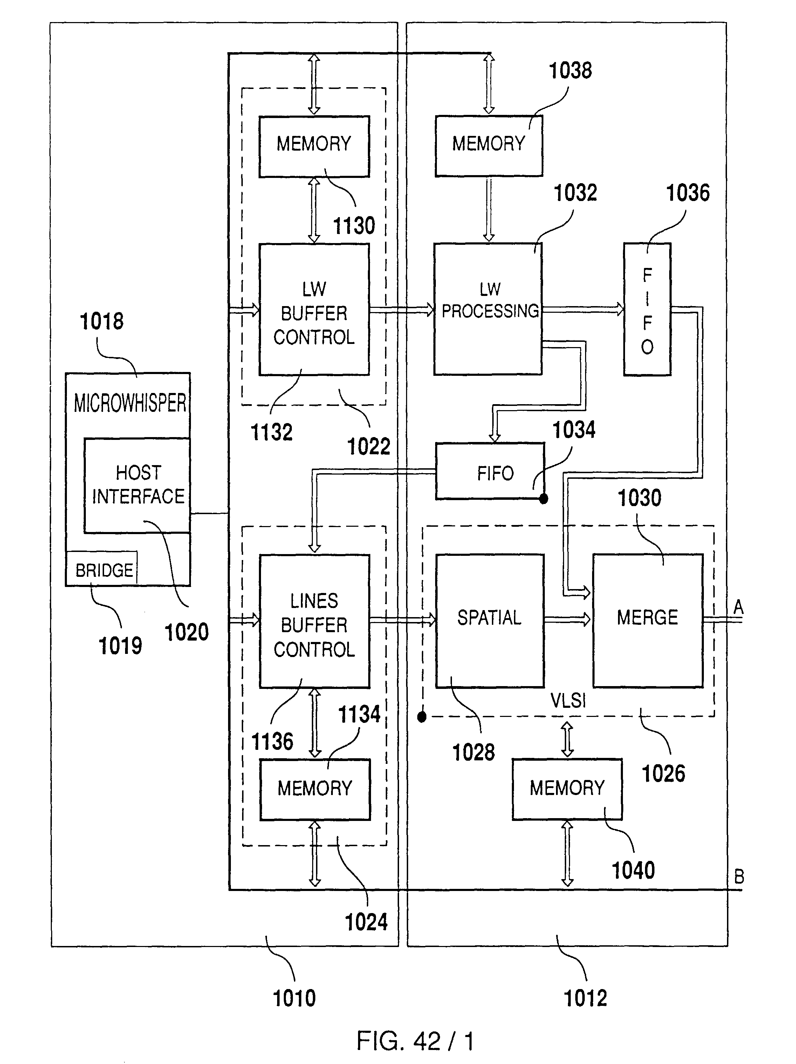

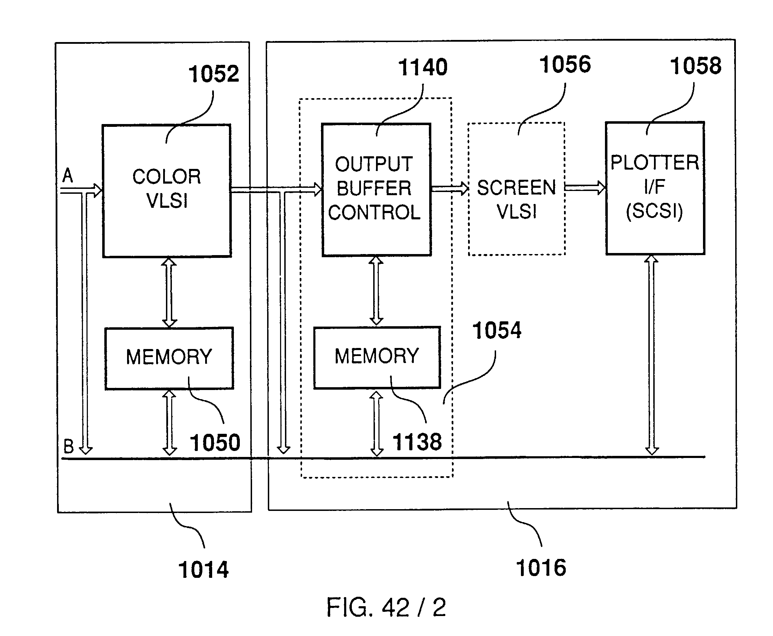

Reference is now made to Fig. 42 which is an intermediate detail block diagram of the elements of Fig. 41. As seen, the input module 1010 comprises a host 1018 which may comprise a MicroWhisper workstation, commercially available from Scitex Corporation, Herzlia, Israel, in conjunction with an interface module 1020. The workstation 1018 is used for creating, storing, editing and retouching of color images, as well as for interfacing with color image processing equipment such as scanners and plotters.

The host 1018 also preferably comprises a Postscript bridging unit 1019 which is operative to receive a representation of a color image in Postscript format and to convert the representation into LW/CT format, thereby enabling further processing of the color image. Bridging unit 1019 may comprise a PS Bridge, commercially available from Scitex Corporation, Herzlia, Israel.

Host interface 1020 typically inputs to a LW buffer means 1022 and a lines buffer means 1024.

The LW buffer means 1022 stores LW data pertaining to the vicinity of a portion of an image being processed. The lines buffer means 1024 stores CT data pertaining to a vicinity of the portion of the image being processed. Typically 5L complete lines are stored at a time, where L is an integer such as 20. The lines buffer means 1024 also is operative to convert data received in line interleaves format into pixel interleaves formatted data.

In the present specification, the terms "row" and "line" are generally used interchangeably.

The spatial module 1012 comprises a spatial processing unit 1026 which typically comprises a spatial subunit 1028 and a merging subunit 1030. Spatial and merging subunits 1028 and 1030 may be implemented as a single VLSI. Appendix D is a netlist generated by a VLSI generating software package commercially available from LSI LOGIC, 1551 McCarthy Blvd., Milpias, CA, 95035. This netlist is a complete description of a VLSI embodiment of spatial and merging subunits 1028 and 1030 of Fig. 42.

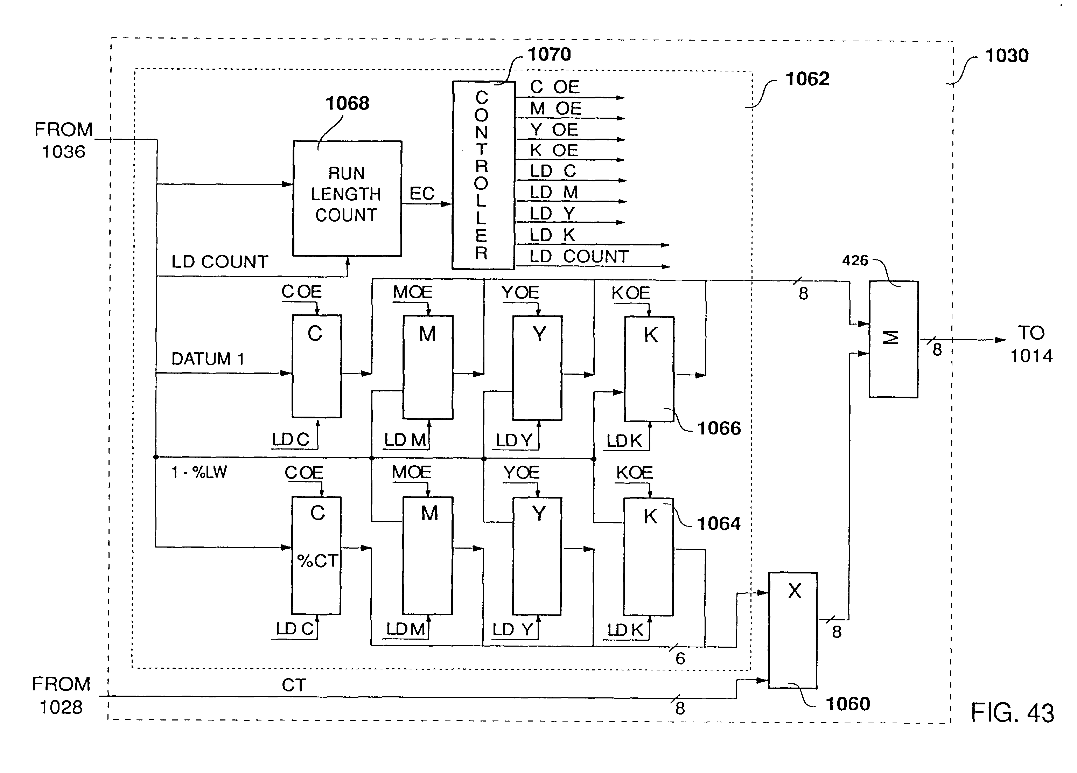

The spatial subunit 1028 is operative to perform suitable convolution and averaging operations if it is desired to change the resolution of the CT representation to a new resolution, termed herein the "output resolution". The merging subunit 1030 is operative to merge the CT data from spatial subunit 1028 with the LW data which arrives from the LW processing unit 1032. A more detailed description of a preferred embodiment of merging subunit 1030 is provided below with reference to Fig. 43, which is a generalized block diagram of merge unit 1030.

The spatial module 1012 also comprises a LW processing unit 1032. LW processing unit 1032 is operative to receive LW data from LW buffer means 1022 and change the resolution of the LW data to correspond to the resolution of the CT data. LW processing unit 1032 provides the "validity bit" of the LW data, at the new CT resolution, to lines buffer 1024 typically via a FIFO 1034. The resolution of the LW data is also changed to correspond to the output resolution. The LW data at the output resolution is provided to the merger 1030 for merging with the CT data via a FIFO 1036.

A LW processing memory 1038 is provided in operative association with LW processing unit 1032 for storing the program of the LW processing unit 1032 as well as the key to the LW color code, as explained at the start of the description.

A color interface memory 1040 is preferably provided which stores the four 1D LUTs 440 of Fig. 29. The four 1D LUTs 440 are each operative to do any or all of the following:

a. introduce one dimensional transformations of color component values, including transformations from system values to color dot percents and vice versa;
b. perform non-linear transformations such as those illustrated in Figs. 30 - 32 above. For example, non-linear transformations are used when it is desired to introduce tone and color gradations.

The color module 1014 is operative to perform color transformations of the spatially transformed input data. Preferred modes of operation of the color module 1014 are described hereinabove with reference to Figs. 29, and 35 - 40. The color module 1014 typically comprises a memory 1050 and a color subunit 1052. The memory 1050 may comprise a static RAM array, which may comprise a plurality of static RAMs, such as the S128K8, commercially available from Inova, 2220 Martin Ave., Santa Clara, California, U.S.A.

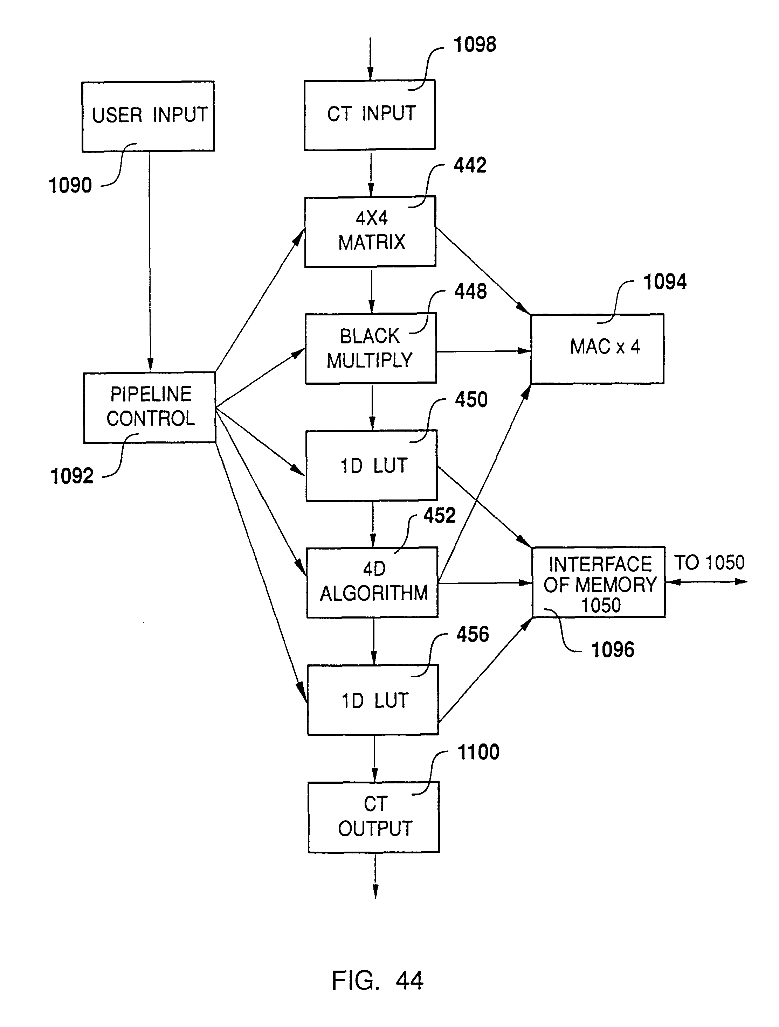

A general discussion of a preferred hardware implementation of color module 1052 is provided below with reference to Fig. 44. A complete description of a VLSI embodiment of color subunit 1052 is provided in Appendix E. Appendix E is a netlist generated by a VLSI generating software package commercially available from LSI LOGIC, 1551 McCarthy Blvd., Milpias, CA, 95035.

The color module 1014 outputs to the output module 1016 which typically comprises an output buffer 1054, a screening unit 1056 and a plotter interface unit 1058. The output buffer 1054 is operative to change interleaves, e.g. to change pixel interleaves format to line interleaves format, where suitable.

The screening unit 1056 may be based upon the screening device disclosed in co-assigned United States Patents 4,350,996 and 4,456,924 to Gidon Rosenfeld, the disclosure of which is incorporated herein by reference. If the plotter or other output device employed does not require a screening process or requires a screening process and has a built-in screening unit, screening unit 1056 may be eliminated.

Output device interface 1058 is the interface to the particular output device which it is desired to employ. For example, if it is desired to employ the Iris 4012 proofer, commercially available from Iris Corporation, CITY, MA, the output device interface may comprise a NCR 53C700, commercially available from NCR, 1635 Aeroplaza Dr., Colorado Springs, Colorado, U.S.A. This component may be programmed using the programming guide provided by the manufacturer for this component.

Reference is now made to Fig. 43 which is a detailed block diagram of a preferred implementation of merge unit 1030 of Fig. 42. The embodiment of Fig. 43 is similar to the embodiment of Fig. 25 and similar elements are identically referenced for convenience. However, the LUT 422 of Fig. 25 which is operative to implement the multiplicative formulae of data1 and data2, as defined above with reference to Fig. 25, is here replaced by a multiplier 1060 operating in conjunction with LW processing unit 1032 of Fig. 42. The merge unit 1030 also comprises register means 1062, typically comprising a first "space percentage" register array 1064 and a second "color" register array 1066; a counter 1068; and a controller 1070. Each of the two register arrays 1064 and 1066 preferably comprises one register for each separation, or typically 4 registers if four separations are used. The controller 1070 is operative in conjunction with counter 1068 to load the registers 1064 and 1066. All of the above components may be implemented by selecting suitable off the shelf components. Alternatively, the entire apparatus illustrated in Fig. 43 may be implemented in VLSI form, as explained hereinabove.

A preferred method for merging CT data and LW data, using the apparatus of Fig. 43, will now be described. The LW data at output resolution arrives from LW processing unit 1032 of Fig. 42 via the FIFO 1036, as shown. The CT data at output resolution arrives from spatial subunit 1028. The LW data is received by space percentage register array 1064, color register array 1066 and counter 1068. Counter 1068 receives the run length of the currently processed LW run. Color register array 1066 receives the value data1, defined hereinabove with reference to Fig. 25, which is the color component value vector indicating the color of the LW pixel weighted by the "non-transparency" of the LW pixel.

Spatial percentage register array 1064 receives, for each register, 100- %LW, which is the percentage of the area of the output LW pixel which is valid CT, i.e. LW transparent. The value 100-%LW is computed by LW processing unit 1032. Multiplier 1060 is operative to multiply the CT color component values arriving from spatial subunit 1028, by the corresponding 100-%LW value stored in the corresponding register of register array 1064. The result of the multiplication of multiplier 1060 is added, at full adder 426, to the corresponding data1 value arriving from the corresponding register or register array 1066. An output indication of the sum is provided to color module 1014.

Reference is now made to Fig. 44 which is a generalized block diagram of a preferred hardware implementation of color module 1014. The hardware implementation of Fig. 44 is more easily understood with reference to the discussion of Fig. 29 above, since Fig. 29 is a conceptualized illustration of the same apparatus. Similar elements are referenced with identical reference numerals, for convenience.

As shown, the color processing blocks comprise the 4 x 4 matrix 442 of Fig. 29, the black multiplication unit 448 of Fig. 29, the 1D LUT applying unit 450 of Fig. 29, the 4 D LUT applying unit 452 of Fig. 29 and the 1D LUT applying unit 456 of Fig. 29. A user interface 1090 is preferably provided in order to allow the user to choose to bypass one or more of the above color processing blocks. The user may also provide other input. For example, the user may choose to employ a self-diagnostic mode of the apparatus, or a matrix parameter loading mode of the apparatus. A pipeline control unit 1092 is provided to control the flow of information through the color processing blocks, preferably using pipelining techniques.

According to a preferred realisation, a single multiplier-accumulator unit 1094 is provided in association with 4 x 4 matrix 442, black multiplying unit 448 and 4D LUT applying unit 452, in order to conserve resources. Multiplier-accumulator unit 1094 typically comprises four multiplier-accumulators, corresponding to the four separations. A memory interface 1096 is provided to interface memory 1050 of Fig. 42 which stores the LUTs for the LUT applying units 450, 452 and 456. Input and output modules 1098 and 1100 are also provided.

Referring back to Fig. 42, the LW buffer 1022 typically comprises a memory component 1130, which may be a video RAM. The LW buffer 1022 also comprises a control component 1132. The lines buffer 1024 typically comprises a memory component 1134, which may be a video RAM. The lines buffer 1024 also comprises a control component 1136. The CT buffer 1054 typically comprises a memory component 1138 which may be a video RAM. The CT buffer 1054 also comprises a control component 1140.

A suitable video RAM (VRAM) for implementing memory components 1130, 1134 and 1138 is an MT42C4255, commercially available from Micron, 2805 East Columbia Road, Boise, Idaho, USA.

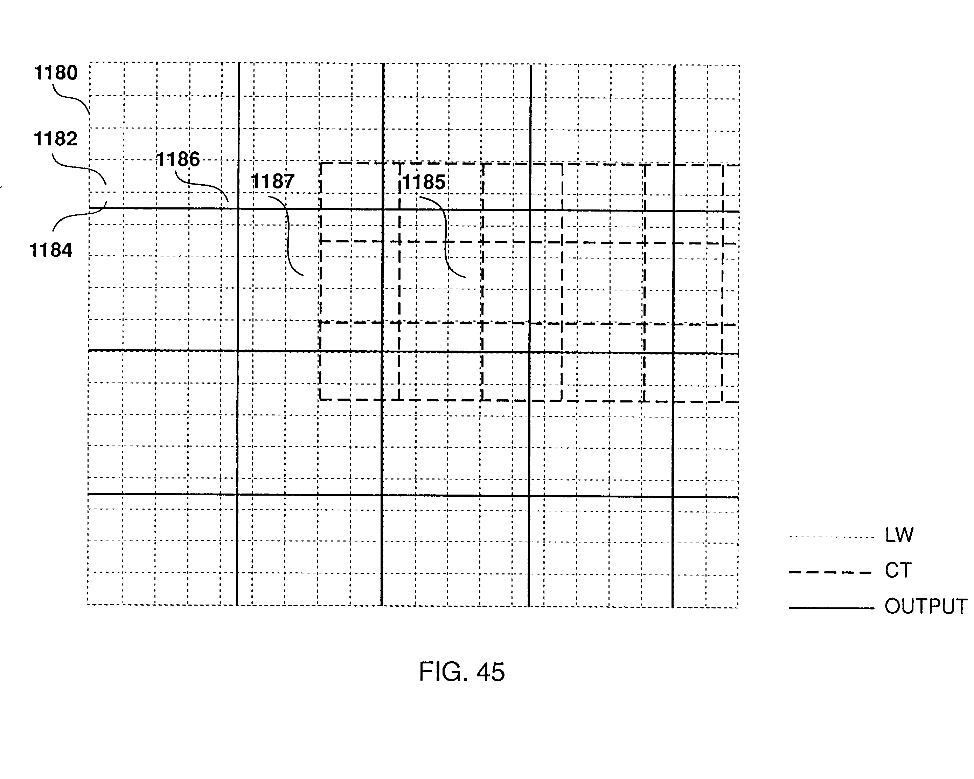

Reference is now made to Figs. 45 - 52 which are conceptual illustrations of examples in which LW pixels, CT pixels and output pixels are shown superimposed onto one another. Preferred methods of computing the color values of the output pixels, for each example, are now described, in order to clarify preferred principles of operation of the CT/LW merging methods shown and described hereinabove. The computations shown and described herein refer particularly to the embodiment of Fig. 8 shown and described hereinabove.

In all of Figs. 45 - 52, LW pixels are indicated by a dotted line, CT pixels are indicated by a broken line, and output pixels are indicated by a solid line.

In Fig. 45, a typical array of pixels is shown which represents a portion of an image. The resolution of the LW pixels is higher than the resolution of the CT pixels which is higher than the resolution of the output pixels. Only part of the image portion is represented by the CT pixels. The LW pixels of the remainder of the image portion are not transparent to CT. The entirety of the image portion is represented by the LW pixels. The color values of the output pixels are to be computed as a function of the color values of the CT pixels and the LW pixels.

Output pixels which do not overlap any CT pixel, such as output pixel 1180, are assigned a color value which is an average of the color values of the LW pixels overlapping therewith, preferably weighted by the area of each LW pixel which is contained within the output pixel. For example, the color value of LW pixel 1182 will be given greater weight than the color value of LW pixel 1184, when computing the color value of output pixel 1180, because more of LW pixel 1182 is included in output pixel 1180. LW pixel 1186 will be given even less weight than LW pixel 1184, for the same reason.

Output pixels which are entirely covered by valid CT pixels, such as the output pixel 1185, are assigned a color value which is an average of the color values of the CT pixels partially or completely overlapping therewith, preferably weighted by the area of each CT pixel which is contained within the output pixel. Alternatively, the color value of the output pixel 1185 may be computed by convolution. However, a 5 x 5 convolution procedure is invalid in the present example, since the 5 x 5 CT pixel window surrounding output pixel 1185 is not completely valid. A 3 x 3 convolution procedure is valid.

Color values for output pixels, such as output pixel 1187 which is to the left of output pixel 1185, which are covered partially by non-transparent LW pixels and partially by valid CT pixels, may be computed as follows, with reference to the apparatus of Fig. 8:

a. The three CT pixels which partially overlap the output pixel 1187 are averaged by scaler 98 of Fig. 8. The average may be a simple average or may be weighted by the areas of overlap of the respective CT pixels with the output pixel. The average may be denoted AVERAGE(CT).

b. The 15 LW pixels which partially overlap the output pixel 1187 are averaged by LW to output averager 92. The average may be a simple average or may be weighted by the areas of overlap of the respective pixels with the output pixel. The average may be denoted AVERAGE (LW).

Output averager 92 also computes the proportion of the area of the output pixel 1187 which is covered by non-transparent LW pixels, %LW. In this instance, for example, %LW is slightly more than fifty.

c. The color value of the output pixel is computed as follows:color value = 0.01 x (%LW x AVERAGE(LW)+ (100-%LW) x AVERAGE(CT))

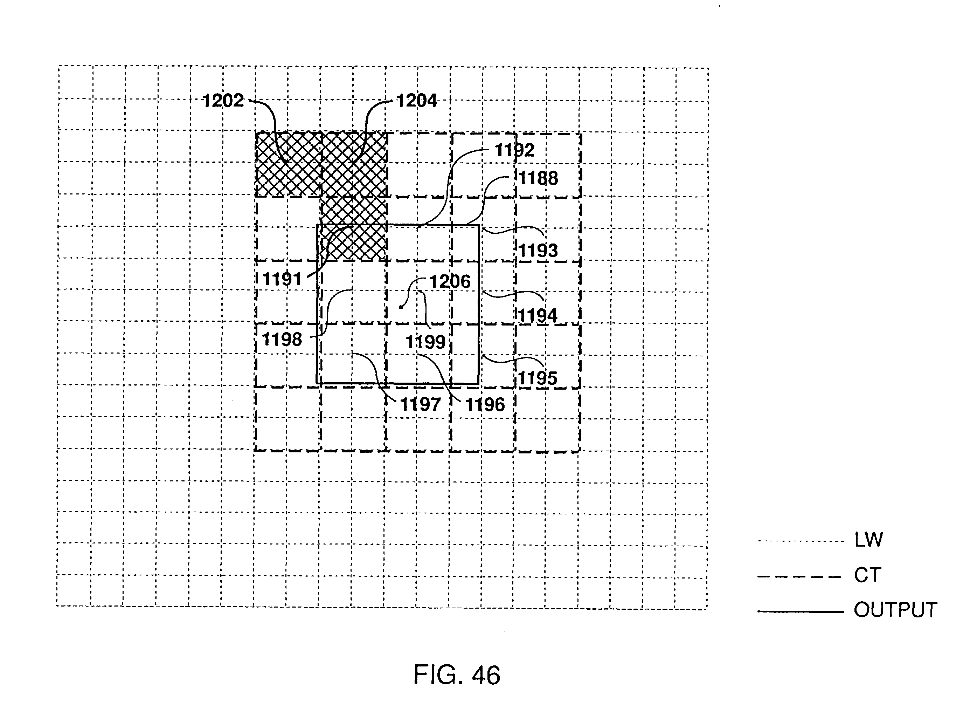

In Fig. 46, a single output pixel 1188 is shown. The ratio of the LW resolution to the CT resolution is 2. The ratio of the output resolution to the CT resolution is 0.4. Twelve of the LW pixels are cross-hatched to indicate that these LW pixels are not transparent to CT, and therefore the three CT pixels coinciding therewith are invalid, since a CT pixel is only valid if at least a portion thereof coincides with a transparent LW pixel. The LW pixels which are not cross-hatched are transparent to CT, and therefore, the non cross-hatched CT pixels are valid. The color value of output pixel 1188 may be computed as a weighted sum of a CT value representing the "valid" portion of the output pixel and a LW value representing the "invalid" portion of the output pixel. The LW value is weighted by %LW and the CT value is weighted by (100-%LW), as explained above.

The CT value may be computed by either of the following two methods:

(a) averaging, in which case the color values of all valid CT pixels which overlap the current output pixel are averaged. In this case, the 9 CT pixels 1192-1199 which overlap output pixel 1188 are averaged. CT pixel 1191 is not valid and so the color value of CT pixel 1191 is disregarded. Preferably, the average is a weighted average, in which the weights reflect the area of each CT pixel which overlaps the output pixel 1188. For example, CT pixel 1198 will be given more weight than CT pixel 1192. For clarity, CT pixels 1192-1198 have each been referenced with an appropriately numbered line which denotes the center of the pixel.

(b) convolution, in which case all 25 CT pixels shown may be employed in a 5 x 5 convolution. However, convolution is not valid, since the three shaded CT pixels 1191, 1202 and 1204, which are invalid, are included in the convolution area.

The central CT pixel of the convolution matrix is defined to be the CT pixel 1199 covering the center 1206 of the output pixel 1188.

The LW value is computed by averaging the two shaded LW pixels contained within the output pixel.

%LW in the present example is 200/25.

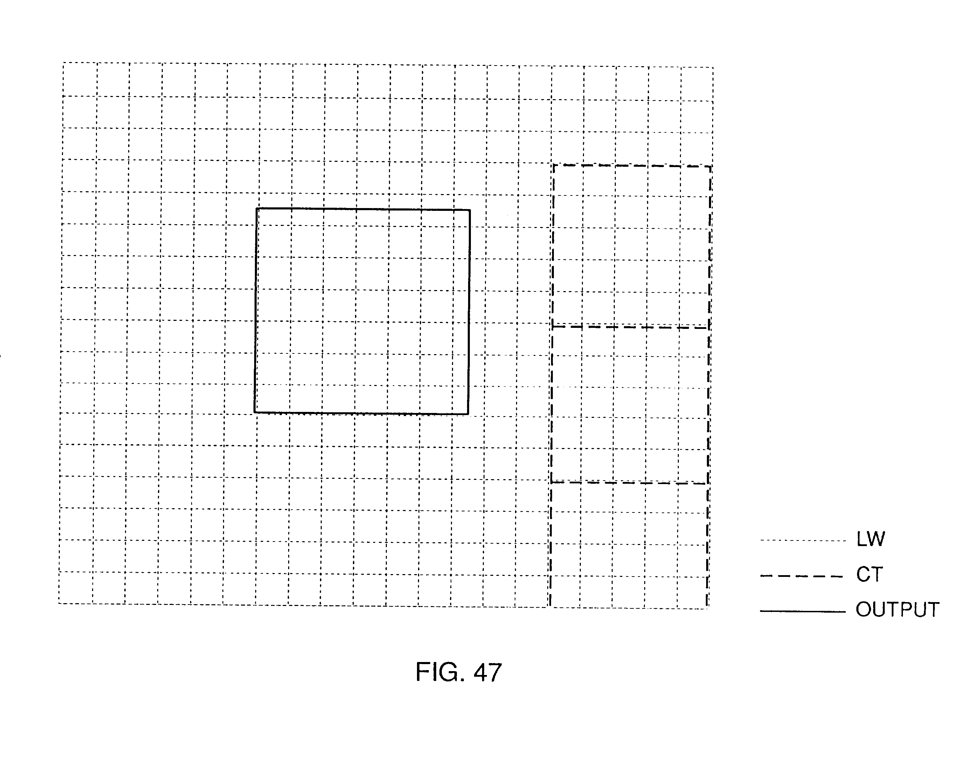

In Fig. 47, there are only three valid CT pixels, indicated by broken lines. Therefore, the output pixel indicated by a solid line is computed by averaging the 49 LW pixels overlapping or partially overlapping it. The average may be a simple average or may be weighted by the area of overlap of the respective LW pixels with the output pixel.

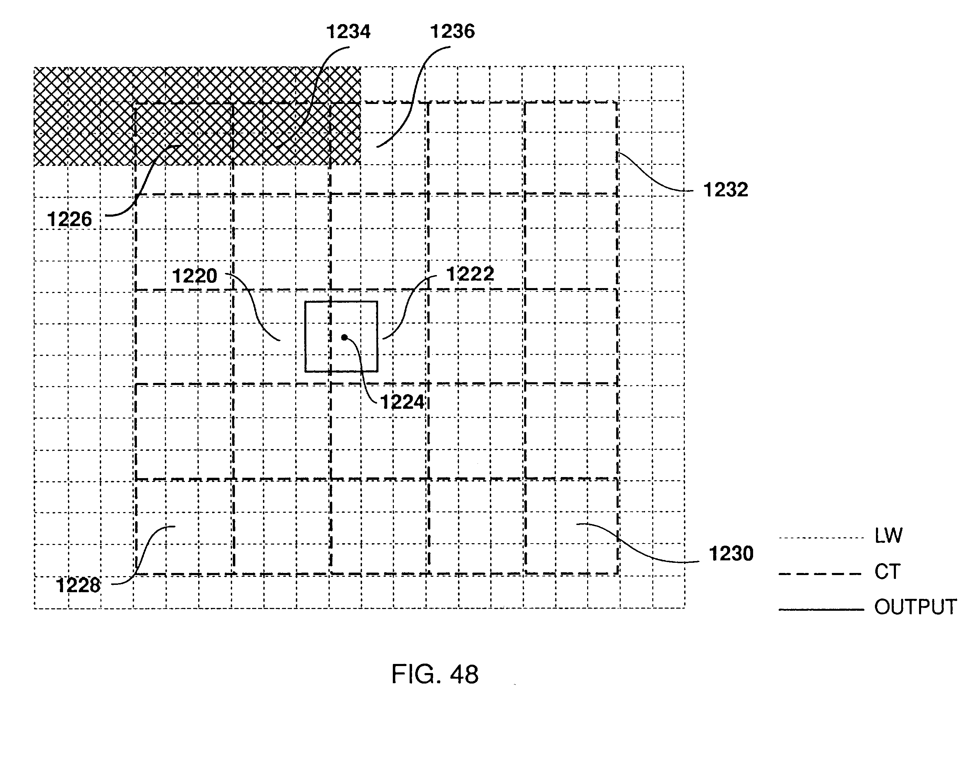

In Fig. 48, the output resolution is larger than the CT resolution, in contrast to Figs. 45 - 47, but is still smallerthan the LW resolution. Cross-hatched LW pixels are nontransparent LW pixels. The illustrated output pixel is entirely covered by valid CT pixels. As explained above with reference to Fig. 45, output pixels which are entirely covered by valid CT pixels are assigned a color value which is an average of the color values of the CT pixels partially or completely overlapping therewith, preferably weighted by the area of each CT pixel which is contained within the output pixel. In the present example, the output pixel overlaps two CT pixels 1220 and 1222.

The color value of the output pixel may also be computed by convolution, such as 5 x 5 convolution. The central pixel of the convolution matrix, which comprises 25 CT pixels, is the CT pixel which covers the center 1224 of the output pixel. Therefore, the 25 pixels of the convolution matrix are the 25 pixels bounded by matrix corner CT pixels 1226, 1228, 1230 and 1232. In the present example, the convolution matrix contains three CT pixels 1226, 1234 and 1236 which are partially covered by nontransparent LW pixels. However, these CT pixels are considered valid, since some of the LW covering them is transparent. CT pixels which are entirely covered with nontransparent LW are invalid, however the convolution matrix contains no such pixels. Since all the pixels of the convolution matrix are valid, the convolution is valid. Since the convolution is valid, convolution is the preferred method for computing the output pixel and the result thereof is used in preference over the result of the averaging method.

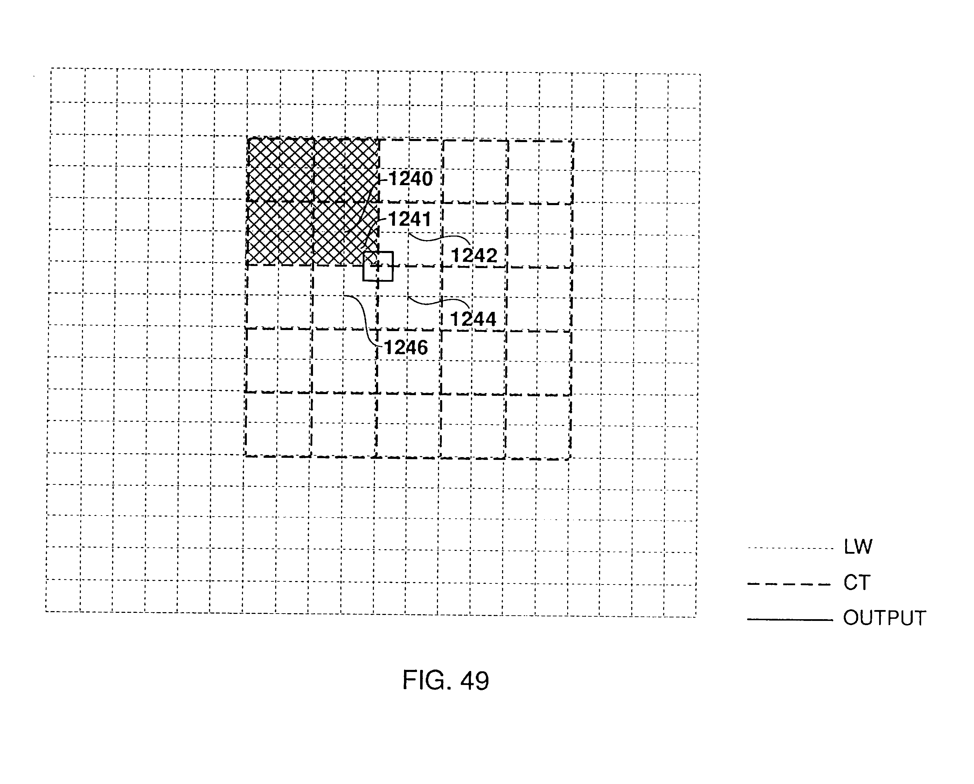

In Fig. 49, the output pixel cannot be computed by 5 x 5 convolution, because the 5 x 5 convolution window, comprising 25 CT pixels shown in broken lines, includes invalid CT pixels. Specifically, the cross hatching indicates nontransparent LW pixels. Therefore, the 2 x 2 output pixels in the uppermost lefthand corner of the convolution window are invalid, since they are entirely covered with nontransparent LW. Therefore, the output pixel is computed by averaging the values of all valid CT pixels which at least partially overlap the output pixel. In the present example, four CT pixels partially overlap the output pixel, namely CT pixels 1240, 1242, 1244 and 1246. However, CT pixel 1240 is invalid. Therefore, the output pixel may be computed by averaging the values of CT pixels 1242, 1244 and 1246 and LW pixel 1241.

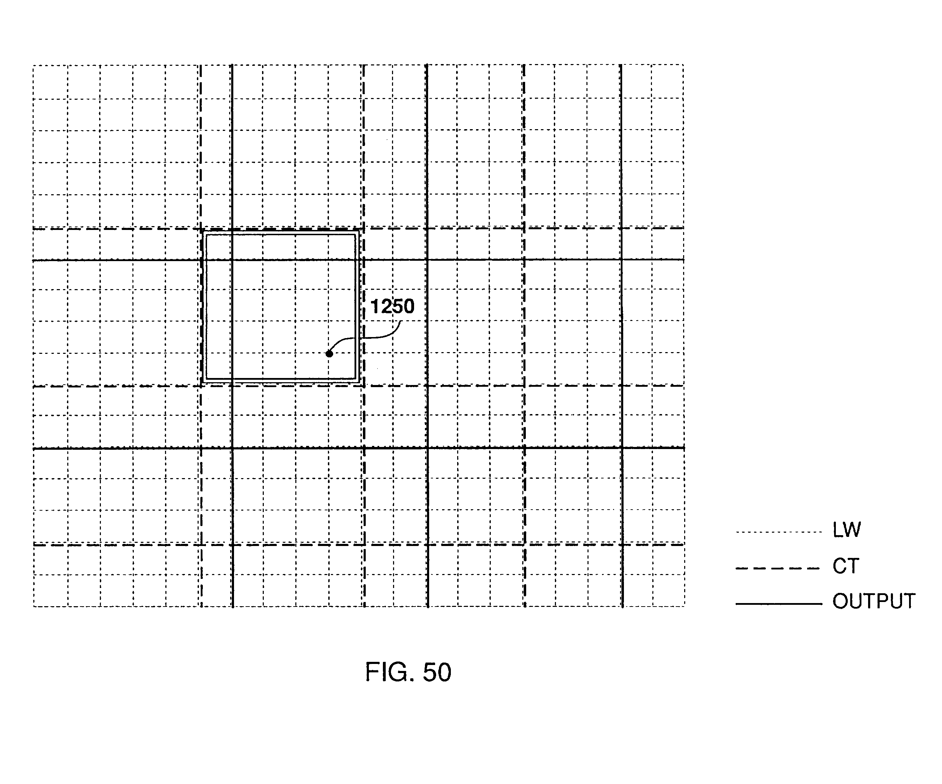

In Fig. 50, the output resolution is smaller than the CT resolution, as in previous figures such as Fig. 45. Specifically, in Fig. 50, the output resolution : CT resolution ratio is 5:6, which is less than 1. In the present example, if it is desired to compute the value of the output pixel 1250 using 3 x 3 convolution, the convolution matrix would be the 3 x 3 CT pixels centered at the CT pixel indicated by a double line. The double-lined pixel is the central CT pixel because it contains the center of output pixel 1250.

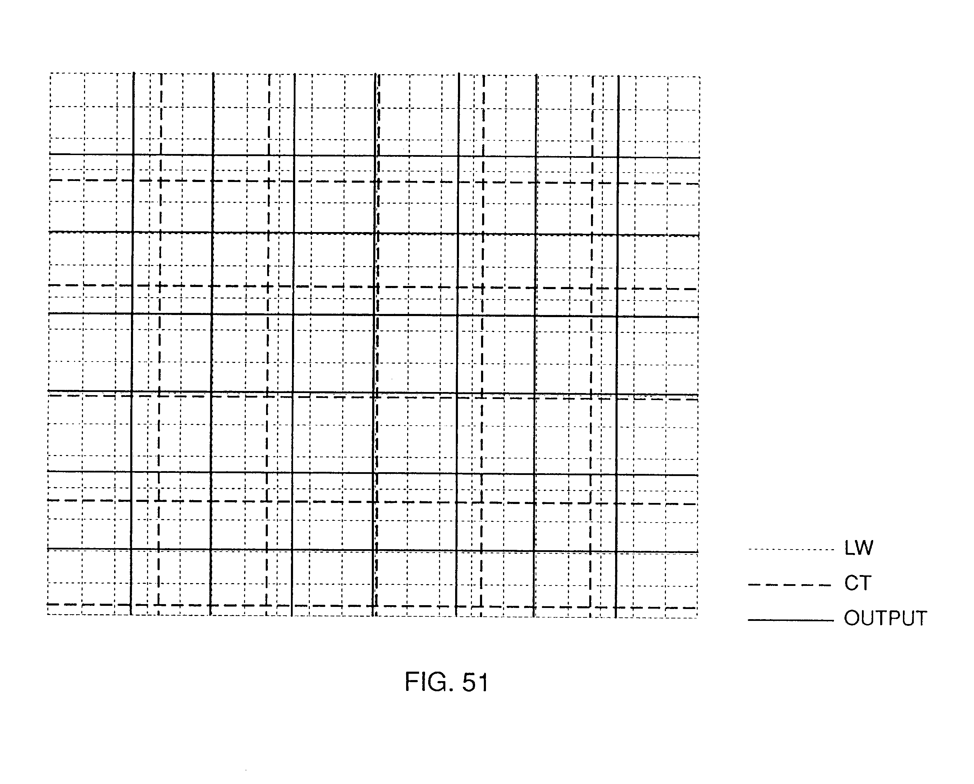

In Fig. 51, the ratio of output resolution to CT resolution is non-integer, as in Fig. 50.

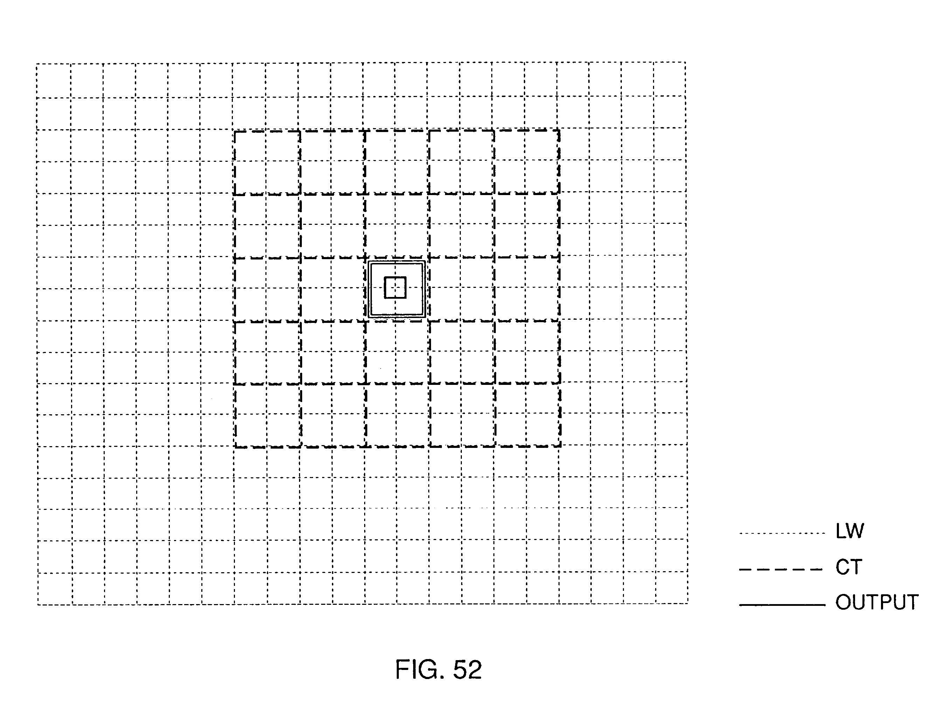

In Fig. 52, the output resolution is larger than the CT resolution, as in Fig. 48. All CT pixels, in the present example, are valid. As seen in Fig. 52, this can result in a situation whereby an output pixel to be computed is entirely contained within a single CT pixel whose outline is indicated by a double line. In this case, the result of the averaging procedure is the value of the double lined CT pixel.

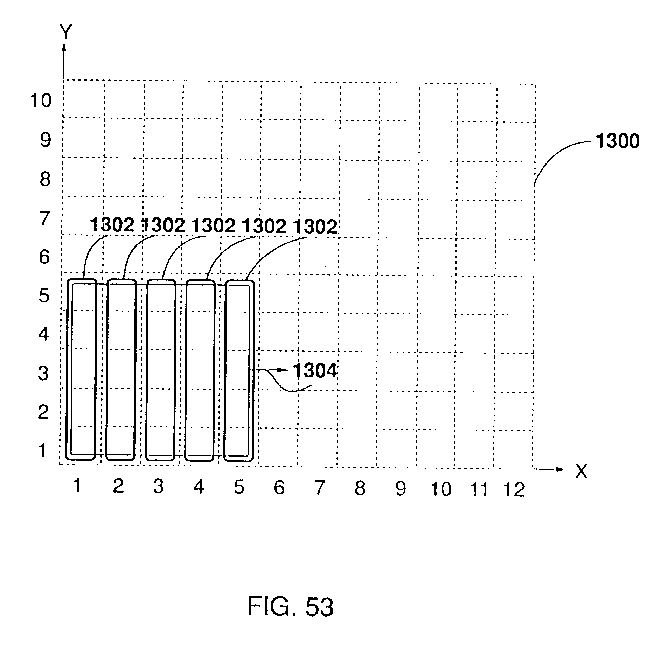

Convolution for more than 2 dimensions is now discussed in detail with reference to Figs. 53 onward and also referring back to Figs. 10, 12, 16 and 17.

The following discussion will pertain mainly to three dimensional convolution and to a comparison of three dimensional convolution to two dimensional convolution. It is appreciated, however, that the applicability of the discussion is not limited to three dimensions but rather, that the present discussion is intended to be illustrative of the principles required for implementing convolution of any desired dimension.

In the following discussion, the size of the convolution window is taken to be 5 x 5, or 5 x 5 x 5. This is merely for the purposes of illustration and it is appreciated that the size of the convolution window may be any suitable size and that the convolution window need not be a square or cube as in the following discussion.

In particular, it is appreciated that d dimensional convolution apparatus may be implemented by combining n devices $D_1, ..., D_n$, where each device $D_i$ (i = 1, ..., n) is operative to perform convolution of dimension $d_i$, and where:

$$\text{sum}_i \, d_i = d.$$

For example, 7 dimensional convolution apparatus may be provided by combining two 2 dimensional convolution devices, each of which may be similar to that described in Fig. 12, with a third 3 dimensional convolution device which may be similar to that described in Fig. 27.

It is appreciated that there are more ways of performing three dimensional convolution by repeatedly performing orthogonal convolutions than there are of performing two dimensional convolution by repeating orthogonal convolutions. This is because there is only one "layer" of partial results in two dimensional convolution, whereas there are two " layers" of partial results in three dimensional convolution.

For example, if two dimensional convolution is performed in a first direction such as the Y direction and then in a second direction such as the X direction, there is only one "layer" of partial results, namely the Y partial results, defined as $\text{sum}_j c_{.j} p_{ij}$ where j runs from 1 to 5. Here each $p_{ij}$ is an input data element, such as a CT pixel.

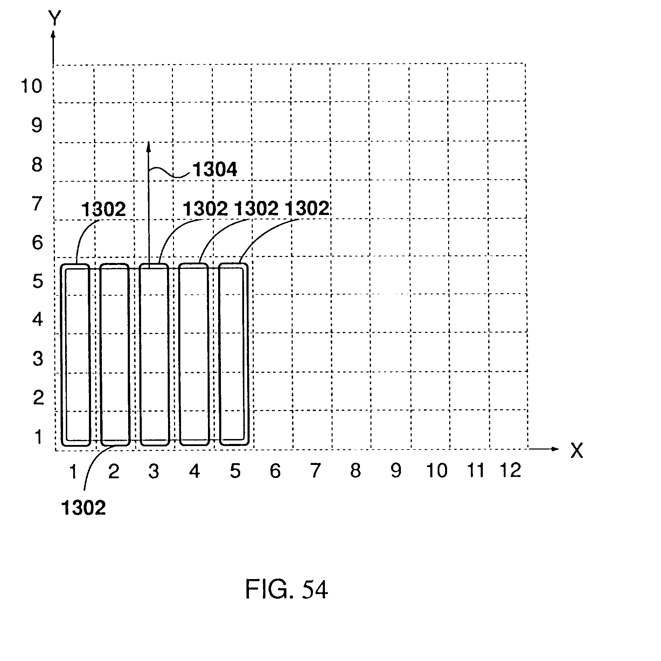

Reference is made to Figs. 53 and 54 which conceptually illustrate a two dimensional input data image 1300 having 10 data elements along the Y axis and 12 data elements along the X axis. Also shown is an array of 5 Y partial results 1302, used in computing an output value for an output pixel whose center falls within the input pixel whose coordinates are (3,3). The input resolution to output resolution ratio is taken to be 1:1 in the present example, for purposes of simplification; however it is appreciated that the present discussion is applicable to any resolution ratio or density ratio.

In the present discussion, a pixel whose position along the X axis is a, and whose position along the Y axis is b is denoted (a,b). Generally, all coordinate system locations are defined herein such that the X coordinates precede the Y coordinates.

An arrow 1304 indicates the first direction of travel of the convolution window over the input data. As seen, in Fig. 53, the convolution window travels along the X axis. When the convolution window has reached the end of the X axis, the convolution window then advances one position along the Y axis (assuming that the input resolution or input density equals the output resolution or output density), again travels all the way along the X axis, and so on. As may be seen from Fig. 53, this way of traveling has the advantage of allowing the X partial results to be reused immediately.

The method of Fig. 53 may be implemented using the apparatus of Fig. 12, discussed above, and using the algorithm of Fig. 26, discussed above.

As seen, in Fig. 54, the convolution window travels along the Y axis. When the convolution window has reached the end of the axis, the convolution window then advances one position along the X axis (assuming that the input resolution or input density equals the output resolution or output density), again travels all the way along the Y axis, and so on. As may be seen from Fig. 53, this way of traveling does not allow the Y partial results to be reused immediately. Therefore, either the Y partial results for a particular position of the convolution window must be discarded, or the Y partial results for a particular position (such as the position shown in which the convolution window occupies the array 1-5, 1-5) of the convolution window must be stored until the convolution window has traveled up the Y axis until the center thereof is contained within input pixel (3,10), then proceeded to a location (4,1) at the bottom of the Y axis by displaced by 1 along the X axis, and finally has returned to the original position 3 along the Y axis, at location (4,3). Only when the convolution window is centered at (4,3), in which case the convolution window occupies the array [2,6] x[1,5] will the partial results computed when the convolution window occupied its initial position be used.

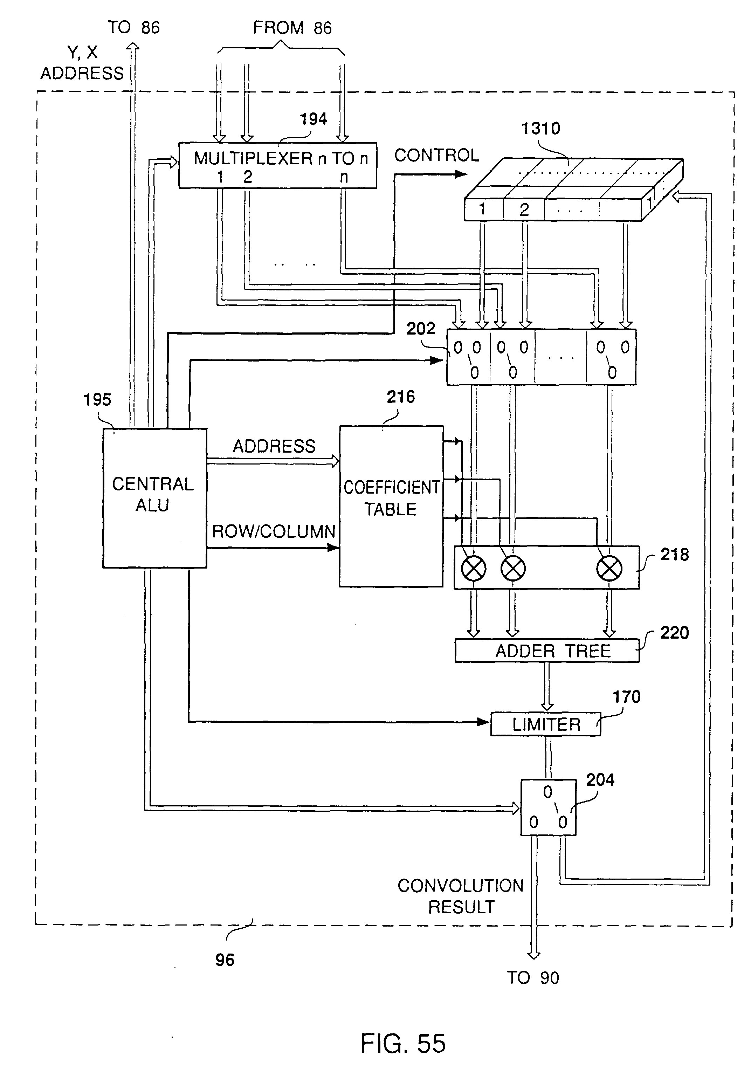

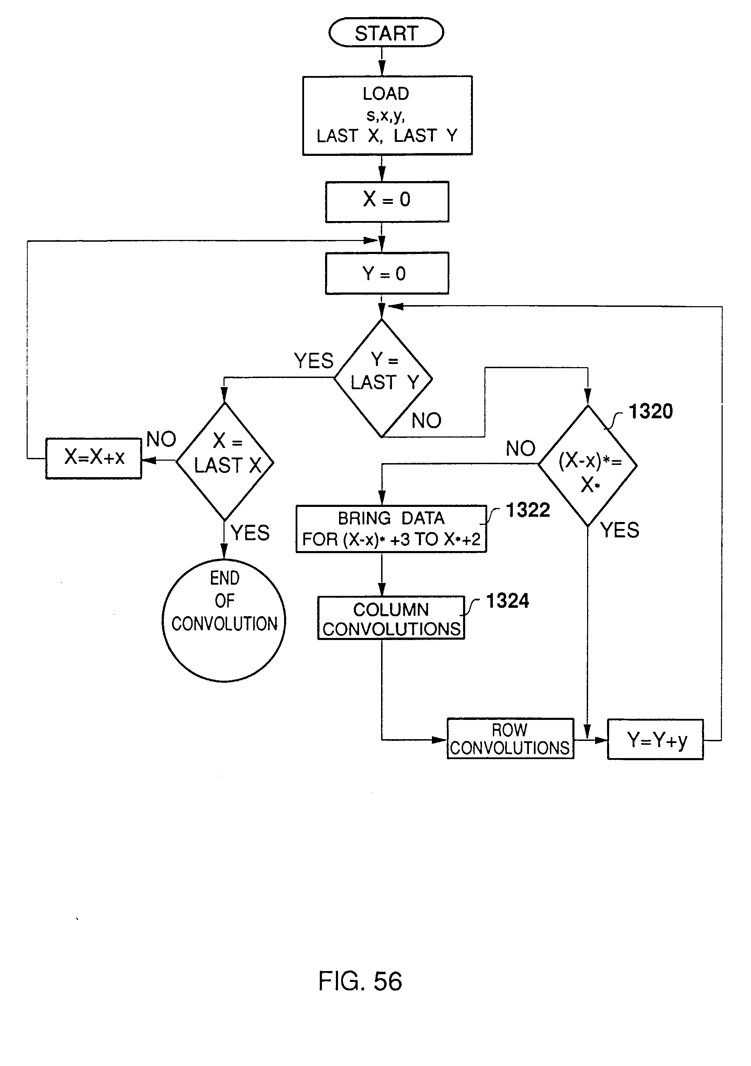

Reference is now made to Fig. 55, which is a block diagram of apparatus useful in implementing the method of Fig. 53, and to Fig. 56 which is an algorithm useful in implementing the method of Fig. 54.

The apparatus of Fig. 55 is similar to the apparatus of Fig. 12, except for the following difference:

The shift register array 190 is replaced by a shift register array 1310. Shift register array 1310 may comprise A shift register arrays, each of which may be substantially identical to the shift register array 190 of Fig. 12, where:

$A = Y/y$. If $Y/y$ is not an integer, then it is rounded upward to obtain the value for A;
Y is the length of the image along the Y axis (10, in Fig. 54); and
y is as defined above with reference to Figs. 12 and 26.

The A shift register arrays are arranged in parallel. Central ALU is operative to select an appropriate one of the A shift register arrays, using the latch 246 enable signals and the output enable signals described above with reference to Fig. 17.

The method of Fig. 56 is the same as the method of Fig. 26, except for the following differences:

x, y, LX, last LX, last Y and Y are replaced in Fig. 56 by y, x, Y, last Y, last X and X respectively, because in Fig. 56, the convolution window travels first in the Y direction and then in the X direction, whereas in Fig. 26 the convolution window travels first in the X direction and then in the Y direction.

A decision step 1320 is added in which $(X-x)^*$ is compared to $X^*$, where * indicates the integer part of the appropriate variable. In this step, the present location along the X axis of the convolution center on the input grid is compared to the previous location along the X axis of the convolution center on the input grid. If the present and previous locations are the same, in other words, if the center of the convolution is still within the same input pixel, no new partial results need be computed and therefore, the column convolution section of the flowchart is bypassed and the algorithm proceeds directly to row convolution.

The bring data step 1322 comprises the step of bringing the following columns: $(X-x)^* + 3$ to $X^* + 2$. This is because the columns presently require are $X^* + 2$ and the four rows preceding it. However, column $(X-x)^* +2$ and all columns preceding it were already brought. In the present example, where the ratio of input resolution to output resolution is 1: 1, the bring data step 1322 always comprises the step of bringing a single column of data per separation.

In the column convolution step 1324, only the columns of data which were brought in the preceding bring data step 1322 are convolved. All other columns of data need not be convolved since the column convolution results thereof are stored in SIPO array 1310.

After the row convolution step, the value of Y is updated.

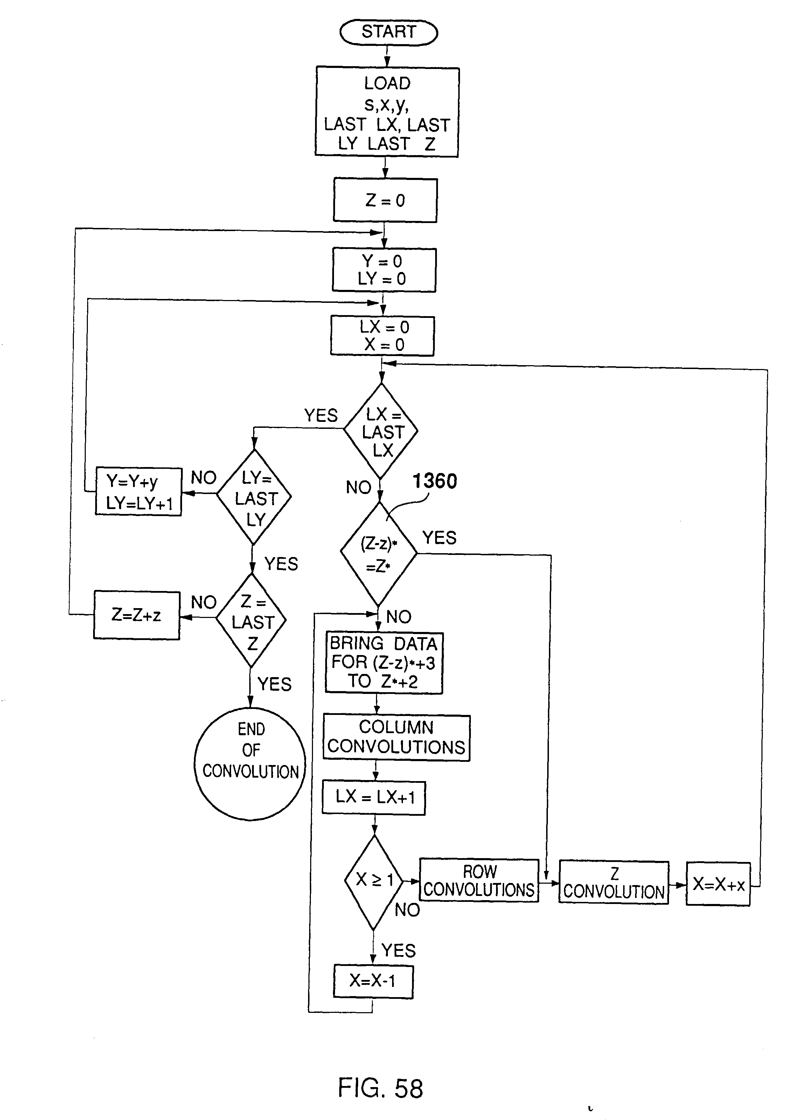

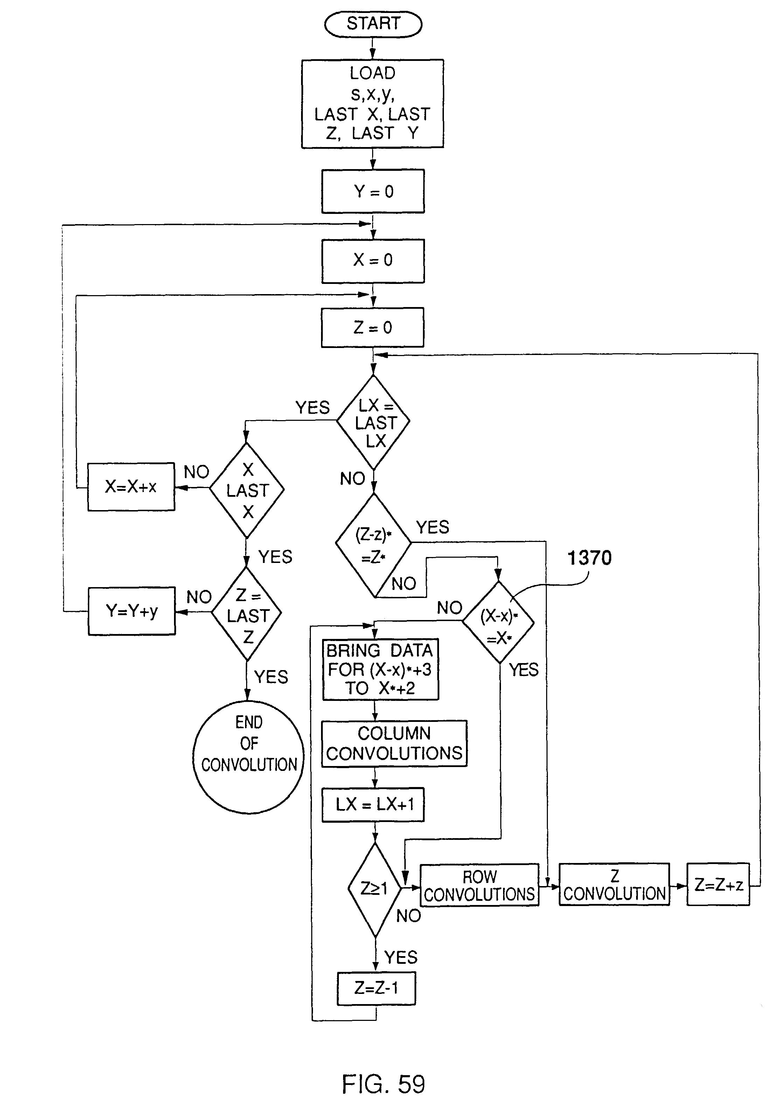

Methods for convolving data comprising a plurality of separations are described in detail above with reference to Figs. 10, 12, 16, 17, etc. Therefore, for brevity, the present discussion and the discussion below referring to Figs. 58 and 59 do not include a reiteration of the particular features of multiple separation convolution.

If orthogonal three dimensional convolution is performed, in a first direction such as the Y direction and then in a second direction such as the X direction, and finally in a third direction such as the Z direction, there are two "layers" of partial results, namely the Y partial results, defined as:

$$R_{ik} = \text{sum}_j c_{.j.} p_{ijk}$$

where j runs from 1 to 5; and the XY partial results, defined as:

$$R_k = \text{sum}_i c_{i..} R_{ik},$$

where i runs from 1 to 5. Here each $p_{ijk}$ is an input data element. It is appreciated that the choice of Y, X and Z as the first, second and third directions respectively is arbitrary.

It is appreciated that there are six different ways for the convolution window, which, in the present example is a cube, to travel over the data, corresponding to the six possible permutations of the three axes X, Y and Z. The six different ways may be referenced XYZ, XZY, YXZ, YZX, ZXY and ZYX.

XYZ travel will now be defined in detail, the five other ways to travel over the data being analogously defined:

XYZ travel is defined as the convolution "cube" traveling first along the X axis, then along the Y axis and finally along the Z axis. In other words, XYZ travel means that the center of the convolution window or cube starts from an initial output element $q_{111}$ and continues as follows until a final output element $q_{MMM}$ is reached, assuming that the output image comprises M x M x M output elements:

$q_{111}, \cdots q_{M11}; q_{121}, \cdots q_{M21}; \cdots q_{1M1}, \cdots q_{MM1}$
then
$q_{112}, \cdots q_{M12}; q_{122}, \cdots q_{M22}; \cdots q_{1M2}, \cdots q_{MM2}$
and so on, until
$q_{11M}, \cdots q_{M1M}; q_{12M}, \cdots q_{M2M}; \cdots q_{1MM}, \cdots q_{MMM}.$

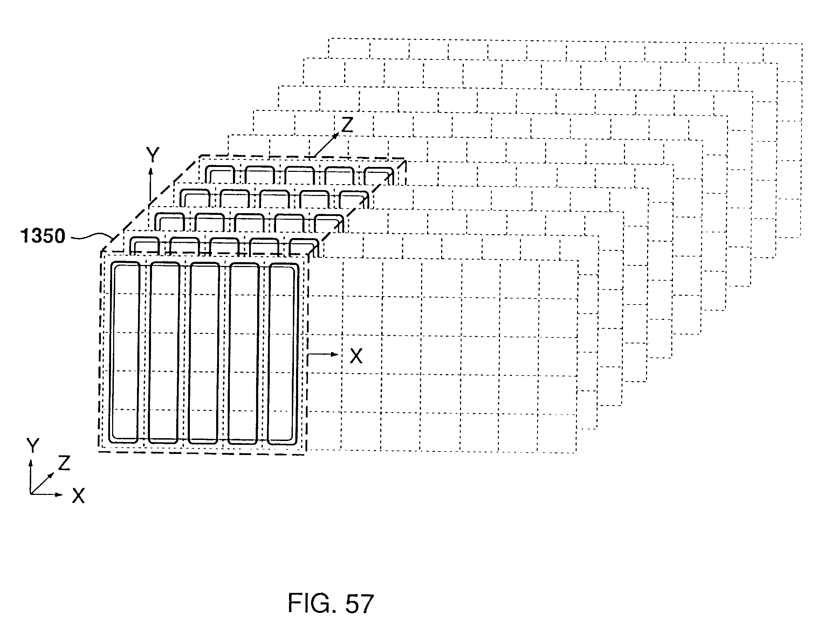

Reference is now made briefly to Fig. 57 which illustrates a convolution window or cube 1350 and the three possible directions of advancement therefore, indicated by the three arrows X, Y and Z.

In XYZ travel, the center of the convolution cube traverses all values of X for a particular Y before advancing along the Y axis and traverses all values of Y before advancing along the Z axis. The entire convolution cube is preferably read before the center of the convolution cube advances to a different X value, in order to minimalize the number of partial results to be stored.

In all travel patterns, the Y partial results may be reused for one or more XY computations as the convolution cube travels along the X axis and the XY partial results may be reused for one or more ZXY computations as the convolution cube travels along the Z axis.

According to a preferred realisation, a travel pattern is selected which minimizes the amount of storage of partial results. Selection of a travel pattern in order to reduce the required partial result storage area is determined by the ratio between the number of positions along each of the three dimensions X, Y and Z. The number of positions along a particular dimension is a function of the input resolution: output resolution ratio along that dimension, as well as the length of the color image or page along that dimension.

For example:

1. In most cases, except when the number of positions along the Y axis is relatively small, the center of the convolution cube preferably travels along the Y axis after traveling along both of the other two axes. In other words, XZY and ZXY travel patterns are both preferred to XYZ, YXZ, YZX and ZYX. This is because, in the XYZ pattern, the YX partial results must be stored for an entire Y cycle, which includes a plurality of X cycles, before being reused. In the ZYX pattern, the Y partial results must be stored for an entire Y cycle, which includes a plurality of Z cycles, before being reused. In the YXZ pattern, the Y partial results must be stored for an entire Y cycle and the YX partial results must be stored for an entire X cycle, which includes a plurality of Y cycles. In the YZX pattern, the Y partial results must be stored for an entire Z cycle, which includes a plurality of Y cycles, and the YX partial results must be stored for an entire Y cycle.

2. If the number of positions along each of the three axes is the same, then, for 5 x 5 x 5 convolution, it is preferable to store YX results, and not Y results, by traveling the X axis before the Z axis. Consequently, XZY is a better travel pattern than ZXY and YXZ is a better travel pattern than YZX. This is because for every 5 YX results which need to be stored, the 25 Y results used to compute those 5 YX results do not need to be stored.

It is appreciated that in particular applications there may be restrictions on the access to the data, such as when data is scanned in a particular direction. In these applications, instead of selecting a particular travel pattern, the definitions of the first, second and third directions in which the three dimensional convolution is performed may be selected.

Reference is made back to Fig. 28, described in detail above, which is a flowchart suitable for implementing the XYZ travel pattern described above.

In the flowchart of Fig. 28, the 2 dimensional partial results are not reused for computing successive final results which have 2 dimensional partial results in common.

Apparatus for implementing the flowchart of Fig. 28 may comprise the apparatus of Fig. 27. As explained above with reference to Fig. 27, the shift register 223 serves to store 25 Y partial results. Shift register 222 serves to store 5 YX partial results.

Reference is now made to Fig. 58 which, like Fig. 28, is a flowchart suitable for implementing the XYZ travel pattern described above. Unlike the flowchart of Fig. 28, the 2 dimensional partial results are here reused when computing successive final results which have 2 dimensional partial results in common.

The flowchart of Fig. 58 is similar to the flowchart of Fig. 28 except that an additional decision block 1360 is added which compares the integer part of Z-z to the integer part of Z, the integer part of Z being the position along the Z axis and z is the ratio of input resolution to output resolution. In other words, z is the amount of displacement of the convolution window along the third dimension of the input pixels. If the integer part of Z-z equals the integer part of Z, no new 2 dimensional partial result need be computed and the algorithm proceeds directly to Z convolution without bringing new new data and without computing a new 2 dimensional partial result. If the integer part of Z-z does not equal the integer part of Z, the algorithm proceeds as in Fig. 28.

Apparatus for implementing the flowchart of Fig. 58 may comprise the apparatus of Fig. 27. However, shift register 222 now must be replaced with a shift register large enough to store the YX partial results corresponding to an entire x cycle. In other words, shift register 222 must be replaced by a parallel array of LX/x shift registers, each of which is identical to shift register 222. If LX/x is not an integer, the number of shift registers is rounded upward from the value of LX/x. Shift register 223 serves to store 25 Y partial results, as in Fig. 27.

Reference is now made to Fig. 59 which is a flowchart suitable for implementing the ZXY travel pattern. As in the flowchart of Fig. 59, the 2 dimensional partial results are here reused when computing successive final results which have 2 dimensional partial results in common. However, in the flowchart of Fig. 59 the 1 dimensional partial results are also reused when computing successive 2 dimensional partial results which have 1 dimensional partial results in common. An entire Z cycle separates each pair of successive 2 dimensional partial results having 1 dimensional partial results in common. In the flowchart of Fig. 58, 1 dimensional partial results are not reused.

The flowchart of Fig. 59 is generally similar to the flowchart of Fig. 58 except for the following differences:

The roles of X, Y, Z and their respective related parameters, variables and procedures in Fig. 58 are respectively replaced by Z, X and Y in Fig. 59, because the flowchart of Fig. 58 implements a XYZ travel pattern, whereas the flowchart of Fig. 59 implements a ZXY travel pattern.

An additional decision block 1370 is added which compares the integer part of X-x to the integer part of X, where the integer part of X is the position along the x axis and x is the ratio of input resolution to output resolution. In other words, x is the amount of displacement of the convolution window along the third dimension of the output pixels. If the integer part of X-x equals the integer part of X, no new 1 dimensional partial result (column convolution) need be computed and the algorithm proceeds directly to 2 dimensional convolution (row convolution) without bringing new data and without computing a new 1 dimensional partial result. If the integer value of X-x does not equal the integer value of X, the algorithm proceeds as in Fig. 58.

Apparatus for implementing the flowchart of Fig. 59 may comprise the apparatus of Fig. 27. However, shift register 223 now must be replaced with a shift register large enough to store the Y partial results corresponding to an entire Z cycle. In other words, shift register 223 must be replaced by a parallel array of Z shift registers, each of which is identical to shift register 223. Shift register 222 serves to store 5 YX partial results, as in Fig. 27.

The above discussion of Figs. 10, 12, 26 - 28 and 53 - 59 describes generally preferred hardware implementations of convolution apparatus which preferably have the following advantages:

orthogonal convolution computation methods are used rather than conventional convolution computation methods; the same data manipulation unit (multipliers, adders, etc.) is used for more than one dimension of the multidimensional orthogonal convolution operation;

partial results are stored and reused rather than being computed anew, thereby to enhance the efficiency of the convolution operation; the order of directions in which the convolution window advances, relative to the order of dimensions within each orthogonal convolution computation, is selected such that maximal reuse of partial results is provided for a given storage capacity;

multi-component data, such as color images having a plurality of separations, may be processed; multidimensional data wherein different input resolution: output resolution ratios, or, more generally, different input density: output density ratios are defined for different axes, may be processed.

The above discussion referred, for the purposes of illustration, to 2 dimensional convolution and 3 dimensional convolution. It is appreciated that the above discussion is generalizable to convolution apparatus having any number of dimensions. Furthermore, the above discussion is generalizable to implementations, such as hardware implementations, of any separable and symmetric function such as Fourier transforms, Walsh transforms, maximum and minimum functions and other extreme value functions.

Hardware implementations of convolution having any number of dimensions is now discussed in detail with reference to the forgoing discussion.

It is appreciated from the particular examples shown and described hereinabove that a convolution algorithm may be facilitated by selecting the order of axes along which the convolution window advances, relative to the order of dimensions within each orthogonal convolution computation. Specifically, it is preferably to select a first axis along which the convolution window is to advance such that one "layer" of partial results may be reused immediately. In two dimensional convolution, there is only one "layer" of partial results and therefore there is a single axis of advancement which allows that layer of partial results to be reused immediately.

It is appreciated that the layer of partial results which corresponds to the first axis along which the convolution window advances is reused immediately. In convolution of three dimensions or more, only one of the two or more layers of partial results may be reused immediately. The remaining one or more layers of partial results must be stored. For example, in fivedimensional convolution, in the best case, a first remaining layer must be stored while the convolution window advances along an axis, a second remaining layer must be stored while the convolution window advances along two axes, i.e. travels over a two dimensional array and a third remaining layer must be stored while the convolution window advances along three axes, i.e. travels over a three dimensional array.

It is appreciated that in convolution of more than two dimensions, the convolution operation may be either orthogonal, conventional (entirely non-orthogonal) or a combination of the two. For example, in three dimensional convolution, assuming that it is feasible to perform entirely orthogonal convolution, it is preferable to perform entirely orthogonal convolution rather than partially orthogonal convolution. Similarly, if partially orthogonal convolution is feasible and entirely orthogonal convolution is not, partially orthogonal convolution is preferable over conventional, non-orthogonal convolution.

In the above paragraph, "entirely orthogonal convolution", "partially orthogonal convolution" and "non-orthogonal convolution" refer respectively to the following types of computation, using 5 x 5 X 5 three dimensional convolution as an example and using the notation developed above:

Orthogonal convolution:

Compute $R = \text{sum}_k c_{.k.} R_k$, where k runs from 1 to 5,
where each $R_k$ is computed as follows:
$R_k = \text{sum}_i c_{i..} R_{ik}$, where i runs from 1 to 5, and
where each $R_{ik}$ is computed as follows:
$R_{ik} = \text{sum}_j c_{.j.} p_{ijk}$ where j runs from 1 to 5.

Partially orthogonal convolution:

In three dimensional convolution, there are two types of partially orthogonal convolution:
   2+1 convolution:
Compute $R = \text{sum}_k c_{.k.} R_k$, where k runs from 1 to 5,
where each $R_k$ is computed as follows:
$R_k = \text{sum}_{i,j} c_{ij} p_{ijk}$, where i and j run from 1 to 5.
   1+2 convolution:
Compute $R = \text{sum}_{i,k} c_{i.k} R_{ik}$, where i and k run from 1 to 5, and where each $R_{ik}$ is computed as follows:

$$R_{ik} = \text{sum}_j c_{.j.} p_{ijk}.$$

Non-orthogonal convolution:

Compute $R = \text{sum}_{ijk} c_{ijk} p_{ijk}$
The coefficients are interrelated as follows: For all i, j and k:

$$c_{ijk} = c_{i..} \ X \ c_{.j.} \ X \ c_{..k};$$

$$c_{ij.} = c_{i..} \times c_{.j.};$$

$$c_{i.k} = c_{i..} \times c_{..k};$$

and

$$c_{.jk} = c_{.j.} \times c_{..k}.$$

It is appreciated that the number of types of partially orthogonal convolution types increases as the dimension of the convolution increases. For 2 dimensional convolution, there is one type of partially orthogonal convolution. For 3 dimensional convolution, there are two types of partially orthogonal convolution, termed above 1+2 convolution and 2+1 convolution. For 4 dimensional convolution, the following types of partially orthogonal convolution exist, using terminology analogous to that used to define the two types of 3 dimensional convolution: 1+3, 3+1, 2+2, 1+1+2, 1+2+1 and 2+1+1.

Partially orthogonal convolution computations are useful when fully orthogonal convolution is unsuitable. For example, the input data elements may be stored such that the type of access required for a fully orthogonal convolution process is impractical. Also, the convolution coefficients may be only partially "factorable". For example, in a particular 3 dimensional convolution application, it may be possible to define $c_{ij.}$ and $c_{..k}$ such that, for all $i,j,k$:

$$c_{ijk} = c_{ij.} \times c_{..k}$$

The apparatus and methods shown and described above in Figs. 12, 26-28 and 53- 59 have the advantage of reducing the number of operations by reuse of partial results while requiring relatively little storage space despite the need to store all but one layer of partial results. This is because the structure of the apparatus, and particularly the structure of the SIPO and the cyclic permutation introducing multiplexer, require a relatively small portion of the image to be accessible at any one time, without complicated data management processes. Also, less coefficients need be stored. In other words, the apparatus of Figs. 12, 26 - 28 and 53 - 59 enhance the efficiency of orthogonalized or partially orthogonalized convolution relative to partially orthogonalized or non-orthogonal, conventional convolution.

It is appreciated that the virtual arrangement of digital data in a multidimensional array need not have a physical counterpart in the physical phenomenon represented by the digital data. For example, pixels representing a two dimensional color image may be virtually arranged in a two dimensional array comprising rows and columns. In this example, each row or column of the two dimensional array of digital data corresponds to a physical row or column which is perceived by an observer of the physical picture. However, the plurality of pixels representing a single row of the color image may, if advantageous, be virtually arranged as a multidimensional array even though that multidimensional array has no physical counterpart. For example, if a single row of a color image is represented by 100 pixels $p_1,...p_{100}$, the row may be arranged into a 10 x 10 array in which the jth row is $p_{10(j-1)+1}, \cdots p_{10(j-1)+10}$.

Representation of data as a multidimensional array allows orthogonalized convolution processes to be employed. This has the advantage of allowing a convolution kernel to be used which is larger than the size of the convolution computing unit. For example, using the adder tree of Fig. 12, a kernel of size up to $5^k$ may be employed if k-1 storage units such as SIPO registers are provided for the k-1 layers of partial results. When the partial results are convolved, the coefficients may be all 1's. Alternatively, the coefficients may be determined by factoring the polynomial corresponding to the kernel of convolution coefficients into smaller degree polynomials as explained in the above-referenced text by Nussbaumer.

General hardware implementations of separable and symmetric functions such as Fourier transforms, Walsh transforms, Hadamard transforms, discrete cosine transforms, maximum and minimum functions and other extreme value functions, as well as convolution, are now discussed with reference to the forgoing discussion.

Separable and symmetric functions such as fast Fourier transforms (FFT) and convolution are discussed in the following documents:

Gonzalez and Wintz, <u>Digital Image Processing</u>, 1987, particularly the pages appended hereto as Appendix T; and
Nussbaumer, <u>Fast Fourier Transform and Convolution Algorithms</u>, Springer-Verlag, Berlin, 1980.

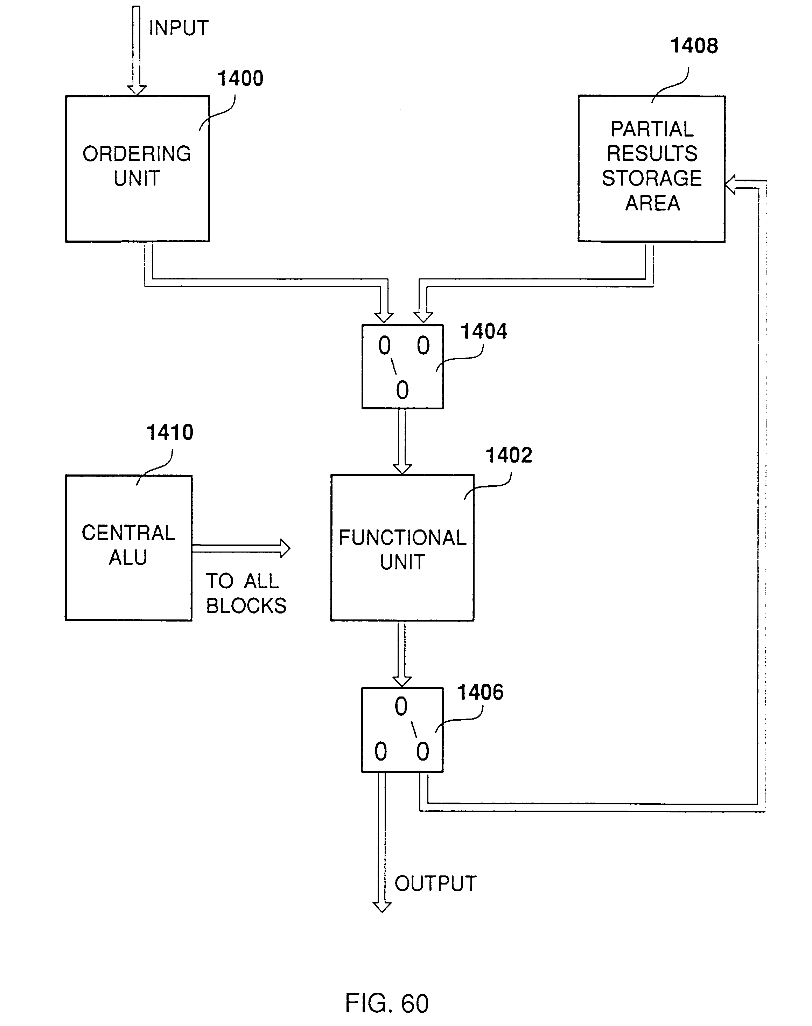

Reference is now made to Fig. 60, which is a block diagram of general apparatus for operating a separable and symmetric function on a body of data. Since the function (termed herein "the first function") is separable and symmetric, operating the function on the body of data is mathematically equivalent to operating a second function on the body of data and operating a third function, functionally equal to the second function, on the results of the second function. The results of the second function are termed herein "partial results" or "the first layer of partial results".

More generally, the apparatus of Fig. 60 may also be employed for operating a fourth function, functionally equal to the second and third functions, on the results of the third function, and for similarly operating fifth, sixth, seventh, ... functions, all functionally equal to one another and to the preceding functions, up to any desired number of functions. The results of the third, fourth, fifth, sixth, ... functions are termed "the second, third, fourth, fifth, ... layers of partial results", respectively.

The apparatus preferably comprises a data ordering unit 1400, a functional unit 1402, input and output switches 1404 and 1406 respectively, associated with the functional unit 1402, and a partial results storage area 1408. A central ALU 1410 controls all units.

The data ordering unit 1400 receives a plurality of streams of data corresponding in number to a plurality of positions in an imaginary "window" upon which the second function operates. The data ordering unit is operative to reorder the plurality of current data elements provided by the plurality of data streams such that each data stream provided to input switch 1404 continually corresponds to a particular position within the window. According to a preferred embodiment of the invention, the data ordering unit comprises a cache for storing raw data elements. The raw data elements in the cache may be used to compute more than one "first layer" partial result.

The functional unit 1402 operates the second function on the raw data arriving from ordering unit 1400 and operates the third function on the partial results data arriving from storage means 1408. The functional unit 1402 also preferably stores and/or computes any parameters such as coefficients required for the second and third functions.

The input switch 1404 has a first position (shown), corresponding to the raw data, which allows the functional unit 1402 to receive raw data via ordering unit 1400, and a second position (not shown), corresponding to the partial results data, which allows the functional unit 1402 to receive partial results data from partial results storage area 1408.

The output switch 1406 has a first position (shown), which allows the functional unit 1402 to provide partial results data to storage area 1408, and a second position (not shown), which allows the functional unit 1402 to output final results.

Partial results storage area 1408 preferably comprises a plurality of arrays, each operative to store one of the layers of partial results. The arrays of partial results are preferably addressed by central ALU 1410. Each array of partial results is preferably structured such that each position therewithin, which normally stores a partial result of a particular kth layer, continually corresponds to a particular position within an imaginary window upon which the (k+1)th function operates. Each array of partial results is also preferably structured and managed such that partial results which are still needed are not overwritten, whereas partial results which are no longer needed are overwritten almost immediately.

Central ALU 1410 is also operative to synchronize the system of Fig. 60, introducing necessary delays, preferably by controlling the flow of information through partial results storage area 1408 and ordering unit 1400. Central ALU 1410 is also operative to control the pipeline by controlling the operation of switches 1404 and 1406. Management and ordering of the pipeline segments may be implemented using well known principles of the art such as those described in Computer Architecture and Parallel Processing, Hwang and Briggs, McGraw Hill, 1984.

According to a preferred realisation, the ordering unit 1400 and the partial results storage area 1408 are operative to channel edge data so as to overcome missing data at the edge of the processed data, as explained above in detail in connection with convolution apparatus. Similar techniques may be used to overcome other types of missing data.

The term "complementary subset" as used in the present specification and claims with relation to a subset A of a particular set B refers herein to the set of all members of B which are not members of subset A.

It will be appreciated by persons skilled in the art that the color image processing apparatus and techniques shown and described herein are not limited to processing of any particular color image representation format, such as CT/LW format.

It will be appreciated by persons skilled in the art that there have been described hereinabove apparatus and techniques for information storage and apparatus and techniques for carrying out convolution whose applications are not limited to graphics applications.

It will be appreciated by persons skilled in the art that the present invention is not limited to what has been particularly shown and described hereinabove. Rather, the scope of the present invention is defined only by the claims which follow:

## Claims

1. Apparatus for processing an image characterized by first and second pluralities of colour characteristics comprising a format processing unit (14) for receiving said first and second pluralities of colour characteristics expressed in corresponding first and second formats and producing therefrom a third plurality of colour characteristics expressed in a third format, said format processing unit comprising:

means (38) for converting the format of said first plurality of colour characteristics expressed in said first format into said third format by performing a resolution conversion;
means (32) for converting the format of said first plurality of colour characteristics to produce first and second pluralities in formats having identical resolution;
means (36) for merging said first and second pluralities of colour characteristics having said identical resolution thereby producing a fourth plurality of colour characteristics;
means (74) for converting the formats of said fourth plurality of colour characteristics into said third format; and
means (42) for merging said first and fourth pluralities of colour characteristics in said third format, thereby providing said third plurality of colour characteristics in said third format.

2. Apparatus according to claim 1, comprising means (112) for converting said second plurality of colour characteristics from a fourth format to said second format.

3. Apparatus according to claim 1, comprising a colour processing unit (28,29) for receiving said third plurality of colour characteristic and producing therefrom a fifth plurality of colour characteristics.

4. Apparatus according to claim 1, wherein said merging is determined based on control information included in one of said first and second formats.

5. Apparatus according to claim 1 comprising a colour processing unit (12) operative to execute a predetermined colour transformation in accordance with an indication included in said third plurality of colour characteristics and readable by said colour processing unit.

6. A method for processing an image characterized by first and second pluralities of colour characteristics, the method comprising the steps of:

receiving said first and second pluralities of colour characteristics expressed in corresponding first and second formats; and
producing therefrom a third plurality of colour characteristics expressed in a third format, said step of producing comprising the steps of:
converting the format of said first plurality of colour characteristics expressed in said first format into said third format by performing a resolution conversion;
converting the format of said first plurality of colour characteristics to produce first and second pluralities in formats having identical resolution;
merging said first and second pluralities of colour characteristics at identical resolution, thereby producing a fourth plurality of colour characteristics; converting the formats of said fourth plurality of colour characteristics into said third format including at least a resolution conversion: and
merging said first and fourth pluralities of colour characteristics in said third format, thereby providing said third plurality of colour characteristics in said third format.

7. A method according to claim 6, comprising converting said second plurality of colour characteristics from a fourth format to said second format.

8. A method according to claim 6, comprising receiving said third plurality of colour characteristic and producing therefrom a fifth plurality of colour characteristics expressed in said third format.

9. A method according to claim 6, wherein said merging is determined based on control information included in one of said first and second formats.

10. A method according to claim 6 wherein said third plurality of colour characteristics also includes an indication readable by a colour processing unit and comprising the step of executing a predetermined colour transformation using said colour processing unit (12), in accordance with said indication.

11. Apparatus for processing an image characterized by first and second pluralities of colour characteristics comprising a format processing unit for receiving said first and second pluralities of colour characteristics expressed in corresponding first and second formats and producing therefrom a third plurality of colour characteristics expressed in a third format, said format processing unit comprising:

> means (94, 96, 98) for converting the format of said first plurality of colour characteristics expressed in said first format into said third format employing a first resolution conversion, thereby obtaining a fourth plurality of colour characteristics in said third format:
> means (94, 96, 98) for converting the format of said first plurality of colour characteristics expressed in said first format into said third format employing a second resolution conversion, thereby obtaining a fifth plurality of colour characteristics in said third format;
> means (92) for converting the format of said second plurality of colour characteristics expressed in said second format into said third format, thereby obtaining a sixth plurality of colour characteristics in said third format;
> means (90,420,428) for selecting one from said fourth plurality of colour characteristics and said fifth plurality of colour characteristics, thereby obtaining a seventh plurality of colour characteristics;
> means (422) for merging said sixth and seventh pluralities of colour characteristics in said third format, thereby producing said third plurality of colour characteristics in said third format.

12. Apparatus according to claim 11, comprising a colour processing (28, 29) unit for receiving said third plurality of colour characteristic and producing therefrom an eighth plurality of colour characteristics expressed in said third format.

13. Apparatus according to claim 11, wherein said merging is determined based on control information included in one of said first and second formats.

14. Apparatus according to claim 12 comprising a colour processing unit (12) operative to execute a predetermined colour transformation in accordance with an indication included in said third plurality of colour characteristics and readable by said colour processing unit.

15. A method for processing an image characterized by first and second pluralities of colour characteristics, the method comprising the steps of:

> receiving said first and second pluralities of colour characteristics expressed in at least corresponding first and second formats; and
> producing therefrom a third plurality of colour characteristics expressed in a third format, said step of producing comprising the steps of:
> converting the format of said first plurality of colour characteristics expressed in said first format into said third format employing a first resolution conversion, thereby obtaining a fourth plurality of colour characteristics in said third format;
> converting the format of said first plurality of colour characteristics expressed in said first format into said third format employing a second resolution conversion, thereby obtaining a fifth plurality of colour characteristics in said third format;
> converting the format of said second plurality of colour characteristics expressed in said second format into said third format, thereby obtaining a sixth plurality of colour characteristics in said third format;
> selecting one from said fourth plurality of colour characteristics and said fifth plurality of colour characteristics, thereby obtaining a seventh plurality of colour characteristics; and
> merging said sixth and seventh pluralities of colour characteristics in said third format, thereby producing said third plurality of colour characteristics in said third format.

16. A method according to claim 15, comprising receiving said third plurality of colour characteristic and producing therefrom an eighth plurality of colour characteristics expressed in said third format.

17. A method according to claim 15, wherein said merging is determined based on control information included in one of said first and second formats.

18. A method according to claim 16, wherein said third plurality of colour characteristics also includes an indication readable by a colour processing unit and comprising the step of executing a predetermined colour transformation using said colour processing unit (12), in accordance with said indication.

**Patentansprüche**

1. Vorrichtung zur Bearbeitung eines Bildes, das durch eine erste und zweite Vielzahl von Farbeigenschaften gekennzeichnet ist, welche eine Format-Bearbeitungseinheit (14) umfaßt, um die erste und zweite Vielzahl von Farbeigenschaften zu empfangen, die in entsprechenden ersten und zweiten Formaten ausgedrückt werden, und um daraus eine dritte Vielzahl von Farbeigenschaften zu erzeugen, die in einem dritten Format ausgedrückt werden, wobei die Format-Bearbeitungseinheit folgende Komponenten umfaßt:

   Mittel (38) zur Umwandlung des Formats der ersten Vielzahl von Farbeigenschaften, die in dem ersten Format ausgedrückt werden, in das dritte Format, wozu eine Auflösungsumwandlung vorgenommen wird;
   Mittel (32) zur Umwandlung des Formats der ersten Vielzahl von Farbeigenschaften, um eine erste und zweite Vielzahl in Formaten zu erzeugen, die eine identische Auflösung haben:
   Mittel (36) zum Zusammenmischen der ersten und zweiten Vielzahl von Farbeigenschaften, die eine identische Auflösung haben, um daraus eine vierte Vielzahl von Farbeigenschaften zu erzeugen;
   Mittel (74) zur Umwandlung der Formate der vierten Vielzahl von Farbeigenschaften in das dritte Format: und
   Mittel (42) zum Zusammenmischen der ersten und vierten Vielzahl von Farbeigenschaften im dritten Format, um daraus eine dritte Vielzahl von Farbeigenschaften in dem dritten Format zu erzeugen.

2. Vorrichtung nach Anspruch 1, die Mittel (112) zur Umwandlung der zweiten Vielzahl von Farbeigenschaften aus einem vierten Format in das zweite Format umfaßt.

3. Vorrichtung nach Anspruch 1, die eine Farb-Bearbeitungseinheit (28, 29) aufweist, um die dritte Vielzahl von Farbeigenschaften zu empfangen und um daraus eine fünfte Vielzahl von Farbeigenschaften zu erzeugen.

4. Vorrichtung nach Anspruch 1, bei der das Zusammenmischen auf der Grundlage von Steuerinformationen bestimmt ist, die in einem der genannten ersten und zweiten Formate enthalten sind.

5. Vorrichtung nach Anspruch 1, die eine Farb-Bearbeitungseinheit (12) umfaßt, die dahingehend wirksam ist, daß sie eine festgelegte Farbtransformation in Übereinstimmung mit einem Hinweis ausführt, der in der dritten Vielzahl von Farbeigenschaften enthalten ist und von der Farb-Bearbeitungseinheit gelesen werden kann.

6. Verfahren zur Bearbeitung eines Bildes, das durch eine erste und zweite Vielzahl von Farbeigenschaften gekennzeichnet ist, wobei das Verfahren die folgenden Schritte umfaßt:

   Empfangen der ersten und zweiten Vielzahl von Farbeigenschaften, die in entsprechenden ersten und zweiten Formaten ausgedrückt werden: und
   Erzeugen einer dritten Vielzahl von Farbeigenschaften aus diesen, die in einem dritten Format ausgedrückt werden. wobei der Schritt des Erzeugens die folgenden Schritte umfaßt:
   Umwandlung des Formats der ersten Vielzahl von Farbeigenschaften, die in dem ersten Format ausgedrückt werden, in das dritte Format, wozu eine Auflösungsumwandlung durchgeführt wird:
   Umwandlung des Formats der ersten Vielzahl von Farbeigenschaften, um eine erste und zweite Vielzahl in Formaten zu erzeugen, die eine identische Auflösung haben;
   Zusammenmischen der ersten und zweiten Vielzahl von Farbeigenschaften bei identischer Auflösung, um so eine vierte Vielzahl von Farbeigenschaften zu schaffen;
   Umwandlung der Formate der vierten Vielzahl von Farbeigenschaften in das dritte Format unter Einbeziehung von wenigstens einer Auflösungsumwandlung; und
   Zusammenmischen der ersten und vierten Vielzahl von Farbeigenschaften im dritten Format, um dadurch die dritte Vielzahl von Farbeigenschaften in dem dritten Format zu schaffen.

7. Verfahren nach Anspruch 6, das die Umwandlung der zweiten Vielzahl von Farbeigenschaften aus einem vierten Format in das zweite Format umfaßt.

8. Verfahren nach Anspruch 6, das den Schritt des Empfangens der dritten Vielzahl von Farbeigenschaften und des Erzeugens einer fünften Vielzahl von Farbeigenschaften, die in dem dritten Format ausgedrückt wird, aus dieser umfaßt.

9. Verfahren nach Anspruch 6, bei dem das Zusammenmischen auf der Grundlage von Steuerinformationen bestimmt ist, die in einem der genannten ersten und zweiten Formate enthalten sind.

**10.** Verfahren nach Anspruch 6, bei dem die dritte Vielzahl von Farbeigenschaften auch einen Hinweis einschließt, der von einer Farb-Bearbeitungseinheit gelesen werden kann, und den Schritt der Ausführung einer festgelegten Farbtransformation unter Nutzung der Farb-Bearbeitungseinheit (12) in Übereinstimmung mit diesem Hinweis umfaßt.

**11.** Vorrichtung zur Bearbeitung eines Bildes, das durch eine erste und zweite Vielzahl von Farbeigenschaften gekennzeichnet ist, welche eine Format-Bearbeitungseinheit umfaßt, um die erste und zweite Vielzahl von Farbeigenschaften zu empfangen, die in entsprechenden ersten und zweiten Formaten ausgedrückt werden, und um aus diesen eine dritte Vielzahl von Farbeigenschaften zu erzeugen, die in einem dritten Format ausgedrückt werden, wobei die Format-Bearbeitungseinheit folgende Komponenten umfaßt:

Mittel (94, 96, 98) zur Umwandlung des Formats der ersten Vielzahl von Farbeigenschaften, die in dem ersten Format ausgedrückt werden, in das dritte Format, wozu eine erste Auflösungsumwandlung vorgenommen wird, um so eine vierte Vielzahl von Farbeigenschaften in dem dritten Format zu erhalten;
Mittel (94, 96, 98) zur Umwandlung des Formats der ersten Vielzahl von Farbeigenschaften, die in dem ersten Format ausgedrückt werden, in das dritte Format, wozu eine zweite Auflösungsumwandlung vorgenommen wird, um so eine fünfte Vielzahl von Farbeigenschaften in dem dritten Format zu erhalten;
Mittel (92) zur Umwandlung des Formats der zweiten Vielzahl von Farbeigenschaften, die in dem zweiten Format ausgedrückt werden, in das dritte Format, um so eine sechste Vielzahl von Farbeigenschaften in dem dritten Format zu erhalten;
Mittel (90, 420, 428) zur Auswahl einer der genannten vierten Vielzahl von Farbeigenschaften und der genannten fünften Vielzahl von Farbeigenschaften, um so eine siebente Vielzahl von Farbeigenschaften zu erhalten;
Mittel (422) zum Zusammenmischen der sechsten und siebenten Vielzahl von Farbeigenschaften im dritten Format, um so die dritte Vielzahl von Farbeigenschaften in dem dritten Format zu erhalten.

**12.** Vorrichtung nach Anspruch 11. die eine Farb-Bearbeitungseinheit (28, 29) umfaßt, um die dritte Vielzahl von Farbeigenschaften zu empfangen und daraus eine achte Vielzahl von Farbeigenschaften, die in dem dritten Format ausgedrückt werden, zu erzeugen.

**13.** Vorrichtung nach Anspruch 11, bei der das Zusammenmischen auf der Grundlage von Steuerinformationen bestimmt ist, die in einem der genannten ersten und zweiten Formate enthalten sind.

**14.** Vorrichtung nach Anspruch 12, die eine Farb-Bearbeitungseinheit (12) umfaßt, die dahingehend wirksam ist, daß sie eine festgelegte Farbtransformation in Übereinstimmung mit einem Hinweis ausführt, der in der dritten Vielzahl von Farbeigenschaften enthalten ist und von der Farb-Bearbeitungseinheit gelesen werden kann.

**15.** Verfahren zur Bearbeitung eines Bildes, das durch eine erste und zweite Vielzahl von Farbeigenschaften gekennzeichnet ist, wobei das Verfahren folgende Schritte umfaßt:

Empfangen der ersten und zweiten Vielzahl von Farbeigenschaften, die in wenigstens ersten und zweiten entsprechenden Formaten ausgedrückt werden; und
Erzeugen einer dritten Vielzahl von Farbeigenschaften aus diesen, die in einem dritten Format ausgedrückt werden, wobei der Schritt des Erzeugens die folgenden Schritte umfaßt:
Umwandlung des Formats der ersten Vielzahl von Farbeigenschaften, die in dem ersten Format ausgedrückt werden, in das dritte Format, wozu eine erste Auflösungsumwandlung durchgeführt wird, um so eine vierte Vielzahl von Farbeigenschaften in dem dritten Format zu erhalten;
Umwandlung des Formats der ersten Vielzahl von Farbeigenschaften, die in dem ersten Format ausgedrückt werden, in das dritte Format, wozu eine zweite Auflösungsumwandlung durchgeführt wird, um so eine fünfte Vielzahl von Farbeigenschaften in dem dritten Format zu erhalten:
Umwandlung des Formats der zweiten Vielzahl von Farbeigenschaften, die in dem zweiten Format ausgedrückt werden. in das dritte Format, um so eine sechste Vielzahl von Farbeigenschaften in dem dritten Format zu erhalten;
Auswahl einer der genannten vierten Vielzahl von Farbeigenschaften und der genannten fünften Vielzahl von Farbeigenschaften, um so eine siebente Vielzahl von Farbeigenschaften zu erhalten; und
Zusammenmischen der sechsten und siebenten Vielzahl von Farbeigenschaften im dritten Format, um dadurch die dritte Vielzahl von Farbeigenschaften in dem dritten Format zu erhalten.

**16.** Verfahren nach Anspruch 15, das den Schritt des Empfangens der dritten Vielzahl von Farbeigenschaften und des Erzeugens einer achten Vielzahl von Farbeigenschaften, die in dem dritten Format ausgedrückt werden, aus diesen umfaßt.

**17.** Verfahren nach Anspruch 15, bei dem das Zusammenmischen auf der Grundlage von Steuerinformationen bestimmt ist, die in einem der genannten ersten und zweiten Formate enthalten sind.

**18.** Verfahren nach Anspruch 16, bei dem die dritte Vielzahl von Farbeigenschaften auch einen Hinweis einschließt. der von einer Farb-Bearbeitungseinheit gelesen werden kann, und den Schritt der Ausführung einer festgelegten Farbtransformation unter Nutzung der Farb-Bearbeitungseinheit (12) in Übereinstimmung mit diesem Hinweis umfaßt.

## Revendications

**1.** Appareil pour le traitement d'une image, caractérisé par des première et deuxième pluralités de caractéristiques de couleur comprenant une unité de traitement du format (14), pour recevoir lesdites première et deuxième pluralités de caractéristiques de couleur exprimées dans des premier et deuxième formats correspondants et pour produire ainsi une troisième pluralité de caractéristiques de couleur exprimées dans un troisième format, ladite unité de traitement du format comprenant:

un moyen (38) pour convertir le format de ladite première pluralité de caractéristiques de couleur exprimées dans ledit premier format dans ledit troisième format par exécution d'une conversion de la résolution;
un moyen (32) pour convertir le format de ladite première pluralité de caractéristiques de couleur, pour produire des première et deuxième pluralités de formats ayant une résolution identique;
un moyen (36) pour fusionner lesdites première et deuxième pluralités de caractéristiques de couleur ayant ladite résolution identique pour produire ainsi une quatrième pluralité de caractéristiques de couleur;
un moyen (74) pour convertir les formats de ladite quatrième pluralité de caractéristiques de couleur dans ledit troisième format; et
un moyen (42) pour fusionner lesdites troisième et quatrième pluralités de caractéristiques de couleur dans ledit troisième format, pour fournir ainsi ladite troisième pluralité de caractéristiques de couleur dans ledit troisième format.

**2.** Appareil selon la revendication 1, comprenant un moyen (112) pour convertir ladite deuxième pluralité de caractéristiques de couleur d'un quatrième format dans ledit deuxième format.

**3.** Appareil selon la revendication 1, comprenant une unité de traitement de couleur (28, 29) pour recevoir ladite troisième pluralité de caractéristiques de couleur et produire ainsi une cinquième pluralité de caractéristiques de couleur.

**4.** Appareil selon la revendication 1, dans lequel ladite fusion est déterminée sur la base d'une information de commande englobée dans l'un desdits premier et deuxième formats.

**5.** Appareil selon la revendication 1, comprenant une unité de traitement de couleur (12) servant à exécuter une transformation de couleur prédéterminée en fonction d'une indication englobée dans ladite troisième pluralité de caractéristiques de couleur et pouvant être lue par ladite unité de traitement de couleur.

**6.** Procédé de traitement d'une image, caractérisé par des première et deuxième pluralités de caractéristiques de couleur, le procédé comprenant les étapes ci-dessous:

réception desdites première et deuxième pluralités de caractéristiques de couleur exprimées dans des premier et deuxième formats correspondants; et
production à partir de celles-ci d'une troisième pluralité de caractéristiques de couleur, exprimées dans un troisième format, ladite étape de production comprenant les étapes ci-dessous:
conversion du format de ladite première pluralité de caractéristiques de couleur exprimées dans ledit premier format dans ledit troisième format par exécution d'une conversion de la résolution;
conversion du format de ladite première pluralité de caractéristiques de couleur pour produire des première et deuxième pluralités de formats ayant une résolution identique;

fusion desdites première et deuxième pluralités de caractéristiques de couleur ayant une résolution identique, pour produire ainsi une quatrième pluralité de caractéristiques de couleur;

conversion des formats de ladite quatrième pluralité de caractéristiques de couleur dans ledit troisième format englobant au moins une conversion de la résolution; et

fusion desdites première et quatrième pluralités de caractéristiques de couleur dans ledit troisième format, pour fournir ainsi ladite troisième pluralité de caractéristiques de couleur dans ledit troisième format.

7. Procédé selon la revendication 6, comprenant la conversion de ladite deuxième pluralité de caractéristiques de couleur d'un quatrième format dans ledit deuxième format.

8. Procédé selon la revendication 6, comprenant la réception de ladite troisième pluralité de caractéristiques de couleur et la production à partir de celles-ci d'une cinquième pluralité de caractéristiques de couleur exprimées dans ledit troisième format.

9. Procédé selon la revendication 6, dans lequel ladite fusion est déterminée sur la base d'une information de commande englobée dans l'un desdits premier et deuxième formats.

10. Procédé selon la revendication 6, dans lequel ladite troisième pluralité de caractéristiques de couleur englobe également une indication pouvant être lue par une unité de traitement de couleur et comprenant l'étape d'exécution d'une transformation de couleur prédéterminée par l'intermédiaire de ladite unité de traitement de couleur (12) en fonction de ladite indication.

11. Appareil pour le traitement d'une image, caractérisé par des première et deuxième pluralités de caractéristiques de couleur, comprenant une unité de traitement du format pour recevoir lesdites première et deuxième pluralités de caractéristiques de couleur, exprimées dans des premier et deuxième formats correspondants et pour produire ainsi une troisième pluralité de caractéristiques de couleur, exprimées dans un troisième format, ladite unité de traitement du format comprenant:

un moyen (94, 96, 98) pour convertir le format de ladite première pluralité de caractéristiques de couleur exprimées dans ledit premier format dans ledit troisième format par l'intermédiaire d'une première conversion de la résolution, pour obtenir ainsi une quatrième pluralité de caractéristiques de couleur dans ledit troisième format;

un moyen (94, 96, 98) pour convertir le format de ladite première pluralité de caractéristiques de couleur exprimées dans ledit premier format dans ledit troisième format par exécution d'une deuxième conversion de la résolution, pour obtenir ainsi une cinquième pluralité de caractéristiques de couleur dans ledit troisième format;

un moyen (92) pour convertir le format de ladite deuxième pluralité de caractéristiques de couleur exprimées dans ledit deuxième format dans ledit troisième format, pour obtenir ainsi une sixième pluralité de caractéristiques de couleur dans ledit troisième format;

un moyen (90, 420, 428) pour sélectionner l'une de ladite quatrième pluralité de caractéristiques de couleur et de ladite cinquième pluralité de caractéristiques de couleur, pour obtenir ainsi une septième pluralité de caractéristiques de couleur;

un moyen (422) pour fusionner lesdites sixième et septième pluralités de caractéristiques de couleur dans ledit troisième format, pour produire ainsi ladite troisième pluralité de caractéristiques de couleur dans ledit troisième format.

12. Appareil selon la revendication 11, comprenant une unité de traitement de couleur (28, 29) pour recevoir ladite troisième pluralité de caractéristiques de couleur et produire ainsi une huitième pluralité de caractéristiques de couleur exprimées dans ledit troisième format.

13. Appareil selon la revendication 11, dans lequel ladite fusion est déterminée sur la base d'une information de commande englobée dans l'un desdits premier et deuxième formats.

14. Appareil selon la revendication 12, comprenant une unité de traitement de couleur (12) servant à exécuter une transformation de couleur prédéterminée en fonction d'une indication englobée dans ladite troisième pluralité de caractéristiques de couleur et pouvant être lue par ladite unité de traitement de couleur.

15. Procédé de traitement d'une image, caractérisé par des première et deuxième pluralités de caractéristiques de couleur, le procédé comprenant les étapes ci-dessous:

réception desdites première et deuxième pluralités de caractéristiques de couleur exprimées dans au moins des premier et deuxième formats correspondants; et

production à partir de celles-ci d'une troisième pluralité de caractéristiques de couleur exprimées dans un troisième format, ladite étape de production comprenant les étapes ci-dessous:

conversion du format de ladite première pluralité de caractéristiques de couleur exprimées dans ledit premier format dans ledit troisième format par exécution d'une première conversion de la résolution, pour obtenir ainsi une quatrième pluralité de caractéristiques de couleur dans ledit troisième format;

conversion du format de ladite première pluralité de caractéristiques de couleur exprimées dans ledit premier format dans ledit troisième format par exécution d'une deuxième conversion de la résolution, pour obtenir ainsi une cinquième pluralité de caractéristiques de couleur dans ledit troisième format;

conversion du format de ladite deuxième pluralité de caractéristiques de couleur exprimées dans ledit deuxième format dans ledit troisième format, pour obtenir ainsi une sixième pluralité de caractéristiques de couleur dans ledit troisième format;

sélection de l'une de ladite quatrième pluralité de caractéristiques de couleur et de ladite cinquième pluralité de caractéristiques de couleur pour obtenir ainsi une septième pluralité de caractéristiques de couleur; et

fusion desdites sixième et septième pluralités de caractéristiques de couleur dans ledit troisième format, pour produire ainsi ladite troisième pluralité de caractéristiques de couleur dans ledit troisième format.

16. Procédé selon la revendication 15, comprenant la réception de ladite troisième pluralité de caractéristiques de couleur, pour produire ainsi une huitième pluralité de caractéristiques de couleur exprimées dans ledit troisième format.

17. Procédé selon la revendication 15, dans lequel ladite fusion est déterminée sur la base d'une information de commande englobée dans l'un desdits premier et deuxième formats.

18. Procédé selon la revendication 16, dans lequel ladite troisième pluralité de caractéristiques de couleur englobe également une indication pouvant être lue par une unité de traitement de couleur et comprenant l'étape d'exécution d'une transformation de couleur prédéterminée par l'intermédiaire de ladite unité de traitement de couleur (12) en fonction de ladite indication.

FIG. 1

EP 0 449 407 B1

INPUT BUS

OUTPUT BUS

**20**

CONTROLLER

CONTROL INITIALIZATION, TO ALL BLOCKS

**22**

LW, BIT MAP
INPUT BUFFER

**24**

CT
INPUT BUFFER

**26**

COLOR
# 1

SPATIAL

**28**

COLOR
# 2

**30**

OUTPUT
BUFFER

**29**

**31**

SCSI
CONTROLLER

SCITEX'S BUS

FIG. 2

EP 0 449 407 B1

FIG. 3

EP 0 449 407 B1

FIG. 4

FIG. 5

FIG. 6

EP 0 449 407 B1

FIG. 7

EP 0 449 407 B1

FIG. 8

FIG. 9

FIG. 10

FIG. 11

FIG. 12

FIG. 13

| PIPELINE SEGMENTS | | 1 | 2 | 3 | 4 | 5 | 6 | 7 | 8 | 9 | 10 | 11 | 12 | 13 | 14 | 15 | 16 | 16 | 16 |
|---|---|---|---|---|---|---|---|---|---|---|---|---|---|---|---|---|---|---|---|
| | LX | 1 | 2 | 3 | 4 | 5 | 6 | 7 | 8 | 9 | 10 | 11 | 12 | 13 | 14 | 15 | 16 | 16 | 16 |
| | X | 2.5 | 1.5 | 0.5 | 3.0 | 2.0 | 1.0 | 0 | 2.5 | 1.5 | 0.5 | 3.0 | 2.0 | 1.0 | 0 | 2.5 | 1.5 | 0 | 2.5 |
| MULTIPLIERS 218 | | 1 | 2 | 3 | 4 | 5 | 6 | 7 | 8 | 9 | 10 | 11 | 12 | 13 | 14 | 15 | 16 | 16 | $R_5$ |
| SEGMENT 1 | | | 1 | 2 | 3 | 4 | 5 | 6 | 7 | 8 | 9 | 10 | 11 | 12 | 13 | 14 | 15 | 16 | 16 |
| SEGMENT 2 | | | | 1 | 2 | $R_0$ | 4 | 5 | 6 | 7 | 8 | $R_2$ | $R_2$ | 9 | 10 | 11 | 12 | 14 | 15 |
| SEGMENT 3 | | | | | 1 | 2 | 3 | $R_0$ | 5 | 6 | 7 | 8 | $R_2$ | 9 | 10 | 11 | $R_3$ | $R_4$ | 14 |
| CELL 5 | | 1 | | 1 | 2 | 3 | 4 | 5 | 6 | 7 | 8 | 9 | 10 | 11 | 12 | 13 | 13 | 13 | 13 |
| CELL 4 | | | | 1 | 1 | 2 | 3 | 4 | 5 | 6 | 7 | 8 | 9 | 10 | 11 | 12 | 12 | 12 | 12 |
| CELL 3 | | | | 1 | 1 | 1 | 2 | 3 | 4 | 5 | 6 | 7 | 8 | 9 | 10 | 11 | 11 | 11 | 11 |
| CELL 2 | | | | | 1 | 1 | 1 | 1 | 2 | 3 | 4 | 5 | 6 | 7 | 8 | 9 | 10 | 10 | 10 |
| CELL 1 | | | | | 1 | 1 | 1 | 1 | 1 | 1 | 2 | 3 | 4 | 5 | 6 | 7 | 8 | 9 | 9 |

TREE ADDER 220 → { SEGMENT 1, SEGMENT 2, SEGMENT 3 }

SHIFT REGISTER 190 → { CELL 5, CELL 4, CELL 3, CELL 2, CELL 1 }

FIRST CONVOLUTION RESULT ↑ (clock cycle 11)

SECOND CONVOLUTION RESULT ↑ (clock cycle 14)

CLOCK CYCLES: 1  2  3  4  5  6  7  8  9  10  11  12  13  14  15  16  17  18  19  20  21  22

FIG. 14

EP 0 449 407 B1

| FROM 194 FROM 190 | FROM 194 FROM 190 | FROM 194 FROM 190 | FROM 194 FROM 190 | FROM 194 FROM 190 |
|---|---|---|---|---|

**238** **238** **238** **238** **238**

FROM 195

| MUX. 1 | MUX. 2 | MUX. 3 | MUX. 4 | MUX. 5 |
|---|---|---|---|---|

TO 218    TO 218    TO 218    TO 218    TO 218

**202**

FIG. 15

FIG. 16

LATCH 246 ENABLE

SELECT

CLEAR

CLOCK

FROM 195

242

13 x 5-BIT SHIFT REGISTER

CELL 1 | CELL 2 | CELL 3 | CELL 4 | CELL 5

13 | 13 | 13 | 13 | 13

SERIAL IN

13

248

MUX

13

246

LATCH

13 FROM 204

LATCH 244 ENABLE

OUTPUT ENABLE

3 STATE LATCH

244

OUT 1 | OUT 2 | OUT 3 | OUT 4 | OUT 5

TO 202

240

FIG. 17

EP 0 449 407 B1

FIG. 18

VRAM ROWS
AT BUFFER 86

REARRANGEMENTS OF ROWS
BY MUX 194

NON-EDGE    FIRST    SECOND    LAST-1    LAST

FIG. 19

FROM 86 (OUTPUT 1) 8
FROM 86 (OUTPUT 2) 8
FROM 86 (OUTPUT 3) 8
FROM 86 (OUTPUT 4) 8
FROM 86 (OUTPUT 5) 8

194

5:1 8 BIT MUX — 8 — 280 — TO 202 (MUX 1)
5:1 8 BIT MUX — 8 — 280 — TO 202 (MUX 2)
5:1 8 BIT MUX — 8 — 280 — TO 202 (MUX 3)
5:1 8 BIT MUX — 8 — 280 — TO 202 (MUX 4)
5:1 8 BIT MUX — 8 — 280 — TO 202 (MUX 5)

3
3
3
3
3

SELECT 1
SELECT 2
SELECT 3
SELECT 4
SELECT 5

282

CYCLIC DECODER

FIRST ROW
SECOND ROW
LAST-1 ROW
LAST ROW
ROW ORDER
3

FROM 195

FIG. 20

77

FROM 86

CONVOLUTION
UNIT 1

**300**

**204**

SELECTOR

**190**
SHIFT
REGISTER

**302**

CONVOLUTION
UNIT 2

TO 90

FIG. 21

FIG. 22

EP 0 449 407 B1

FIG. 23

EP 0 449 407 B1

FIG. 24

EP 0 449 407 B1

FIG. 25

START

LOAD
s,x,y,
LAST LX, LAST Y

Y = 0

LX = 0
X = 0

LX =
LAST LX

YES

NO

Y =
LAST Y

NO

Y=Y+y

YES

END
OF
CONVOLUTION

BRING DATA

COLUMN
CONVOLUTIONS

LX = LX+1

X ≥ 1

NO

X=X+x

ROW
CONVOLUTIONS

YES

X=X-1

FIG. 26

FIG. 27

START

LOAD
s,x,y,
LAST LX, LAST LY
LAST Z

Z = 0

Y = 0
LY = 0

LX = 0
X = 0

LX =
LAST
LX

YES

NO

LY =
LAST LY

NO → Y=Y+y
LY=LY+1

YES

Z =
LAST Z

NO → Z=Z+z

YES

END
OF
CONVOLUTION

BRING DATA
FOR Z*-2, Z*-1,
Z*,Z*+1, Z*+2

COLUMN
CONVOLUTIONS

LX = LX+1

X ≥ 1

NO → ROW
CONVOLUTIONS → 3RD AXIS
CONVOLUTION → X=X+x

YES

X=X-1

FIG. 28

FIG. 29

440 — ID LUT (C or R, from 22)
ID LUT (M G, from 22)
ID LUT (Y B, from 22)
ID LUT (K, from 22)

442 — 4 X 4 MATRIX

444 — LIMITER / LIMITER / LIMITER / LIMITER

446 — INVERTER / INVERTER / INVERTER / INVERTER

448 — X BLACK / X BLACK / X BLACK

450 — ID LUT / ID LUT / ID LUT / ID LUT

452 — 4D LUT

454 — LIMITER / LIMITER / LIMITER / LIMITER

456 — ID LUT → TO 14 / ID LUT → TO 14 / ID LUT → TO 14 / ID LUT → TO 14

FIG. 30

FIG. 31

FIG. 32

FIG. 33

FIG. 34

462

BY - PASS FIFO

DECISION BIT

SHIFT
OUT

SELECT

FROM 22

COLOR
PROCESSOR

TO 14

464

460

FIG. 35

12

TO 14

546

544

446 INVERTER

528 MULTIPLIER ACCUMULATOR

550

522 DATA OUT SWITCH

552

526 MATRIX COEFFICIENT GENERATOR

524 4D LUT COEFFICIENT GENERATOR

506 ADDRESS ALU

TO ALL BLOCKS

440

BY-PASS FIFO

502 DATA SWITCH

ADDRESS SWITCH

504

CONTROL SEQUENCER

ID-LUT

DATA IN SWITCH

462

CONTROL

DECODER

500 MEMORY

DATA

ADDRESS

532

CMYK

520

540

542

CT

LW

FIG. 36

EP 0 449 407 B1

LUT SELECT

FROM 532  3D / 4D

MAX MODE

**600**

**504**

LOGIC

TO MEMORY 500

MULTIPLEXER

FROM 506

**602**

FIG. 37

506

620

SEQUENCER

FROM 521

ALU
16 BIT

622

544

TO 504

FIG. 38

EP 0 449 407 B1

FROM 550

SEQUENCER **630**

ALU **632**

TO 506

TO 528

**524**

FIG. 39

FIG. 40

EP 0 449 407 B1

CT ———→

LW ———→

| INPUT | → | SPATIAL | → | COLOR | → | OUTPUT | →

**1010**　　　　　**1012**　　　　　**1014**　　　　　**1016**

FIG. 41

FIG. 42 / 1

FIG. 42 / 2

FIG. 43

FIG. 44

FIG. 45

EP 0 449 407 B1

FIG. 46

EP 0 449 407 B1

104

........... LW
– – – – – CT
––––––– OUTPUT

FIG. 47

FIG. 48

EP 0 449 407 B1

FIG. 49

........... LW

– – – – CT

———— OUTPUT

FIG. 50

FIG. 51

LW ...........
CT — — — —
OUTPUT ————

LW ............
CT - - - - -
OUTPUT ————

FIG. 52

FIG. 53

FIG. 54

FIG. 55

START

LOAD
s,x,y,
LAST X, LAST Y

X = 0

Y = 0

YES ← Y =
LAST Y → NO

NO ← X =
LAST X → X=X+x

YES

END
OF
CONVOLUTION

BRING DATA
FOR (X-x)* +3 TO X*+2 ⟋ 1322

COLUMN
CONVOLUTIONS ⟋ 1324

(X-x)*=
X* ⟋ 1320

NO

YES

ROW
CONVOLUTIONS → Y=Y+y

FIG. 56

114

FIG. 57

EP 0 449 407 B1

FIG. 58

FIG. 59

FIG. 60